# EUROPEAN PATENT SPECIFICATION

(11) **EP 4 172 910 B1**
(45) Date of publication and mention of the grant of the patent: **14.10.2026**
(21) Application number: 21831848.3
(22) Date of filing: 18.06.2021
(51) Int. Cl.: G06Q 30/02, G06F 11/00, G06F 11/34, G06F 11/36, G06Q 10/06, G06Q 30/00, G06Q 10/0639, G06Q 10/109, G06Q 30/0201, H04L 12/18, H04L 65/1069, H04L 65/401, G06F 11/3668, H04L 65/1083

(54) **SYSTEMS AND METHODS FOR MODERATED USER EXPERIENCE TESTING**
SYSTEME UND VERFAHREN FÜR MODERIERTE BENUTZERERFAHRUNGSTESTS
SYSTÈMES ET PROCÉDÉS DE TEST D'EXPÉRIENCE D'UTILISATEUR MODÉRÉ

(30) Priority: 30.06.2020 US 202063046567 P; 04.06.2021 US 202117339893
(43) Date of publication of application: 03.05.2023
(73) Proprietor: Userzoom Technologies, Inc., San Francisco, CA 94114 (US)
(72) Inventor: MESTRES, Xavier, 08021 Barcelona (ES); KIJOWSKI, Michal, 08021 Barcelona (ES); KUPS, Szymon, 08021 Barcelona (ES); SOBIEPANEK, Maciej, 08021 Barcelona (ES); LOPEZ, Juan Rafael, 08021 Barcelona (ES); GALUSZKA, Bartosz, 08021 Barcelona (ES); IBANEZ, Jordi, 08021 Barcelona (ES); DEL CASTILLO, Francesc, 08021 Barcelona (ES); RECOLONS, Albert, 08021 Barcelona (ES)
(74) Representative: Haseltine Lake Kempner LLP
(86) International application number: PCT/US2021/038120
(87) International publication number: WO 2022/005779

(56) References cited:
- WO-A1-03/041033
- US-A1- 2011 279 634
- US-A1- 2012 131 476
- US-A1- 2013 132 824
- US-A1- 2014 317 302
- US-A1- 2016 217 481
- US-A1- 2018 077 092
- US-A1- 2019 123 989
- MORAN KATE, KARA PERNICE: "Remote Moderated Usability Tests: How to Do Them", NN/G NIELSEN NORMAN GROUP, 26 April 2020 (2020-04-26), XP055897315, Retrieved from the Internet <URL:https://www.nngroup.com/articles/moderated-remote-usability-test/>

## Description

### BACKGROUND

The present invention relates to systems and methods for the generation of studies that allow for insight generation for the improved user experience of a website. Generally, this type of testing is referred to as "User Experience" or merely "UX" testing. The Internet provides new opportunities for business entities to reach customers via web sites that promote and describe their products or services. Often, the appeal of a web site and its ease of use may affect a potential buyer's decision to purchase the product/service.

Especially as user experiences continue to improve and competition online becomes increasingly aggressive, the ease of use by a particular retailer's website may have a material impact upon sales performance. Unlike a physical shopping experience, there are minimal hurdles to a user going to a competitor for a similar service or good. Thus, in addition to traditional motivators (e.g., competitive pricing, return policies, brand reputation, etc.) the ease of a website to navigate is of paramount importance to a successful online presence.

As such, assessing the appeal, user friendliness, and effectiveness of a web site is of substantial value to marketing managers, web site designers and user experience specialists; however, this information is typically difficult to obtain. Focus groups and/or individual interviews are sometimes used to achieve this goal but the process is long, expensive and not reliable, in part, due to the size and demographics of the focus group that may not be representative of the target customer base.

In more recent years advances have been made in the automation and implementation of mass online surveys for collecting user feedback information. Typically these systems include survey questions, or potentially a task on a website followed by feedback requests. While such systems are useful in collecting some information regarding user experiences, the studies often suffer from biases in responses, and limited types of feedback collected.

It is therefore apparent that an urgent need exists for the ability to leverage the best parts of focus group and/or one-on-one interview testing, with online testing in the form of a moderated user experience testing. Such systems and methods allow for improvements in website design, digital products, marketing and brand management.

US 2012/131476 A1 discloses a system for performing remote usability testing of a website including a module for generating particular tasks, a module for moderating a session with a number of participants, and a module for receiving usability data.

US 2011/279634 A1 discloses systems and methods to support the operation of a Virtual Media Room or Virtual Meeting Room (VMR), wherein each VMR can accept from a plurality of participants at different geographic locations a variety of video conferencing feeds from video conference endpoints that can be either proprietary or standards-based and enable a multi-party video conferencing session among the plurality of participants.

Moran Kate, Kara Pernice: "Remote Moderated Usability Tests: How to Do Them", NN/g Nielsen Norman Group, 26 April 2020 discloses a method of performing remote moderated usability testing.

### SUMMARY

To achieve the foregoing and in accordance with the present invention, systems and methods for generating, administering and analyzing a moderated user experience study are provided. This enables the efficient generation of insights regarding the user experience, with the ability to interject as needed, so that the experience can be changed to improve the customer or user experience.

According to a first aspect, there is provided a computer-implemented method for a moderated user experience study according to claim 1.

According to a second aspect, there is provided a computer program product according to claim 9.

Further examples according to embodiments are provided in the accompanying claims.

In an example, at least one participant is identified, scheduled and their system is checked for suitability. The participant is placed in a waiting room and asked to enter the session. After an initial conversation, the participant is asked to present their screen. A video thumbnail is displayed over the shared screen. The participant is presented with a unique link and added into the study session to complete a task. The task may include any of a navigation activity, a questionnaire, a click test, and a card sorting activity. A set of note takers and/or observers are present in the study, but their presence is not known to the participant. The only interaction the participant has is between the study prompts and questions, and with one or more moderators. The study moderator(s). observer(s) and note taker(s) are all able to communicate with one another over a private channel.

The participants are initially identified by presenting a larger group of possible participants with a listing of available studies. Individuals who express interest in the study are screened for initial qualification. If qualified, they may be presented with an invitation by the study author, and then subjected to additional screening before being allowed to schedule the session. Scheduling includes setting a maximum number of sessions in a day, setting an interval length for the sessions, setting a minimum booking notice, settings to add buffer of time between sessions, capabilities to cancel and reschedule sessions from both sides and presenting a listing of available times to the participant that matches the maximum number of sessions, interval length for the sessions, and minimum booking notice, which has not already been booked by another participant.

In order to most effectively manage video bandwidth, the thumbnail video is embedded into the shared screen image to generate a single aggregate data stream. This aggregate data stream is then shared with the moderator(s), observer(s) and note taker(s). Further, the system testing includes testing a microphone, a speaker, a camera and network quality. System eligibility is determined by a functioning microphone, functioning speaker, functioning video camera, a network connection bit stream over a set threshold, and a packet loss under a second threshold, connection to the servers running the usability test, device, operating system and browser compatibility.

Note that the various features of the present invention described above may be practiced alone or in combination. These and other features of the present invention will be described in more detail below in the detailed description of the invention and in conjunction with the following figures.

### BRIEF DESCRIPTION OF THE DRAWINGS

In order that the present invention may be more clearly ascertained, some embodiments will now be described, by way of example, with reference to the accompanying drawings, in which:
Figure 1A is an example logical diagram of a system for user experience studies, in accordance with some embodiment;
Figure IB is a second example logical diagram of a system for user experience studies, in accordance with some embodiment;
Figure IC is a third example logical diagram of a system for user experience studies, in accordance with some embodiment;
Figure 2 is an example logical diagram of the usability testing system, in accordance with some embodiment;
Figure 3A is a flow diagram illustrating an exemplary process of interfacing with potential candidates and pre-screening participants for the usability testing according to an embodiment of the present invention;
Figure 3B is a flow diagram of an exemplary process for collecting usability data of a target web site according to an embodiment of the present invention;
Figure 3C is a flow diagram of an exemplary process for card sorting studies according to an embodiment of the present invention;
Figure 4 is a simplified block diagram of a data processing unit configured to enable a participant to access a web site and track participant's interaction with the web site according to an embodiment of the present invention;
Figure 5 is an example logical diagram of a second substantiation of the usability testing system, in accordance with some embodiment;
Figure 6 is a logical diagram of the study generation module, in accordance with some embodiment;
Figure 7 is a logical diagram of the recruitment engine, in accordance with some embodiment;
Figure 8A is a logical diagram of the study administrator, in accordance with some embodiment;
Figure 8B is a logical diagram of the monitored study module, in accordance with some embodiment;
Figure 9 is a logical diagram of the research module, in accordance with some embodiment;
Figure 10 is a flow diagram for an example process of user experience testing, in accordance with some embodiment;
Figure 11 is a flow diagram for the example process of study generation, in accordance with some embodiment;
Figure 12 is a flow diagram for the example process of study administration, in accordance with some embodiment;
Figure 13 is a flow diagram for the example process of moderated session administration, in accordance with some embodiment;
Figure 14 is a flow diagram for the example process of engaging in the moderated session, in accordance with some embodiment;
Figure 15 is a flow diagram for the example process of communications within the moderated session, in accordance with some embodiment;
Figure 16 is a flow diagram for the example process of session review and analysis, in accordance with some embodiment;
Figures 17-30 are example illustrations of screenshots for the generation of anew moderated user experience study, in accordance with some embodiment;
Figures 31-41 are example illustrations of the moderated user experience study being administered, in accordance with some embodiment;
Figures 42A-H and 42J-N are example illustrations of system testing prior to the monitored study, in accordance with some embodiment;

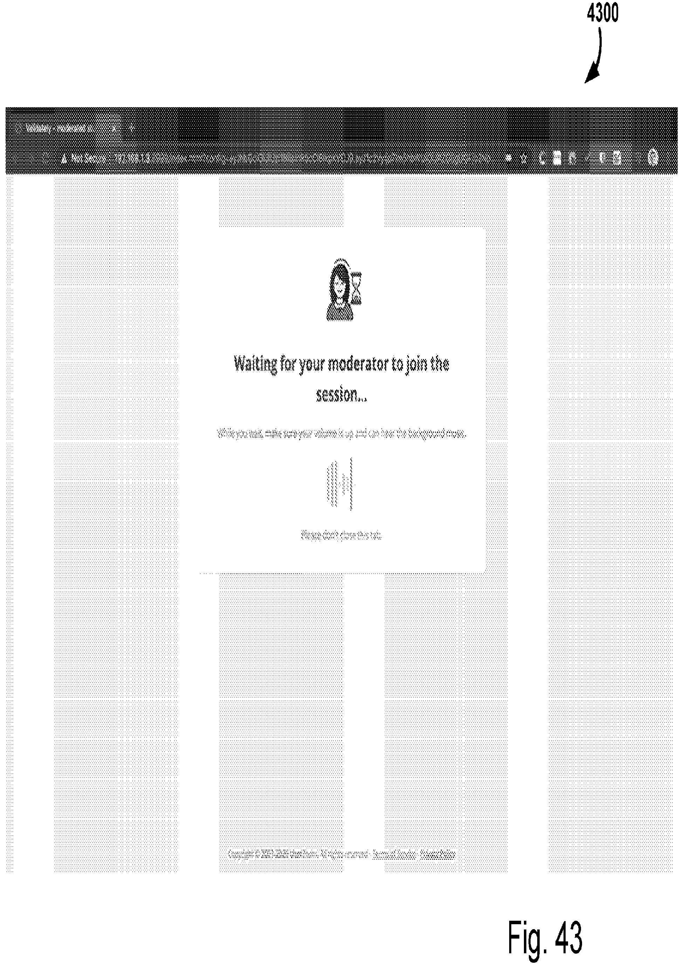

Figure 43 is an example illustration of the waiting room display for a moderated study, in accordance with some embodiment;
Figure 44 is an example illustration of the termination display for a moderated study, in accordance with some embodiment; and
Figures 45-48 are example illustrations of participant matching and onboarding to the monitored study, in accordance with some embodiment.

### DETAILED DESCRIPTION

The present invention will now be described in detail with reference to several embodiments thereof as illustrated in the accompanying drawings. In the following description, numerous specific details are set forth in order to provide a thorough understanding of embodiments of the present invention. It will be apparent, however, to one skilled in the art, that embodiments may be practiced without some or all of these specific details. In other instances, well known process steps and/or structures have not been described in detail in order to not unnecessarily obscure the present invention. The features and advantages of embodiments may be better understood with reference to the drawings and discussions that follow.

Aspects, features and advantages of exemplary embodiments of the present invention will become better understood with regard to the following description in connection with the accompanying drawing(s). It should be apparent to those skilled in the art that the described embodiments of the present invention provided herein are illustrative only and not limiting, having been presented by way of example only. All features disclosed in this description may be replaced by alternative features serving the same or similar purpose, unless expressly stated otherwise. Therefore, numerous other embodiments of the modifications thereof are contemplated as falling within the scope of the present invention as defined herein and equivalents thereto. Hence, use of absolute and/or sequential terms, such as, for example, "will," "will not," "shall," "shall not," "must," "must not," "first," "initially," "next," "subsequently," "before," "after," "lastly," and "finally," are not meant to limit the scope of the present invention as the embodiments disclosed herein are merely exemplary.

The present invention relates to enhancements to traditional user experience testing and subsequent insight generation. While such systems and methods may be utilized with any user experience environment, embodiments described in greater detail herein are directed to providing insights into user experiences in an online/webpage environment. Some descriptions of the present systems and methods will also focus nearly exclusively upon the user experience within a retailer's website. This is intentional in order to provide a clear use case and brevity to the disclosure, however it should be noted that the present systems and methods apply equally well to any situation where a user experience in an online platform is being studied. As such, the focus herein on a retail setting is in no way intended to artificially limit the scope of this disclosure.

The following description of some embodiments will be provided in relation to numerous subsections. The use of subsections, with headings, is intended to provide greater clarity and structure to the present invention. In no way are the subsections intended to limit or constrain the disclosure contained therein. Thus, disclosures in any one section are intended to apply to all other sections, as is applicable.

The following systems and methods are particularly for improvements in moderated user experience studies. These studies prompt a user to complete a task, and record the actions taken by the user to complete the task. A moderator can interact with the study participant to ask for reactions and/or provide additional task clarification. A set of observers and/or note takers may additionally observe the study progression without being visible to the participant. These studies provide information regarding the user's initial reaction to a webpage or similar computer interface, and the ease of navigating through the website being tested.

In the following it is understood that the term usability refers to a metric scoring value for judging the ease of use and the overall user experience of a target web site. A client refers to a sponsor who initiates and/or finances the usability study. The client may be, for example, a product manager who seeks to test the usability of a commercial web site for marketing (selling or advertising) certain products or services. Participants or users may be a selected group of people who participate in the usability study and may be screened based on a predetermined set of questions. Remote usability testing or remote usability study refers to testing or study in accordance with which participants (referred to use their computers, mobile devices, wearable devices, audio devices such as Amazon^{®} Alexa^{®}, smart televisions or other appliances, or otherwise) access a target web site in order to provide feedback about the web site's ease of use, connection speed, and the level of satisfaction the participant experiences in using the web site. Unmoderated usability testing refers to communication with test participants without a moderator, e.g., a software, hardware, or a combined software/hardware system can automatically gather the participants' feedback and records their responses. Conversely, moderated testing refers to communication with test participants with an actually human moderator, and usually includes additional observers that are not visible/known to the participant. The system can test a target web site by asking participants to view the web site, test application, or other staff moderated study, perform test tasks, and answer questions associated with the tasks (known as a click test study). It should be noted that throughout this disclosure, the testing of web page user experience is referenced. This is not intended to limit the scope of this user experience testing, as alternate web based and local applications, virtual or physical prototypes, or any situation where a staff moderated study with screen sharing is of benefit.

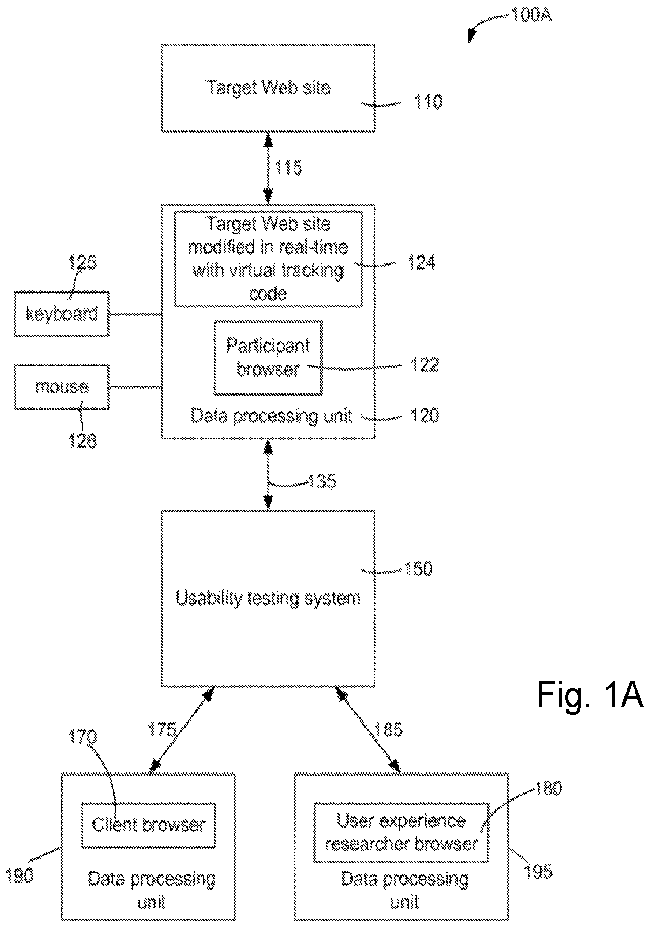

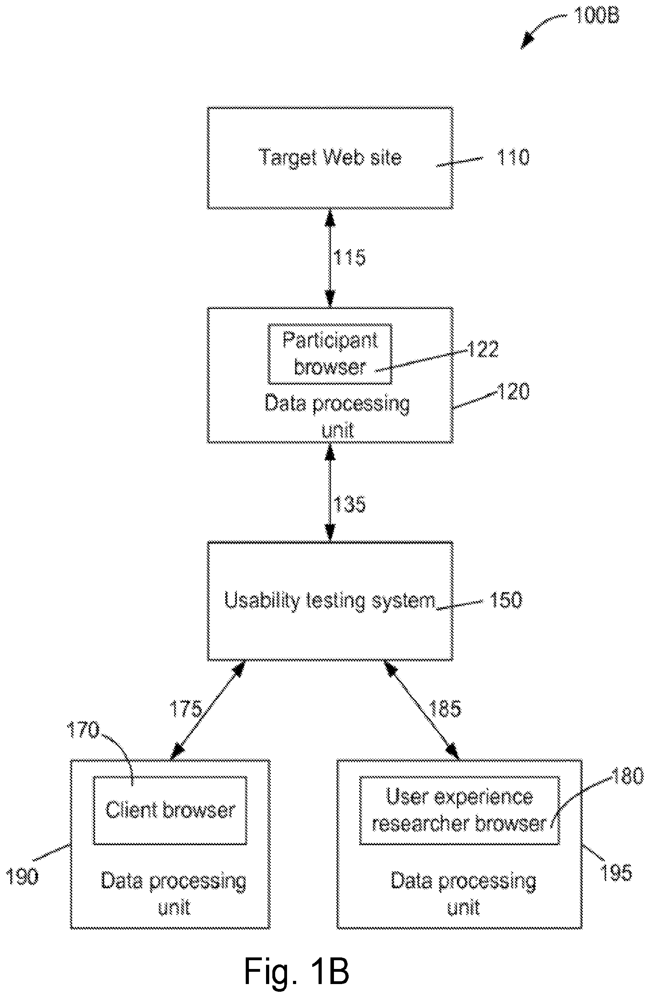

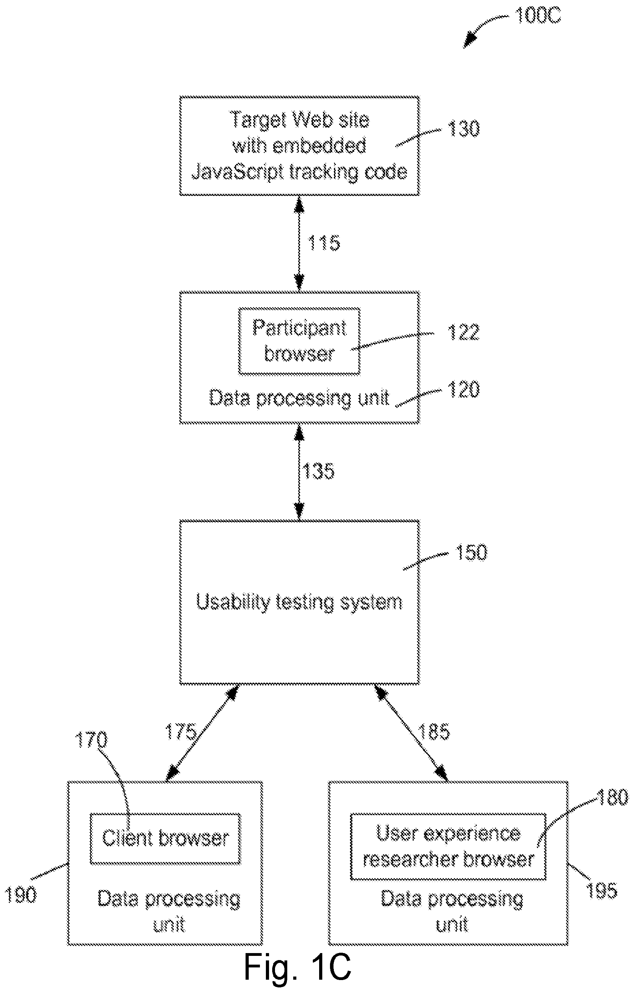

To facilitate the discussion, Figure 1 is a simplified block diagram of a user testing platform 100A according to an embodiment. Platform 100A is adapted to test a target web site 110. Platform 100A is shown as including a usability testing system 150 that is in communications with data processing units 120, 190 and 195. Data processing units 120, 190 and 195 may be a personal computer equipped with a monitor, a handheld device such as a tablet PC, an electronic notebook, a wearable device such as a cell phone, or a smart phone.

Data processing unit 120 includes a browser 122 that enables a user (e.g., usability test participant) using the data processing unit 120 to access target web site 110. Data processing unit 120 includes, in part, an input device such as a keyboard 125 or a mouse 126, and a participant browser 122. In one embodiment, data processing unit 120 may insert a virtual tracking code to target web site 110 in real-time while the target web site is being downloaded to the data processing unit 120. The virtual tracking code may be a proprietary JavaScript code, whereby the run-time data processing unit interprets the code for execution. The tracking code collects participants' activities on the downloaded web page such as the number of clicks, key strokes, keywords, scrolls, time on tasks, and the like over a period of time. Data processing unit 120 simulates the operations performed by the tracking code and is in communication with usability testing system 150 via a communication link 135. Communication link 135 may include a local area network, a metropolitan area network, and a wide area network. Such a communication link may be established through a physical wire or wirelessly. For example, the communication link may be established using an Internet protocol such as the TCP/IP protocol.

Activities of the participants associated with target web site 110 are collected and sent to usability testing system 150 via communication link 135. In one embodiment, data processing unit 120 may instruct a participant to perform predefined tasks on the downloaded web site during a usability test session, in which the participant evaluates the web site based on a series of usability tests. The virtual tracking code (e.g., a proprietary JavaScript) may record the participant's responses (such as the number and exact location of mouse clicks) and the time spent in performing the predefined tasks. The usability testing may also include gathering performance data of the target web site such as the ease of use, the connection speed, the satisfaction of the user experience. Because the web page is not modified on the original web site, but on the downloaded version in the participant data processing unit, the usability can be tested on any web sites including competitions' web sites.

Data collected by data processing unit 120 may be sent to the usability testing system 150 via communication link 135. In an embodiment, usability testing system 150 is further accessible by a client via a client browser 170 running on data processing unit 190. Usability testing system 150 is further accessible by user experience researcher browser 180 running on data processing unit 195. Client browser 170 is shown as being in communications with usability testing system 150 via communication link 175. User experience research browser 180 is shown as being in communications with usability testing system 150 via communications link 185. A client and/or user experience researcher may design one or more sets of questionnaires for screening participants and for testing the usability of a web site. Usability testing system 150 is described in detail below.

Figure IB is a simplified block diagram of a user testing platform 100B according to another embodiment of the present invention. Platform 100B is shown as including a target web site 110 being tested by one or more participants using a standard web browser 122 running on data processing unit 120 equipped with a display. Participants may communicate with a usability test system 150 via a communication link 135. Usability test system 150 may communicate with a client browser 170 running on a data processing unit 190. Likewise, usability test system 150 may communicate with user experience researcher browser running on data processing unit 195. Although a data processing unit is illustrated, one of skill in the art will appreciate that data processing unit 120 may include a configuration of multiple single-core or multi-core processors configured to process instructions, collect usability test data (e.g., number of clicks, mouse movements, time spent on each web page, connection speed, and the like), store and transmit the collected data to the usability testing system, and display graphical information to a participant via an input/output device (not shown).

Figure IC is a simplified block diagram of a user testing platform 100C according to yet another embodiment of the present invention. Platform 100C is shown as including a target web site 130 being tested by one or more participants using a standard web browser 122 running on data processing unit 120 having a display. The target web site 130 is shown as including a tracking program code configured to track actions and responses of participants and send the tracked actions/responses back to the participant's data processing unit 120 through a communication link 115. Communication link 115 may be computer network, a virtual private network, a local area network, a metropolitan area network, a wide area network, and the like. In one embodiment, the tracking program is a JavaScript configured to run tasks related to usability testing and sending the test/study results back to participant's data processing unit for display. Such embodiments advantageously enable clients using client browser 170 as well as user experience researchers using user experience research browser 180 to design mockups or prototypes for usability testing of variety of web site layouts. Data processing unit 120 may collect data associated with the usability of the target web site and send the collected data to the usability testing system 150 via a communication link 135.

In one exemplary embodiment, the testing of the target web site (page) may provide data such as ease of access through the Internet, its attractiveness, ease of navigation, the speed with which it enables a user to complete a transaction, and the like. In another exemplary embodiment, the testing of the target web site provides data such as duration of usage, the number of keystrokes, the user's profile, and the like. It is understood that testing of a web site in accordance with embodiments of the present invention can provide other data and usability metrics. Information collected by the participant's data processing unit is uploaded to usability testing system 150 via communication link 135 for storage and analysis.

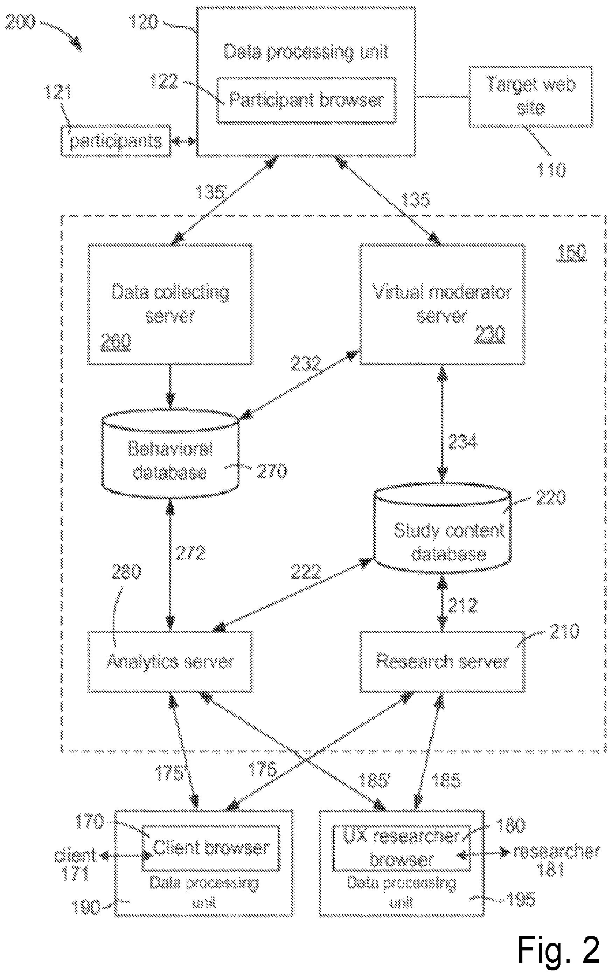

Figure 2 is a simplified block diagram of an exemplary embodiment platform 200 according to one embodiment of the present invention. Platform 200 is shown as including, in part, a usability testing system 150 being in communications with a data processing unit 125 via communications links 135 and 135'. Data processing unit 120 includes, in part, a participant browser 122 that enables a participant to access a target web site 110. Data processing unit 120 may be a personal computer, a handheld device, such as a cell phone, a smart phone or a tablet PC, or an electronic notebook. Data processing unit 120 may receive instructions and program codes from usability testing system 150 and display predefined tasks to participants 121. The instructions and program codes may include a web-based application that instructs participant browser 122 to access the target web site 110. In one embodiment, a tracking code is inserted to the target web site 110 that is being downloaded to data processing unit 120. The tracking code may be a JavaScript code that collects participants' activities on the downloaded target web site such as the number of clicks, key strokes, movements of the mouse, keywords, scrolls, time on tasks and the like performed over a period of time.

Data processing unit 120 may send the collected data to usability testing system 150 via communication link 135' which may be a local area network, a metropolitan area network, a wide area network, and the like and enable usability testing system 150 to establish communication with data processing unit 120 through a physical wire or wirelessly using a packet data protocol such as the TCP/IP protocol or a proprietary communication protocol.

Usability testing system 150 includes a virtual moderator software module running on a virtual moderator server 230 that conducts interactive usability testing with a usability test participant via data processing unit 120 and a research module running on a research server 210 that may be connected to a user research experience data processing unit 195. User experience researcher 181 may create tasks relevant to the user experience study of a target web site, applications, prototypes or any user experience study where screen sharing is desired, and provide the created tasks to the research server 210 via a communication link 185. As noted previously, web sites are often referenced throughout this disclosure for the sake of simplicity and clarity. This is not intended to limit the scope of disclosure in any manner, and for clarity "web sites" should be read as encompassing mobile native applications, virtual and physical prototypes, desktop applications, voice interface/audio systems (such as Alexa by Amazon), digital interfaces for smart appliances and televisions, and the like.

One of the tasks may be a set of questions designed to classify participants into different categories or to prescreen participants. Another task may be, for example, a set of questions to rate the usability of a target web site based on certain metrics such as ease of navigating the web site, connection speed, layout of the web page, ease of finding the products (e.g., the organization of product indexes). Yet another tasks may be a survey asking participants to press a "yes" or "no" button or write short comments about participants' experiences or familiarity with certain products and their satisfaction with the products. All these tasks can be stored in a study content database 220, which can be retrieved by the virtual moderator module running on virtual moderator server 230 to forward to participants 121. Research module running on research server 210 can also be accessed by a client (e.g., a sponsor of the usability test) 171 who, like user experience researchers 181, can design her own questionnaires since the client has a personal interest to the target web site under study. Client 171 can work together with user experience researchers 181 to create tasks for usability testing. In an embodiment, client 171 can modify tasks or lists of questions stored in the study content database 220. In another embodiment, client 171 can add or delete tasks or questionnaires in the study content database 220. In yet another embodiment, client 171 may be user experience researcher 181.

In some embodiment, one of the tasks may be open or closed card sorting studies for optimizing the architecture and layout of the target web site. Card sorting is a technique that shows how online users organize content in their own mind. In an open card sort, participants create their own names for the categories. In a closed card sort, participants are provided with a predetermined set of category names. Client 171 and/or user experience researcher 181 can create a proprietary online card sorting tool that executes card sorting exercises over large groups of participants in a rapid and cost-effective manner. In an embodiment, the card sorting exercises may include up to 100 items to sort and up to 12 categories to group. One of the tasks may include categorization criteria such as asking participants questions "why do you group these items like this?." Research module on research server 210 may combine card sorting exercises and online questionnaire tools for detailed taxonomy analysis. In an embodiment, the card sorting studies are compatible with SPSS applications.

In an embodiment, the card sorting studies can be assigned randomly to participant 120. User experience (UX) researcher 181 and/or client 171 may decide how many of those card sorting studies each participant is required to complete. For example, user experience researcher 181 may create a card sorting study within 12 tasks, group them in 4 groups of 3 tasks and manage that each participant just has to complete one task of each group. Other studies may involve navigation tasks, click testing, or other open tasks (such as selecting a layout from various layout options that is deemed the most appealing/intuitive).

After presenting the thus created tasks to participants 121 through virtual moderator module (running on virtual moderator server 230) or via an actual moderated session through the moderator server 230 and communication link 135, the actions/responses of participants will be collected in a data collecting module running on a data collecting server 260 via a communication link 135'. In an embodiment, communication link 135' may be a distributed computer network and share the same physical connection as communication link 135. This is, for example, the case where data collecting module 260 locates physically close to virtual moderator module 230, or if they share the usability testing system's processing hardware. In the following description, software modules running on associated hardware platforms will have the same reference numerals as their associated hardware platform. For example, virtual moderator module will be assigned the same reference numeral as the virtual moderator server 230, and likewise data collecting module will have the same reference numeral as the data collecting server 260.

Data collecting module 260 may include a sample quality control module that screens and validates the received responses, and eliminates participants who provide incorrect responses, or do not belong to a predetermined profile, or do not qualify for the study. Data collecting module 260 may include a "binning" module that is configured to classify the validated responses and stores them into corresponding categories in a behavioral database 270.

Merely as an example, responses may include gathered web site interaction events such as clicks, keywords, URLs, scrolls, time on task, navigation to other web pages, and the like. In one embodiment, virtual moderator server 230 has access to behavioral database 270 and uses the content of the behavioral database to interactively interface with participants 121. Based on data stored in the behavioral database, virtual moderator server 230 may direct participants to other pages of the target web site and further collect their interaction inputs in order to improve the quantity and quality of the collected data and also encourage participants' engagement. In one embodiment, virtual moderator server may eliminate one or more participants based on data collected in the behavioral database. This is the case if the one or more participants provide inputs that fail to meet a predetermined profile.

Usability testing system 150 further includes an analytics module 280 that is configured to provide analytics and reporting to queries coming from client 171 or user experience (UX) researcher 181. In an embodiment, analytics module 280 is running on a dedicated analytics server that offloads data processing tasks from traditional servers. Analytics server 280 is purpose-built for analytics and reporting and can run queries from client 171 and/or user experience researcher 181 much faster (e.g., 100 times faster) than conventional server system, regardless of the number of clients making queries or the complexity of queries. The purposebuilt analytics server 280 is designed for rapid query processing and ad hoc analytics and can deliver higher performance at lower cost, and, thus provides a competitive advantage in the field of usability testing and reporting and allows a company such as UserZoom (or Xperience Consulting, SL) to get a jump start on its competitors.

In an embodiment, research module 210, virtual moderator module 230, data collecting module 260, and analytics server 280 are operated in respective dedicated servers to provide higher performance. Client (sponsor) 171 and/or user experience research 181 may receive usability test reports by accessing analytics server 280 via respective links 175' and/or 185 '. Analytics server 280 may communicate with behavioral database via a two-w ay communication link 272.

In an embodiment, study content database 220 may include a hard disk storage or a disk array that is accessed via iSCSI or Fibre Channel over a storage area network. In an embodiment, the study content is provided to analytics server 280 via a link 222 so that analytics server 280 can retrieve the study content such as task descriptions, question texts, related answer texts, products by category, and the like, and generate together with the content of the behavioral database 270 comprehensive reports to client 171 and/or user experience researcher 181.

Shown in Figure 2 is a connection 232 between virtual moderator server 230 and behavioral database 270. Behavioral database 270 can be a network attached storage server or a storage area network disk array that includes a two-way communication via link 232 with virtual moderator server 230. Behavioral database 270 is operative to support virtual moderator server 230 during the usability testing session. For example, some questions or tasks are interactively presented to the participants based on data collected. It would be advantageous to the user experience researcher to set up specific questions that enhance the usability testing if participants behave a certain way. If a participant decides to go to a certain web page during the study, the virtual moderator server 230 will pop up corresponding questions related to that page; and answers related to that page will be received and screened by data collecting server 260 and categorized in behavioral database server 270. In some embodiments, virtual moderator server 230 operates together with data stored in the behavioral database to proceed to the next steps. Virtual moderator servers, for example, may need to know whether a participant has successfully completed a task, or based on the data gathered in behavioral database 270, present another tasks to the participant.

Referring still to Figure 2, client 171 and user experience researcher 181 may provide one or more sets of questions associated with a target web site to research server 210 via respective communication link 175 and 185. Research server 210 stores the provided sets of questions in a study content database 220 that may include a mass storage device, a hard disk storage or a disk array being in communication with research server 210 through a two-way interconnection link 212. The study content database may interface with virtual moderator server 230 through a communication link 234 and provides one or more sets of questions to participants via virtual moderator server 230.

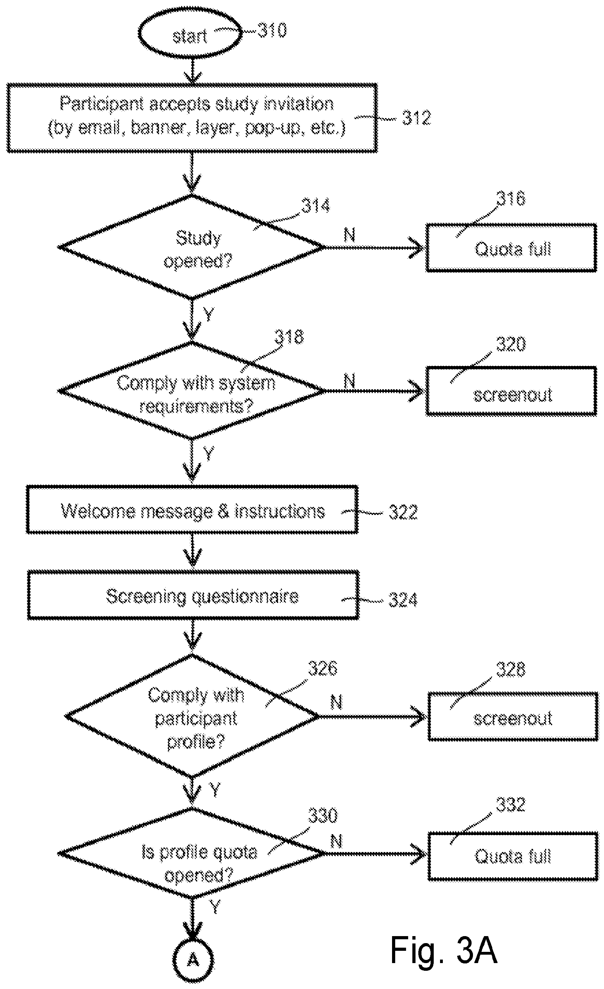

Figure 3A is a flow diagram of an exemplary process of interfacing with potential candidates and prescreening participants for the usability testing according to one embodiment of the present invention. The process starts at step 310. Initially, potential candidates for the usability testing may be recruited by email, advertisement banners, pop-ups, text layers, overlays, and the like (step 312). The number of candidates who have accepted the invitation to the usability test will be determined at step 314. If the number of candidates reaches a predetermined target number, then other candidates who have signed up late may be prompted with a message thanking for their interest and that they may be considered for a future survey (shown as "quota full" in step 316). At step 318, the usability testing system further determines whether the participants' browser comply with a target web site browser. For example, user experience researchers or the client may want to study and measure a web site's usability with regard to a specific web browser (e.g., Microsoft Edge) and reject all other browsers. Or in other cases, only the usability data of a web site related to Opera or Chrome will be collected, and Microsoft Edge or FireFox will be rejected at step 320. At step 322, participants will be prompted with a welcome message and instructions are presented to participants that, for example, explain how the usability testing will be performed, the rules to be followed, and the expected duration of the test, and the like. At step 324, one or more sets of screening questions may be presented to collect profile information of the participants. Questions may relate to participants' experience with certain products, their awareness with certain brand names, their gender, age, education level, income, online buying habits, and the like. At step 326, the system further eliminates participants based on the collected information data. For example, only participants who have used the products under study will be accepted or screened out (step 328). At step 330, a quota for participants having a target profile will be determined. For example, half of the participants must be female, and they must have online purchase experience or have purchased products online in recent years.

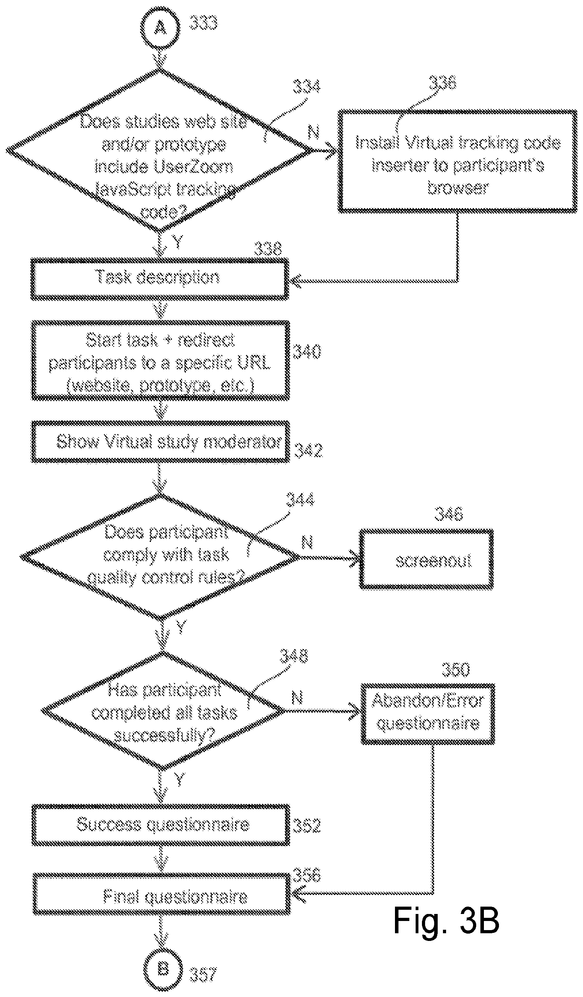

Figure 3B is a flow diagram of an exemplary process for gathering usability data of a target web site according to an embodiment of the present invention. At step 334, the target web site under test will be verified whether it includes a proprietary tracking code. In an embodiment, the tracking code is a UserZoom JavaScript code that pop-ups a series of tasks to the pre-screened participants. If the web site under study includes a proprietary tracking code (this corresponds to the scenario shown in Figure IC), then the process proceeds to step 338. Otherwise, a virtual tracking code will be inserted to participants' browser at step 336. This corresponds to the scenario described above in Figure 1A.

The following process flow is best understood together with Figure 2. At step 338, a task is described to participants. The task can be, for example, to ask participants to locate a color printer below a given price. At step 340, the task may redirect participants to a specific web site such as eBay, HP, or Amazon.com. The progress of each participant in performing the task is monitored by a virtual study moderator at step 342. At step 344, responses associated with the task are collected and verified against the task quality control rules. The step 344 may be performed by the data collecting module 260 described above and shown in Figure 2. Data collecting module 260 ensures the quality of the received responses before storing them in a behavioral database 270 (Figure 2). Behavioral database 270 may include data that the client and/or user experience researcher want to determine such as how many web pages a participant viewed before selecting a product, how long it took the participant to select the product and complete the purchase, how many mouse clicks and text entries were required to complete the purchase and the like. A number of participants may be screened out (step 346) during step 344 for non-complying with the task quality control rules and/or the number of participants may be required to go over a series of training provided by the virtual moderator module 230. At step 348, virtual moderator module 230 determines whether or not participants have completed all tasks successfully. If all tasks are completed successfully (e.g., participants were able to find a web page that contains the color printer under the given price), virtual moderator module 230 will prompt a success questionnaire to participants at step 352. If not, then virtual moderator module 230 will prompt an abandon or error questionnaire to participants who did not complete all tasks successfully to find out the causes that lead to the incompletion. Whether participants have completed all tasks successfully or not, they will be prompted for a final questionnaire at step 356.

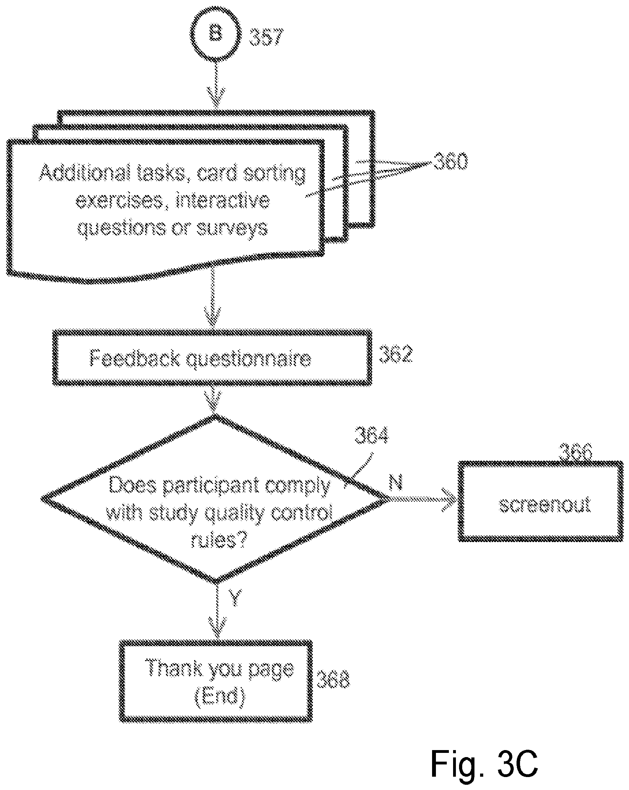

Figure 3C is a flow diagram of an exemplary process for card sorting studies according to one embodiment of the present invention. At step 360, participants may be prompted with additional tasks such as card sorting exercises. Card sorting is a powerful technique for assessing how participants or visitors of a target web site group related concepts together based on the degree of similarity or a number of shared characteristics. Card sorting exercises may be time consuming. In an embodiment, participants will not be prompted all tasks but only a random number of tasks for the card sorting exercise. For example, a card sorting study is created within 12 tasks that is grouped in 6 groups of 2 tasks. Each participant just needs to complete one task of each group. It should be appreciated to one person of skill in the art that many variations, modifications, and alternatives are possible to randomize the card sorting exercise to save time and cost. Once the card sorting exercises are completed, participants are prompted with a questionnaire for feedback at step 362. The feedback questionnaire may include one or more survey questions such as a subjective rating of target web site attractiveness, how easy the product can be used, features that participants like or dislike, whether participants would recommend the products to others, and the like. At step 364, the results of the card sorting exercises will be analyzed against a set of quality control rules, and the qualified results will be stored in the behavioral database 270. In an embodiment, the analysis of the result of the card sorting exercise is performed by a dedicated analytics server 280 that provides much higher performance than general-purpose servers to provide higher satisfaction to clients. If participants complete all tasks successfully, then the process proceeds to step 368, where all participants will be thanked for their time and/or any reward may be paid out. Else, if participants do not comply or cannot complete the tasks successfully, the process proceeds to step 366 that eliminates the non-compliant participants.

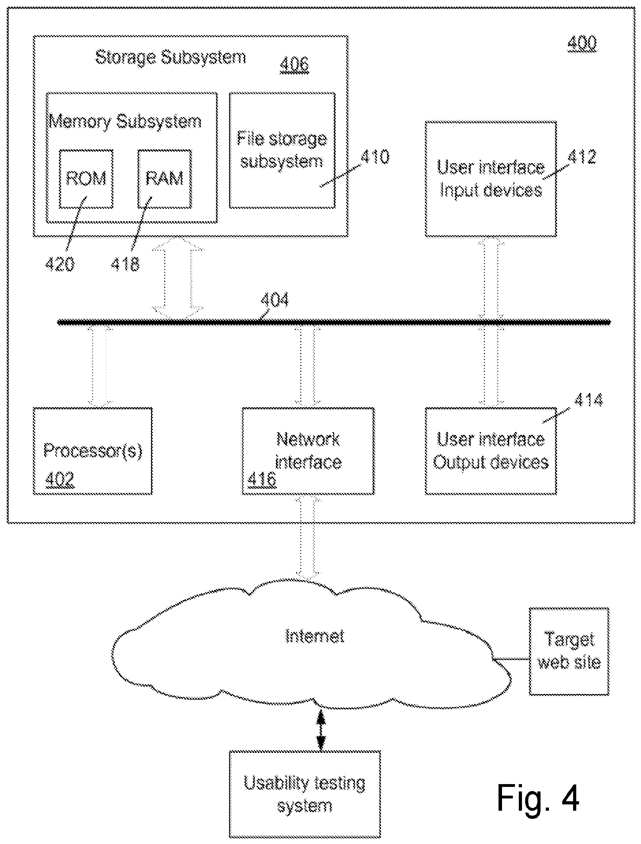

Figure 4 illustrates an example of a suitable data processing unit 400 configured to connect to a target web site, display web pages, gather participant's responses related to the displayed web pages, interface with a usability testing system, and perform other tasks according to an embodiment of the present invention. System 400 is shown as including at least one processor 402, which communicates with a number of peripheral devices via a bus subsystem 404. These peripheral devices may include a storage subsystem 406, including, in part, a memory subsystem and a file storage subsystem 410, user interface input devices 412, user interface output devices 414, and a network interface subsystem 416 that may include a wireless communication port. The input and output devices allow user interaction with data processing system 402. Bus system 404 may be any of a variety of bus architectures such as ISA bus, VESA bus, PCI bus and others. Bus subsystem 404 provides a mechanism for enabling the various components and subsystems of the processing device to communicate with each other. Although bus subsystem 404 is shown schematically as a single bus, alternative embodiments of the bus subsystem may utilize multiple busses.

User interface input devices 412 may include a keyboard, pointing devices such as a mouse, trackball, touchpad, or graphics tablet, a scanner, a barcode scanner, a touch screen incorporated into the display, audio input devices such as voice recognition systems, microphones, and other types of input devices. In general, use of the term input device is intended to include all possible types of devices and ways to input information to processing device. User interface output devices 414 may include a display subsystem, a printer, a fax machine, or non-visual displays such as audio output devices. The display subsystem may be a cathode ray tube (CRT), a flat-panel device such as a liquid crystal display (LCD), or a projection device. In general, use of the term output device is intended to include all possible types of devices and ways to output information from the processing device.

Storage subsystem 406 may be configured to store the basic programming and data constructs that provide the functionality in accordance with embodiments of the present invention. For example, according to one embodiment of the present invention, software modules implementing the functionality of the present invention may be stored in storage subsystem 406. These software modules may be executed by processor(s) 402. Such software modules can include codes configured to access a target web site, codes configured to modify a downloaded copy of the target web site by inserting a tracking code, codes configured to display a list of predefined tasks to a participant, codes configured to gather participant's responses, and codes configured to cause participant to participate in card sorting exercises. Storage subsystem 406 may also include codes configured to transmit participant's responses to a usability testing system.

Memory subsystem 408 may include a number of memories including a main random access memory (RAM) 418 for storage of instructions and data during program execution and a read only memory (ROM) 420 in which fixed instructions are stored. File storage subsystem 410 provides persistent (non-volatile) storage for program and data files, and may include a hard disk drive, a floppy disk drive along with associated removable media, a Compact Disk Read Only Memory (CD-ROM) drive, an optical drive, removable media cartridges, and other like storage media.

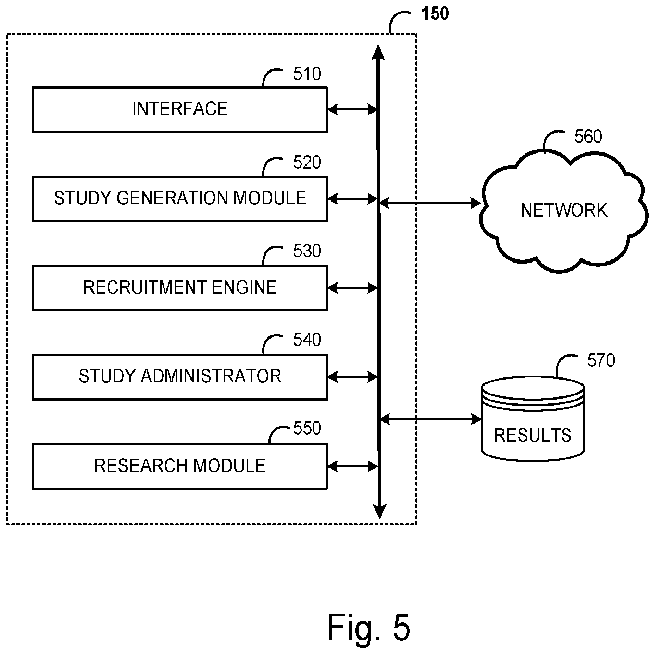

Now that systems and methods of usability testing have been described at a high level, attention will be directed to a particular set of embodiments of the systems and methods for user experience testing that allows for advanced insight generation. This begins with a usability testing system 150 as seen in relation to Figure 5. In this substantiation of the usability testing system 150 a number of subcomponents are seen as logically connected with one another, including an interface 510 for accessing the results 570 which may be stored internally or in an external data repository. The interface is also configured to couple with the network 560, which most typically is the Internet, as previously discussed.

The other significant components of the user experience testing system 150 includes a study generation module 520, a recruitment engine 530, a study administrator 540 and a research module 550, each of which will be described in greater detail below. Each of the components of the user experience testing systems 150 may be physically or logically coupled, allowing for the output of any given component to be used by the other components as needed.

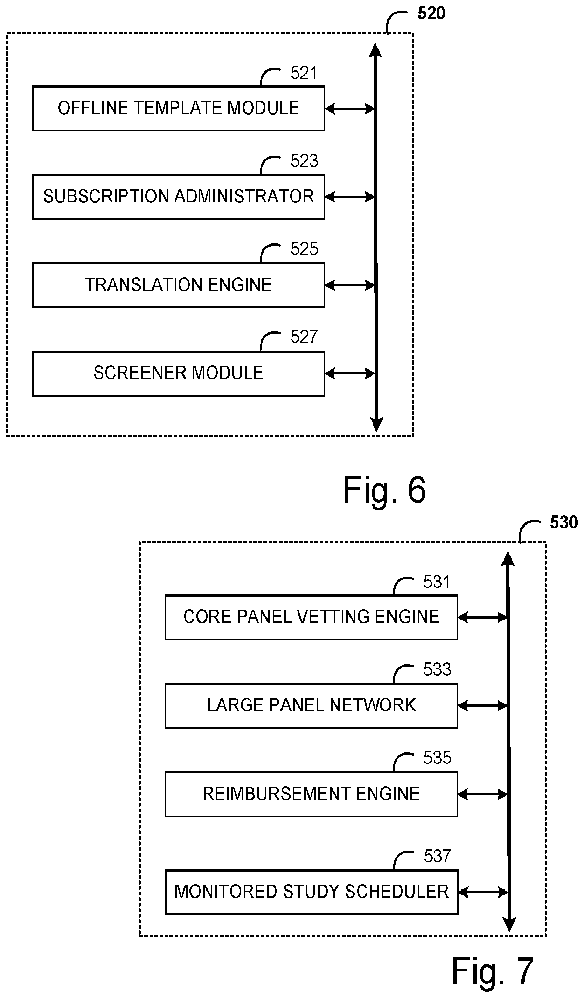

Turning to Figure 6, the study generation module 520 is provided in greater detail. An offline template module 521 provides a system user with templates in a variety of languages (pre-translated templates) for study generation, screener questions and the like, based upon study type. Users are able to save any screener question, study task, etc. for usage again at a later time or in another study.

**In** some embodiments a user may be able to concurrently design an unlimited number of studies, but is limited in the deployment of the studies due to the resource expenditure of participants and computational expense of the study insight generation. As such, a subscription administrator 523 manages the login credentialing, study access and deployment of the created studies for the user. **In** some embodiments, the user is able to have subscriptions that scale in pricing based upon the types of participants involved in a stud, and the number of studies concurrently deployable by the user/client.

The translation engine 525 may include machine translation services for study templates and even allow on the fly question translations. For example, such a system could allow a native English speaker user experience researcher to perform a moderated study session with a native German speaker. The researcher could speak (or type) in English, and have the communication translated in real time for the study participant. Such a system virtually eliminates language barriers, and allows the researcher to test platforms that are geographically specific without being located in the given geography. Similarly, it enables the ability to perform a user experience session in a given language (for example in Spanish) and have the video playback in an alternate language for analysis (for example if the parent company/marketing department is located in France).

A screener module 527 is configured to allow for the generation of screener questions to weed through the participants to only those that are suited for the given study. This may include basic Boolean expressions with logical conditions to select a particular demographic for the study. However, the screener module 527 may also allow for advanced screener capabilities where screener groups and quotas are defined, allowing for advanced logical conditions to segment participants. For example, the study may wish to include a group of 20 women between the ages of 25-45 and a group of men who are between the ages of 40-50 as this may more accurately reflect the actual purchasing demographic for a particular retailer. A single participant screening would be unable to generate this mix of participants, so the advanced screener interface is utilized to ensure the participants selected meet the user's needs for the particular study.

Turning now to Figure 7, a more detailed illustration of the recruitment engine 530 is provided. The recruitment engine 530 is responsible for the recruiting and management of participants for the studies. Generally, participants are one of three different classes: 1) core panel participants, 2) general panel participants, and 3) client provided participants. The core panel participants are compensated at a greater rate, but must first be vetted for their ability and willingness to provide comprehensive user experience reviews. Significant demographic and personal information can be collected for these core panel participants, which can enable powerful downstream analytics. The core panel vetting engine 531 collects public information automatically for the participants as well as eliciting information from the participant to determine if the individual is a reliable panelist. Traits like honesty' and responsiveness may be ascertained by comparing the information derived from public sources to the participant supplied information. Additionally, the participant may provide a video sample of a study. This sample is reviewed for clarity and communication proficiency as part of the vetting process. If a participant is successfully vetted they are then added to a database of available core panelists. Core panelists have an expectation of reduced privacy, and may pre-commit to certain volumes and/or activities.

Beyond the core panel is a significantly larger pool of participants in a general panel participant pool. This pool of participants may have activities that they are unwilling to engage in (e.g., audio and video recording for example), and are required to provide less demographic and personal information than core panelists. In turn, the general panel participants are generally provided a lower compensation for their time than the core panelists. Additionally, the general panel participants may be a shared pooling of participants across many user experience and survey platforms. This enables a demographically rich and large pool of individuals to source from. A large panel network 533 manages this general panel participant pool.

Lastly, the user or client may already have a set of participants they wish to use in their testing. For example, if the user experience for an employee benefits portal is being tested, the client will wish to test the study on their own employees rather than the general public.

A reimbursement engine 535 is involved with compensating participants for their time (often on a per study basis). Different studies may be 'worth' differing amounts based upon the requirements (e.g., video recording, surveys, tasks, etc.) or the expected length to completion. Additionally, the compensation between general panelists and core panelists may differ even for the same study. Generally, client supplied participants are not compensated by the reimbursement engine 535 as the compensation (if any) is directly negotiated between the client and the participants.

A monitored study scheduler 537 coordinates the available time between the participant(s) and moderators and observers. Observers tend to be marketing executives or even higher levels within the organization, and their time is extremely valuable. As such, moderated studies are intrinsically more 'expensive' to operate as compared to unmoderated sessions. It is therefore important that all individuals in the study are available and present at the study time. The study scheduler may access calendar data, in addition to requesting confirmation of availability to ensure that all parties involved in the study are available, and may further provide a series of reminders to the parties to ensure they are present for the scheduled session. The scheduler may also include a set of rules in order to improve the chances of compliance to the schedule, including for example intervals/buffers between sessions, and advanced confirmations.

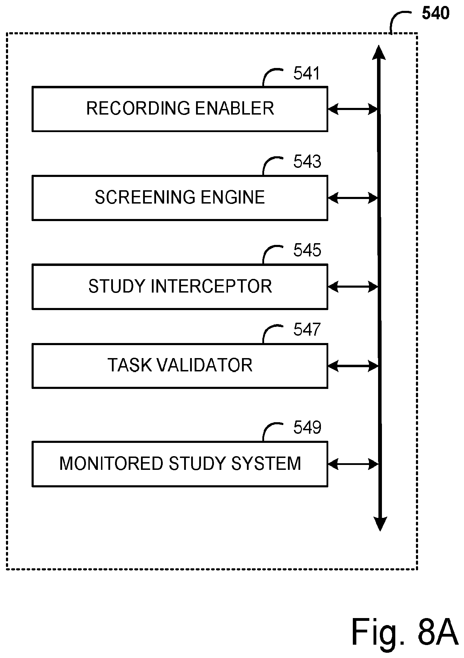

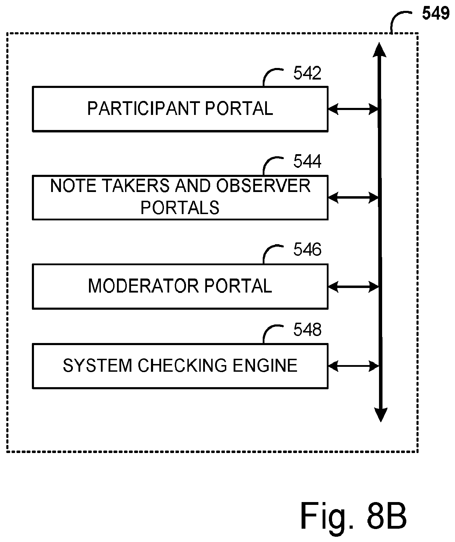

Turning now to Figure 8, a more detailed view of the study administrator 540 is provided. Unlike many other user experience testing programs, the presently disclosed systems and methods include the ability to record particular activities by the user. A recording enabler 541 allows for the collection of click-flow information, audio collection and even video recording. In the event of audio and/or video recording the recording only occurs during the study in order to preserve participant privacy, and to focus attention on only time periods that will provide insights into the user experience. Thus, while the participant is engaged in screening questions or other activities recording may be disabled to prevent needless data accumulation. Recording only occurs after user acceptance (to prevent running afoul of privacy laws and regulations), and during recording the user may be presented with a clear indication that the session is being recorded. For example the user may be provided a thumbnail image of the video capture, in some embodiments. This provides notice to the user of the video recording, and also indicates video quality and field of view information, thereby allowing them to readjust the camera if needed or take other necessary actions (avoiding harsh backlight, increasing ambient lighting, etc.).

The screening engine 543 administers the generated screener questions for the study. Screener questions, as previously disclosed, includes questions to the potential participants that may qualify or disqualify them from a particular study. For example, in a given study, the user may wish to target men between the ages of 21 and 35, for example. Questions regarding age and gender may be used in the screener questions to enable selection of the appropriate participants for the given study. Additionally, based upon the desired participant pool being used, the participants may be pre-screened by the system based upon known demographic data. For the vetted core panelists the amount of personal data known may be significant, thereby focusing in on eligible participants with little to no additional screener questions required. For the general panel population, however, less data is known, and often all but the most rudimentary qualifications may be performed automatically. After this qualification filtering of the participants, they may be subjected to the screener questions as discussed above.

In moderated studies, due to the larger expense, it may be desirable to have a two part screening where the screening engine is initially used to screen the participants, and the individuals are then subjected to additional screening after invitations have been extended to the participants, and their responses have been received. This secondary selection process typically involves human intervention by the moderator or other individual involved in the study.

In some embodiments it may be desirable to interrupt a study in progress in order to interject a new concept, offer or instruction. Particularly, in a mobile application there can be a software developer kit (SDK) that enables the integration into the study and interruption of the user in-process. The study interceptor 545 manages this interruptive activity. Interruption of the user experience allows for immediate feedback testing or prompts to have the participant do some other activity. For example, the interrupt may be configured to trigger when some event or action is taken, such as the participant visiting a particular URL or meeting a determined threshold (e.g. having two items in their shopping cart). The interruption allows the participant to be either redirected to another parallel user experience, or be prompted to agree to engage in a study or asked to answer a survey or the like. Interruption may also be human initiated in the event the study is moderated. This allows significant flexibility of study progression based upon the results and observations.

Lastly, the study may include one or more events to occur in order to validate its successful completion. A task validator 547 tracks these metrics for study completion. Generally, task validation falls into three categories: 1) completion of a particular action (such as arriving at a particular URL, URL containing a particular keyword, or the like), 2) completing a task within a time threshold (such as finding a product that meets criteria within a particular time limit), and 3) by question. Questions may include any definition of success the study designer deems relevant. This may include a simple "were you successful in the task?" style question, or a more complex satisfaction question with multiple gradient answers, for example.

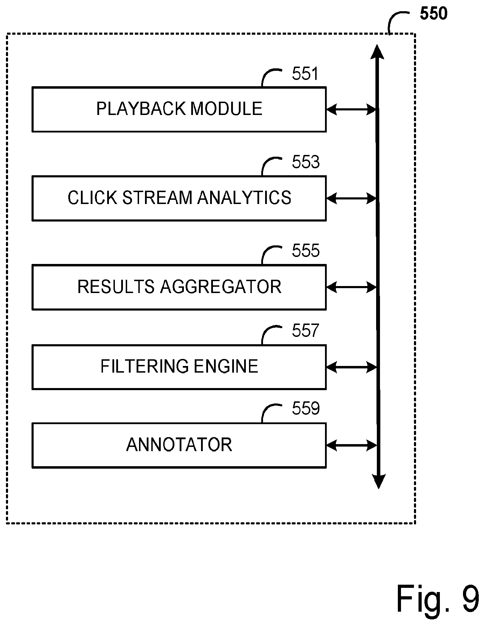

Turning now to Figure 9, the research module 550 is provided in greater detail. Compared to traditional user experience study platforms, the present systems and methods particularly excel at providing timely and accurate insights into a user's experience, due to these research tools. The research module includes basic functionalities, such as playback of any video or audio recordings by the playback module 551. This module, however, may also include a machine transcription of the audio, which is then time synchronized to the audio and/or video file. The machine translation may additionally include a feature to identify speakers by common pitch, cadence and accent. These different speakers may be identified within the transcript, and importantly differentiating between the participant(s) and any moderator(s). This allows a user to review and search the transcript (using keywords or the like) and immediately be taken to the relevant timing within the recording. And of the results may be annotated using an annotator 559 as well. This allows, for example the user to select a portion of the written transcription and provide an annotation relevant to the study results. The system then automatically can use the timing data to generate an edited video/audio clip associated with the annotation. If the user later searches the study results for the annotation, this auto-generated clip may be displayed for viewing.

In addition to the video and/or audio recordings, the clickstream for the participant is recorded and mapped out as a branched tree, by the click stream analyzer 553. This may be aggregated with other participants' results for the study, to provide the user an indication of what any specific participant does to complete the assigned task, or some aggregated group generally does. The results aggregator 555 likewise combines task validation findings into aggregate numbers for analysis.

All results may be searched and filtered by a filtering engine 557 based upon any delineator. For example, a user may desire to know what the pain points of a given task are, and thus filters the results only by participants that failed to complete the task. Trends in the clickstream for these individuals may illustrate common activities that result in failure to complete the task. For example, if the task is to find a laptop computer with a dedicated graphics card for under a set price, and the majority of people who fail to successfully complete this task end up stuck in computer components due to typing in a search for "graphics card" this may indicate that the search algorithm requires reworking to provide a wider set of categories of products, for example.

As noted above, the filtering may be by any known dimension (not simply success or failure events of a task). For example, during screening or as part of a survey attending the study, income levels, gender, education, age, shopping preferences, etc. may all be discovered. It is also possible that the participant pool includes some of this information in metadata associated with the participant as well. Any of this information may be used to drill down into the results filtering. For example it may be desired to filter for only participants over a certain age. If after a certain age success rates are found to drop off significantly, for example, it may be that the font sizing is too small, resulting in increased difficulty for people with deteriorating eyesight.

Likewise, any of the results may be subject to annotations. Annotations allow for different user reviewers to collectively aggregate insights that they develop by reviewing the results, and allows for filtering and searching for common events in the results.

All of the results activities are additionally ripe for machine learning analysis using deep learning. For example, the known demographic information may be fed into a recursive neural network (RNN) or convoluted neural network (CNN) to identify which features are predictive of a task being completed or not. Even more powerful is the ability for the clickstream to be fed as a feature set into the neural network to identify trends in click flow activity that are problematic or result in a decreased user experience.

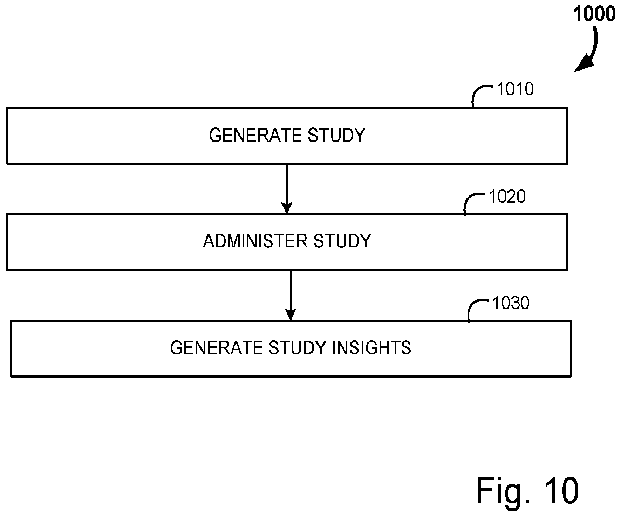

Turning now to Figure 10, a flow diagram of the process of user experience study testing is provided generally at 1000. At a high level this process includes three basic stages: the generation of the study (at 1010) the administration of the study (at 1020) and the generation of the study insights (at 1030). Earlier Figures 3A-C touched upon the study administration, and is intended to be considered one embodiment thereof.

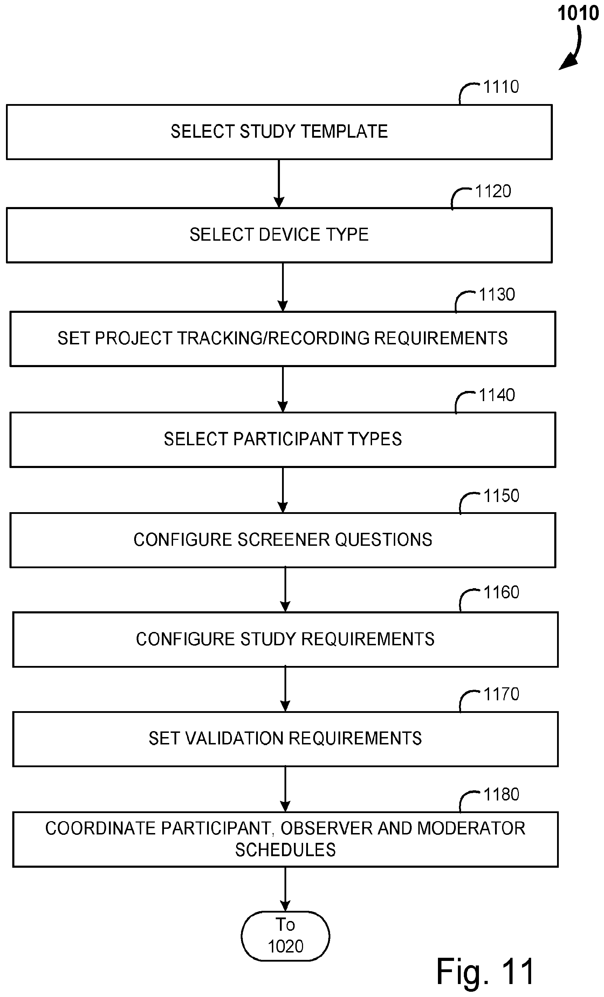

Figure 11 provides a more detailed flow diagram of the study generation 1010. As noted before, the present systems and methods allows for improved study generation by the usage of study templates which are selected (at 1110) based upon the device the study is to be implemented on, and the type of study that is being performed. For example, as users more frequently utilize mobile devices for their shopping, it may be desirable to generate studies specifically designed to test the user experience on a mobile device. Study templates may come in alternate languages as well, in some embodiments. Study types generally include basic usability testing, surveys, card sort, tree test, click test, live intercept and advanced user insight research.

The basic usability test includes audio and/or video recordings for a relatively small number of participants with feedback. A survey, on the other hand, leverages large participant numbers with branched survey questions. Surveys may also include randomization and double blind studies. Card sort, as discussed in great detail previously, includes open or closed card sorting studies. Tree tests assess the ease in which an item is found in a website menu by measuring where users expect to locate specific information. This includes uploading a tree menu and presenting the participant with a task to find some item within the menu. The time taken to find the item, and rate of successful versus unsuccessful queries into different areas of the tree menu are collected as results. Click test measures first impressions and defines success areas on a static image as a heat map graph. In the click test the participant is presented with a static image (this may include a mock layout of a website/screenshot of the webpage, an advertising image, an array of images or any other static image) and is presented a text prompt. The text prompt may include questions such "Which image makes you the hungriest?" or "select the tab where you think deals on televisions are found." The location and time the user clicks on the static image is recorded for the generation of a heat map and other metrics for analysis. Clicks that take longer (indicating a degree of uncertainty on behalf of the participant) are weighted as less strong, whereas immediate selection indicates that the reaction by the participant is surer. Over time the selections of various participants may be collected. Where many participants select an answer to a particular prompt in the same place relatively rapidly there is a darker heat map indicator. Where participants select various locations, the heat map will show a more diffuse result. Consistent location, but longer delay in the selection will also result in a concentration on the heat map, but of a lighter color, indicating the degree of insecurity by the participants.

Device type is selected next (at 1120). As noted before, mobile applications enable SDK integration for user experience interruption, when this study type is desired. Additionally, the device type is important for determining recording ability/camera capability (e.g., a mobile device will have a forward and reverse camera, whereas a laptop is likely to only have a single recording camera, whereas a desktop is not guaranteed to have any recording device) and the display type that is particularly well suited for the given device due to screen size constraints and the like. Again, many embodiments of the usability testing may be focused upon mobile devices, as these are increasingly being utilized by consumers for accessing information and direct shopping.

The study tracking and recording requirements are likewise set (at 1130). Further, the participant types are selected (at 1140). The selection of participants may include a selection by the user to use their own participants, or rely upon the study system for providing qualifies participants. If the study system is providing the participants, a set of screener questions are generated (at 1150). These screener questions may be saved for later usage as a screener profile. The core participants and larger general panel participants may be screened until the study quota is filled.

Next the study requirements are set (at 1160). Study requirements may differ based upon the study type that was previously selected. For example, the study questions are set for a survey style study, or advanced research study. In basic usability studies and research studies the task may likewise be defined for the participants. For tree tests the information being sought is defined and the menu uploaded. For click test the static image is selected for usage. Lastly, the success validation is set (at 1170) for the advanced research study.

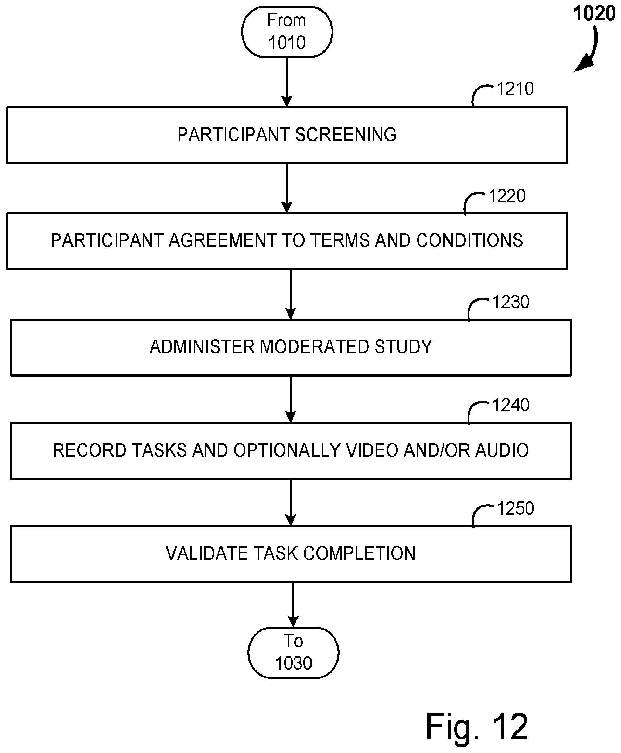

After study generation, the study may be implemented, as shown in greater detail at 1020 of Figure 12. Study implementation begins with screening of the participants (at 1210). This includes initially filtering all possible participants by known demographic or personal information to determine potentially eligible individuals. For example, basic demographic data such as age range, household income and gender may be known for all participants. Additional demographic data such as education level, political affiliation, geography, race, languages spoken, social network connections, etc. may be compiled over time and incorporated into embodiments, when desired. The screener profile may provide basic threshold requirements for these known demographics, allowing the system to immediately remove ineligible participants from the study. The remaining participants may be provided access to the study, or preferentially invited to the study, based upon participant workload, past performance, and study quota numbers. For example, a limited number (less than 30 participants) video recorded study that takes a long time (greater than 20 minutes) may be provided out on an invitation basis to only core panel participants with proven histories of engaging in these kinds of studies. In contrast, a large survey requiring a thousand participants that is expected to only take a few minutes may be offered to all eligible participants.

The initially eligible participants are then presented with the screener questions. This two-phased approach to participant screening ensures that participants are not presented with studies they would never be eligible for based upon their basic demographic data (reducing participant fatigue and frustration), but still enables the user to configure the studies to target a particular participant based upon very specific criteria (e.g., purchasing baby products in the past week for example). After participant invitation and the above screening, in the event of a moderated study, there is often a secondary selection process by the moderator (or other suitable individual) to select ideal candidates for participation. As noted before, moderated studies are more costly than unmoderated studies, and thus to get the largest value out of these studies, greater care in participant selection is performed.

After participants have been screened and are determined to still meet the study requirements, they are asked to accept the study terms and conditions (at 1220). As noted before, privacy regulations play an ever increasing role in online activity, particularly if the individual is being video recorded. Consent to such recordings is necessitated by these regulations, as well as being generally a best practice.

After conditions of the study are accepted, the participant may be presented with the study task in a moderated study (at 1230) which, again, depends directly upon the study type. This may include navigating a menu, finding a specific item, locating a URL, answering survey questions, providing an audio feedback, card sorting, clicking on a static image, or some combination thereof. Depending upon the tasks involved, the clickstream and optionally audio and/or video information may be recorded (at 1240). The task completion is likewise validated (at 1250) if the success criteria is met for the study. This may include task completion in a particular time, locating a specific URL, answering a question, or a combination thereof.

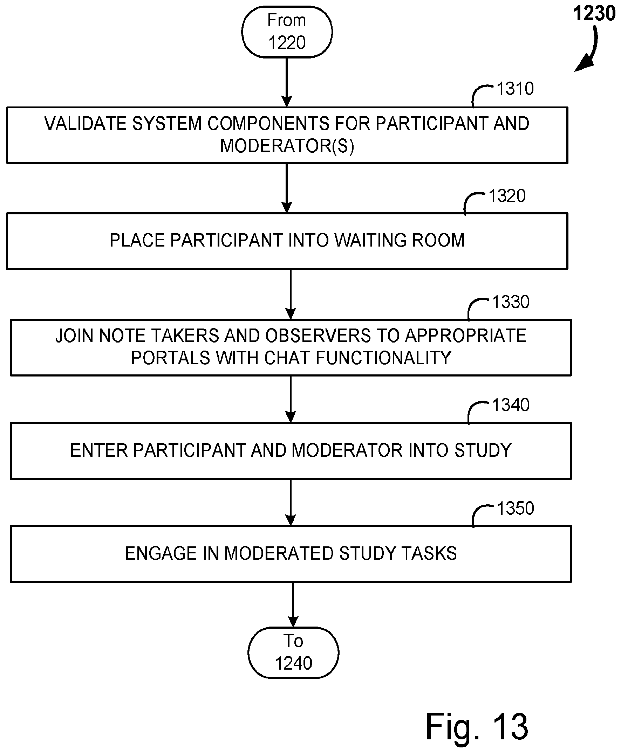

Moderated study administration is presented in greater detail in relation to Figure 13. In this process the systems for the participants are initially validated (at 1310). The system validation is also usually performed for the moderator as well. System validation ensures that the microphone, speakers, camera and connection speeds are sufficient and operable to allow for a moderated study session. Examples of these validations will be provided below in relation to example screenshots. Subsequently, the participant is placed into a waiting area (at 1320) while moderators and note takers join the session (at 1330). Observers may likewise be placed in a waiting area prior to j oining the session when the participant j oins. The purpose of setting up the participant before the others join is that often the observers and note takers are executives or other highly compensated professionals. Wasting their time is a foolish expenditure of resources. When desired however the observers and note takers may join the session earlier in order to communicate prior to session start.

Once the observers and note takers have been added to their own portal, they have a chat functionality available for communicating with one another and with the moderator. The participant, however, is not in communication with the observers and note takers, and indeed is not made aware of their presence. From the participant's perspective, they are interacting with the moderator and nobody else.

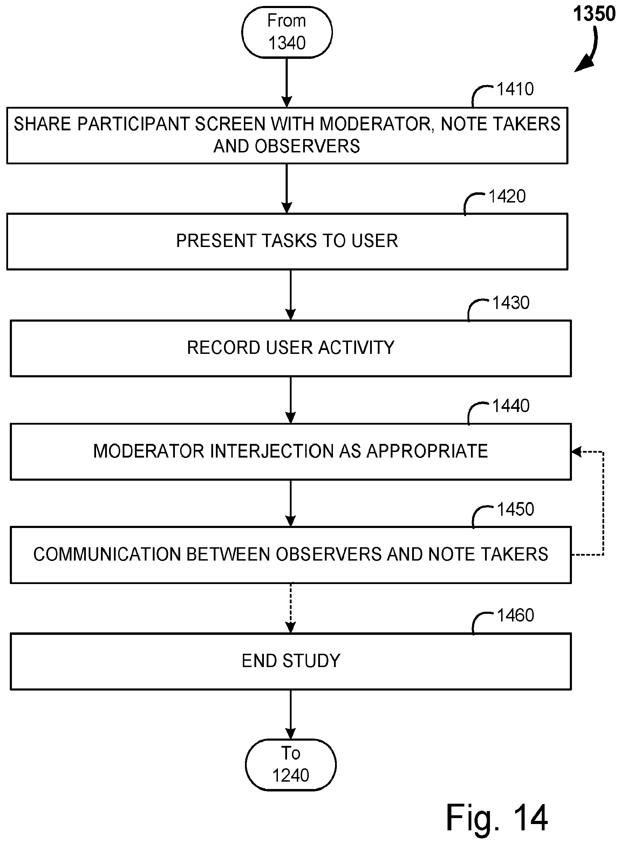

The moderator and participants are then transferred into the study environment (at 1340) while observers and note takers are allowed the ability to see and hear the study. The study then progresses (at 1350), which is disclosed in greater detail in relation to Figure 14. Initially, the participant and moderator are placed into communication with one another. The participant is asked to share her screen with the moderator (at 1410). The participant's screen, when shared, is also visible to the note-takers and observers, however, the participant may not be aware of this fact. The tasks are presented to the user (at 1420) and the participant's activities are recorded (at 1430). For clarification, audio and video recording may occur before structured study recording; starting as soon as consent is provided by the participant. The moderator is enabled to interject when appropriate or desired (at 1440). Often such interjection is prompted by the observer or note taker which are all in private communication with one another and the moderator (at 1450). This set of steps, where the moderator interjects as the participant completes the tasks, with observers providing commentary, are repeated until the session is completed, at which point the study ends (at 1460).

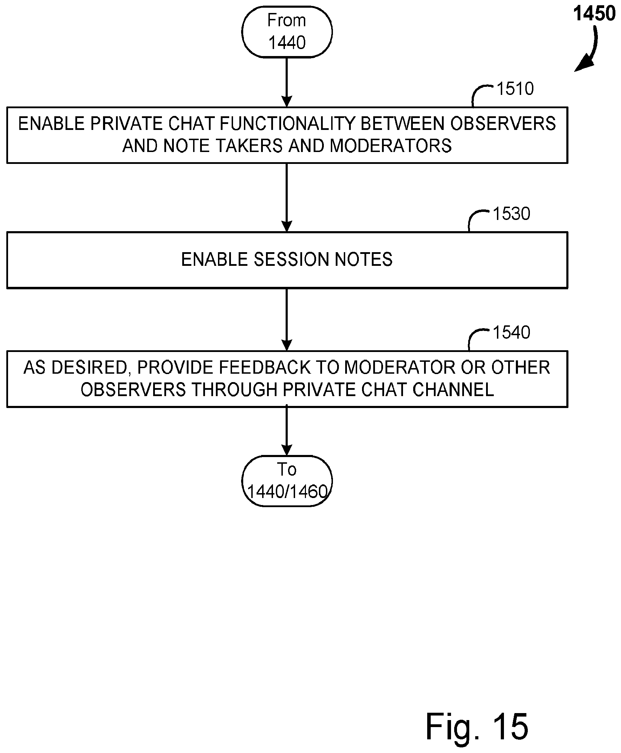

Figure 15 provides greater detail of the process by which observers and note takers are able to communicate with one another and the moderator. This sub process begins with the enabling of a private communication channel between the observers, note takers and the moderator(s) (at 1510). This private communication channel is generally a private chat function, but could include an isolated audio channel or the like.

It should be noted that observers and note takers are generally lumped together in this disclosure. While this is done for the sake of simplicity, these roles are actually distinct, and include different permissions. As suggested by the name, observers have no ability to influence the study session. Their engagement is limited to watching the session unfold, and provide comments via the private communication channel. Often observers are marketing executives or other interested parties. The note takers, in comparison, are there to annotate the session in real time. This enables improved review of the session at a later time. Note takers may also be allowed to unmute themselves, and therefore by heard by the participant, if necessary. **In** this way the note takers are, in a limited capacity, backup moderators that can step in if there is a technical issue with the primary moderator(s) or otherwise are needed in the session; however, they are unable to control the session like a moderator is enabled to. Often the note taker(s) are system experts, while observers are merely interested parties, and the moderators may be less adept in the system as well.

Moving on, session notes are likewise enabled (at 1530). As needed, the observer(s) and/or note taker(s) are able to provide feedback to the moderator or to one another through the private chat channels (at 1540).

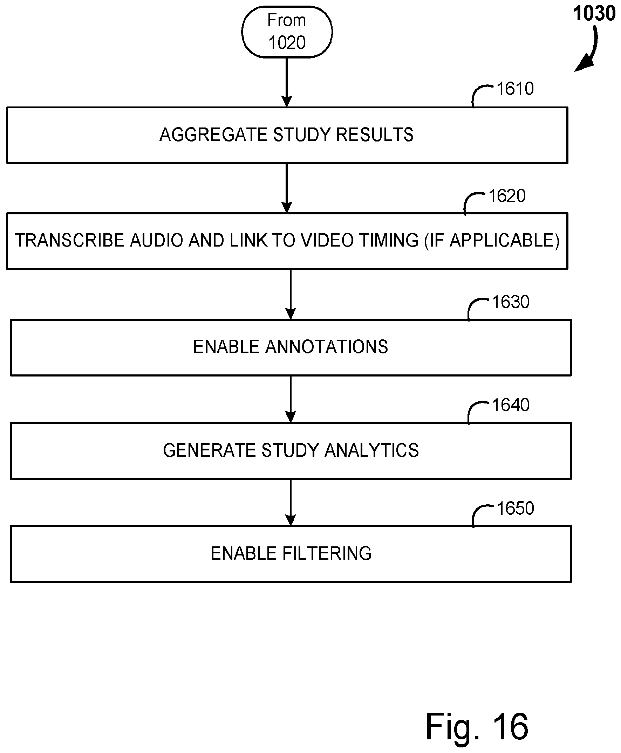

After study administration across the participant quota, insights are generated for the study based upon the results, as seen at 1030 of Figure 16. Initially the study results are aggregated (at 1610). This includes graphing the number of studies that were successful, unsuccessful and those that were abandoned prior to completion. Confidence intervals may be calculated for these graphs. Similarly, survey question results may be aggregated and graphed. Clickstream data may be aggregated and the likelihood of any particular path may be presented in a branched graphical structure. Aggregation may include the totality of all results, and may be delineated by any dimension of the study.

When an audio or video recording has been collected for the study, these recordings may be transcribed using machine voice to text technology (at 1620). Transcription enables searching of the audio recordings by keywords. The transcriptions may be synchronized to the timing of the recording, thus when a portion of the transcription is searched, the recording will be set to the corresponding frames. This allows for easy review of the recording, and allows for automatic clip generation by selecting portions of the transcription to highlight and tag/annotate (at 1630). The corresponding video or audio clip is automatically edited that corresponds to this tag for easy retrieval. The clip can likewise be shared by a public URL for wider dissemination. Any portion of the results, such as survey results and clickstream graphs, may similarly be annotated for simplified review.

As noted, study data is analyzed (at 1640). This may include the rendering of the clickstream graphical interface showing what various participants did at each stage of their task, calculating success ratings, generating card sorting graphs, navigation pathways or the like. As noted before, deep learning neural networks may consume these graphs to identify "points of confusion' which are transition points that are predictive of a failed outcome.

All the results are filterable (at 1650) allowing for complex analysis across any study dimension. Here too, machine learning analysis may be employed, with every dimension of the study being a feature, to identify what elements (or combination thereof) are predictive of a particular outcome. This information may be employed to improve the design of subsequent website designs, menus, search results, and the like.

While the above discussion has been focused upon testing the user experience in a website for data generation, it is also possible that these systems and methods are proactively deployed defensively against competitors who are themselves engaging in user experience analysis. This includes first identifying when a user experience test is being performed, and taking some reaction accordingly. Red-flag behaviors, such as redirection to the client's webpage from a competitive user experience analytics firm is one clear behavior. Others could include a pattern of unusual activity, such as a sudden increase in a very discrete activity for a short duration.

Once it is determined that a client's website has been targeted for some sort of user experience test, the event is logged. At a minimum this sort of information is helpful to the client in planning their own user experience tests, and understanding what their competitors are doing. However, in more extreme situations, alternate web portals may be employed to obfuscate the analysis being performed.

Moving on, the following figures will provide concrete examples of the generation, administration and analysis of a moderated study. While these specific screenshot images are intended to better illustrate the operation of the above moderated user experience test systems and methods, these images are exemplary, and not intended to limit this disclosure to any specific embodiment.

To start, a study author (often a marketing employee within the company performing the usability test) is provided a project dashboard (not illustrated). This dashboard shows a user of the system the ongoing projects, draft projects, projects that have been completed, and the total number of all projects. The user may search the projects, and generate and edit project templates. Further the user can select an option to create a new project.

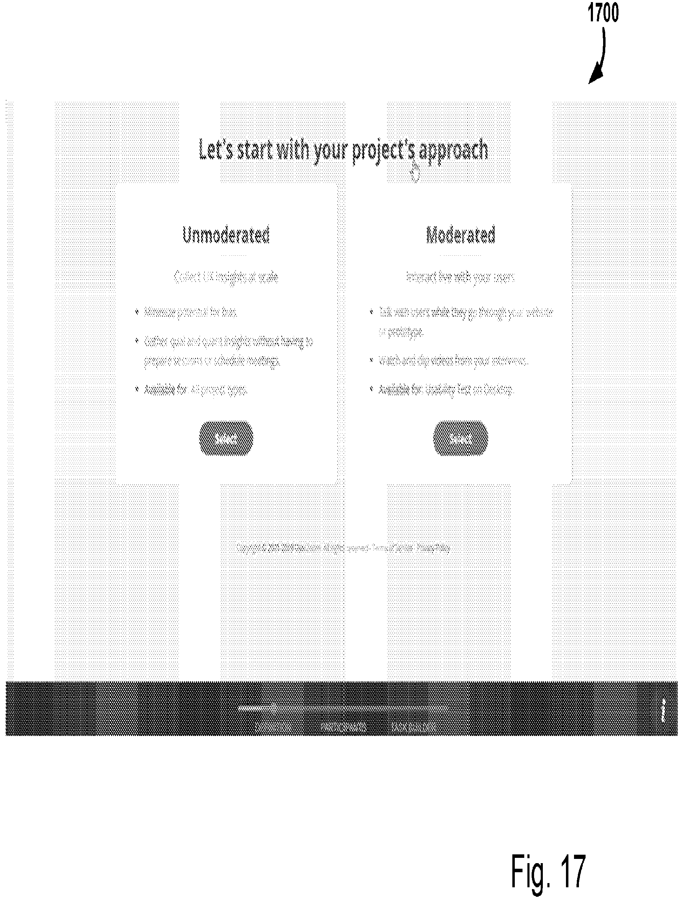

When the option to create a new project is selected, the user is redirected to a screen shown at 1700 of Figure 17, where the user is asked whether the project is to be moderated or not. Moderated tasks are useful in getting a more in depth understanding of the user experience; however, as this selection requires a live interaction with the participant, these studies are more resource intensive and therefore scale with difficulty. Due to this resource burden, it is imperative that all parties involved in the study are properly scheduled and actually present for the study. As such, a complex scheduling tool is provided to the study author to ensure availability of the parties.

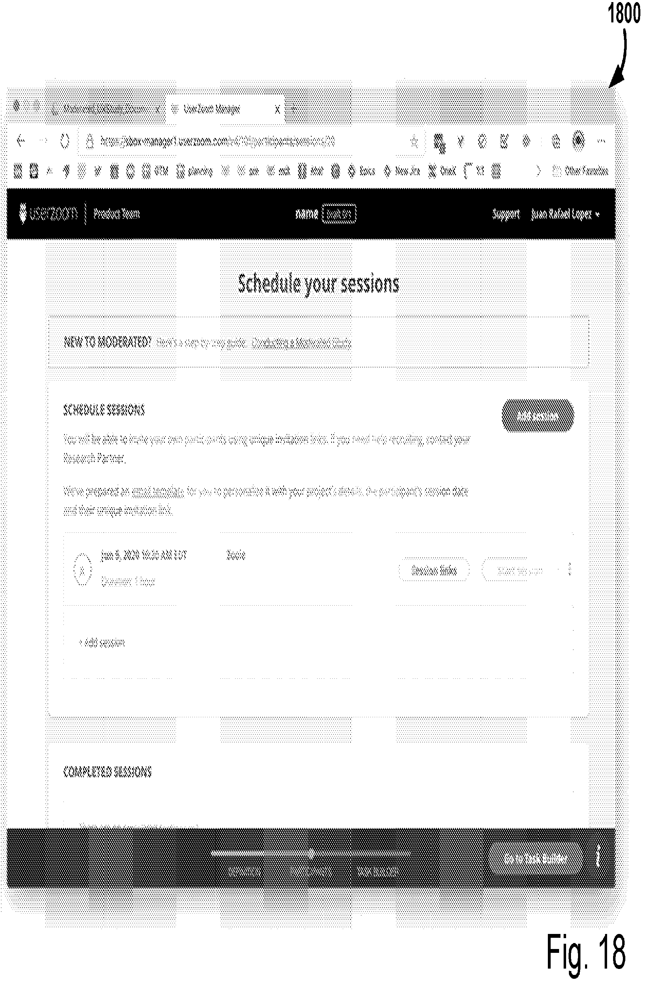

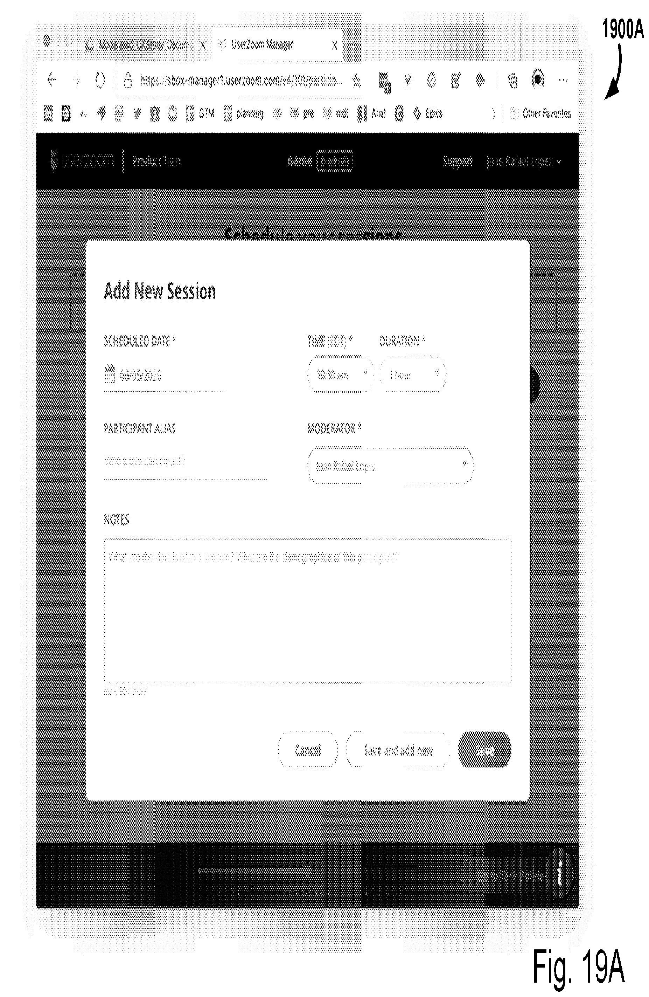

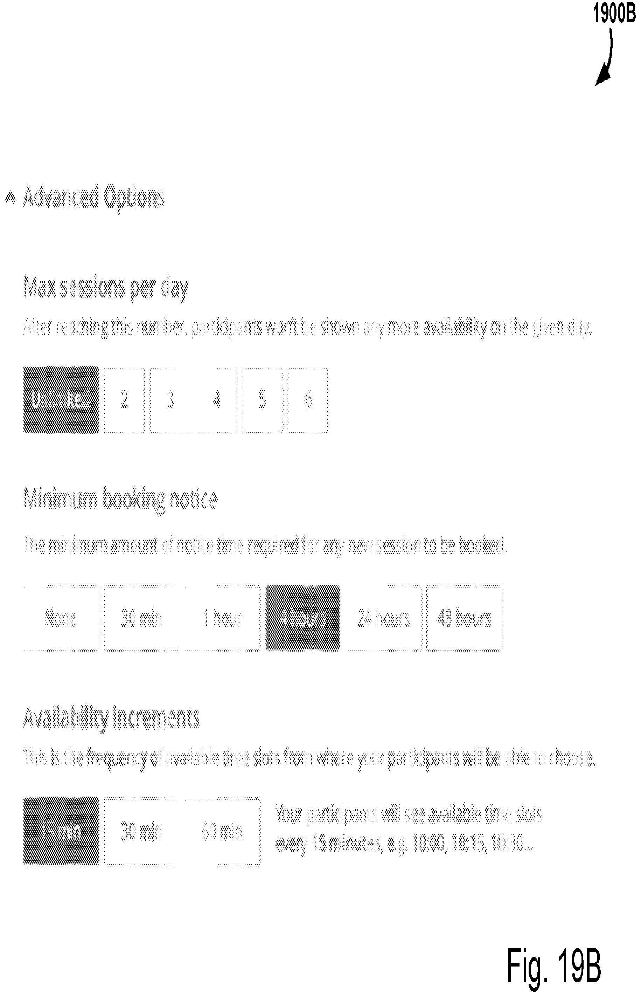

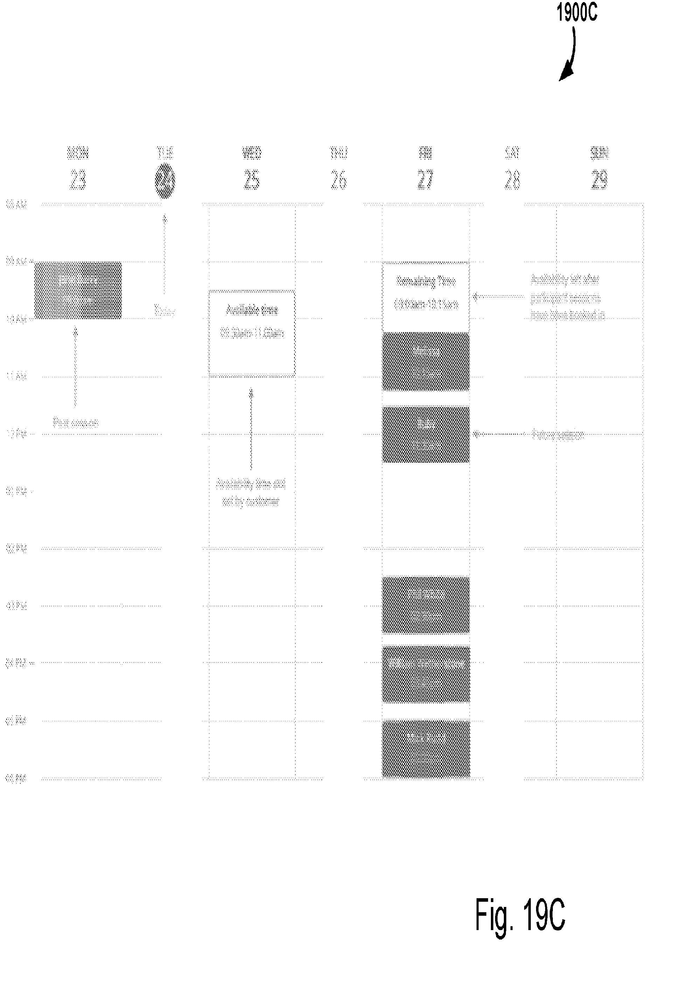

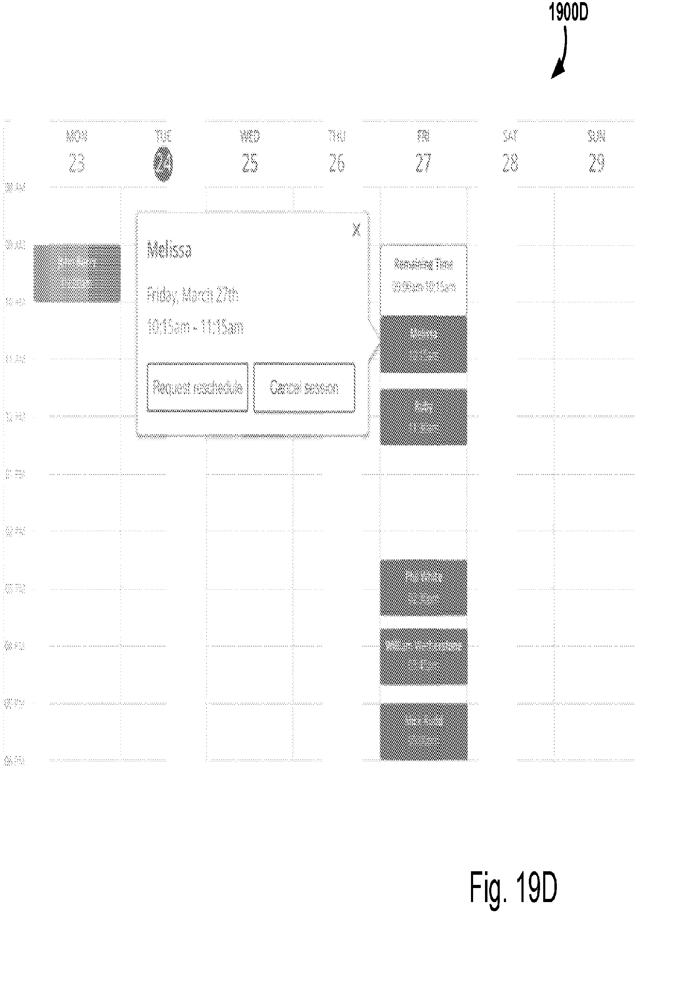

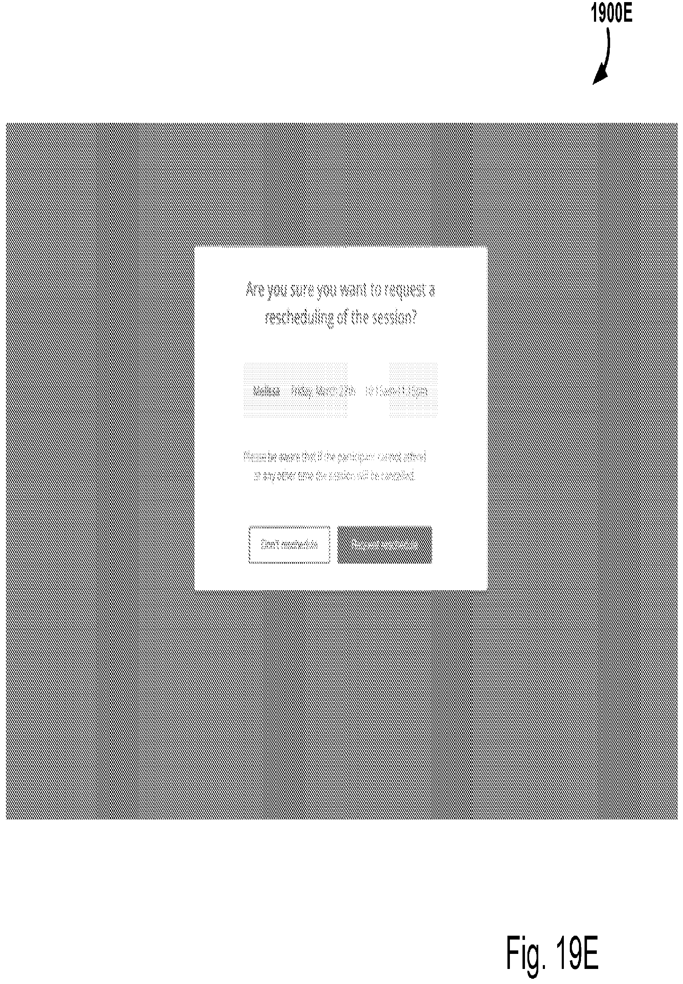

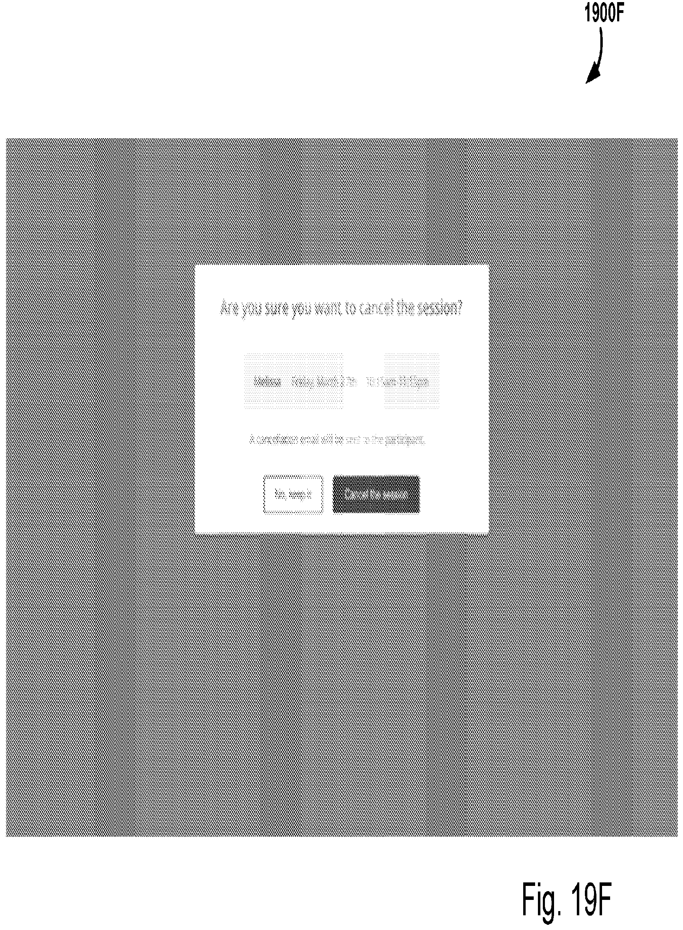

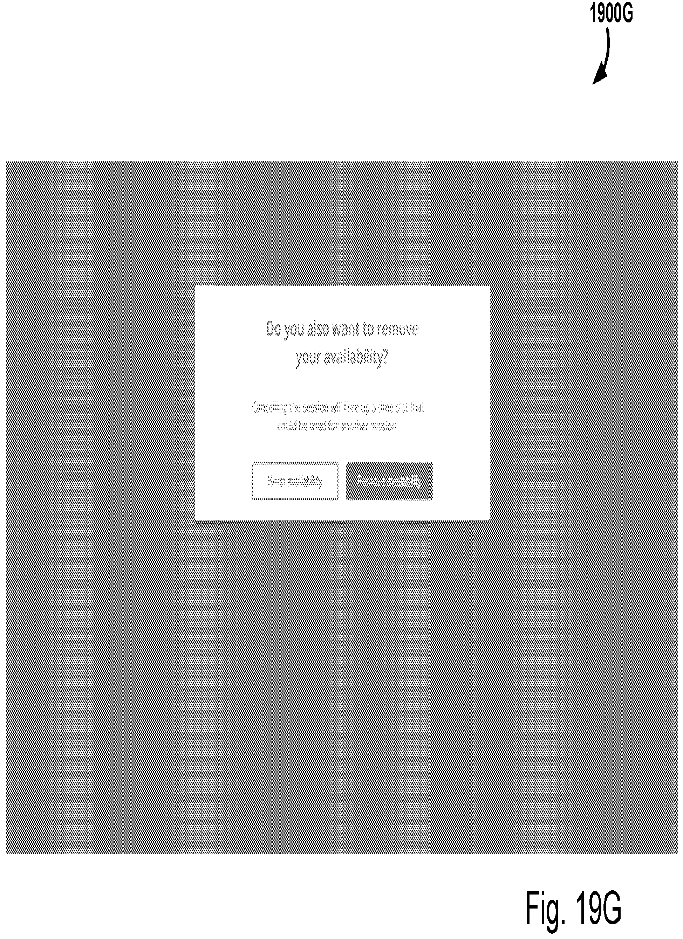

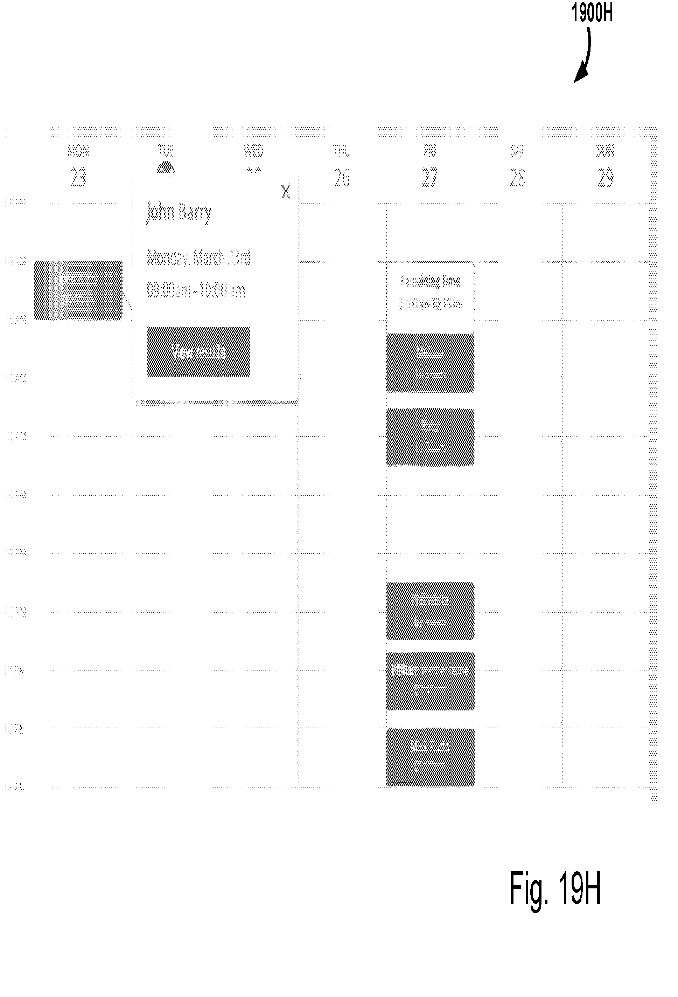

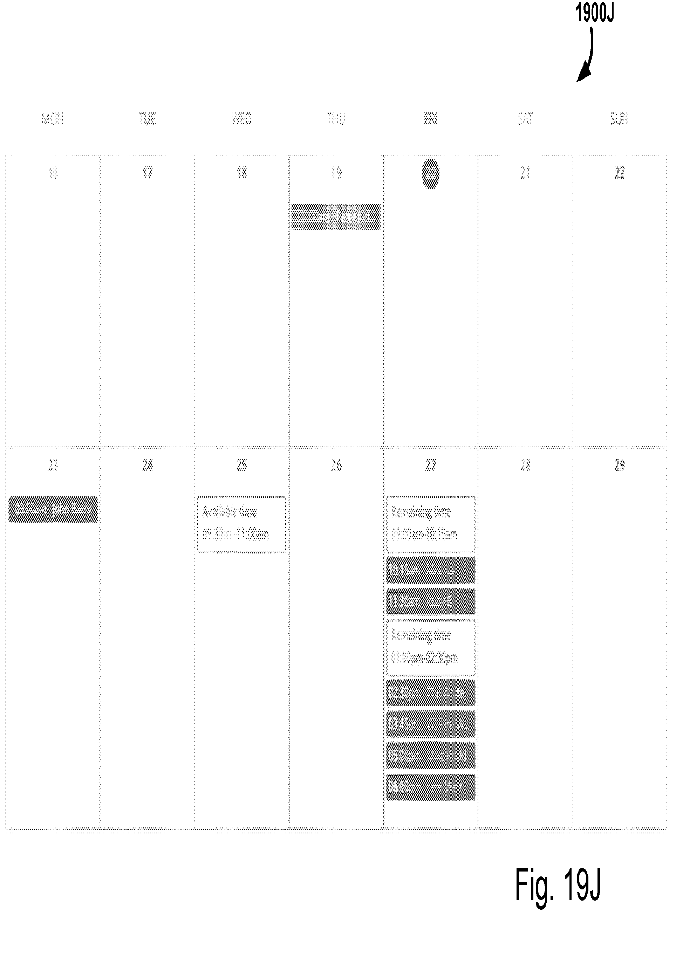

Figure 18 illustrates a scheduling interface (at 1800). Here already scheduled sessions are displayed, and the ability to add additional sessions is likewise provided. Upon selection of adding a new session, the author is redirected to an initial scheduling screen, shown at 1900A of Figure 19. In this interface, the moderator is selected, as well as the time. Notes about the session are likewise able to be inputted for later reference. Rather than leveraging a simple scheduling interface as shown at 1900A, a more in depth scheduling tool may be leveraged. This is particularly useful when coordinating multiple schedules, and/or multiple study sessions.

As seen at Figure 19B an advanced scheduling tool is provided, at 1900B. This enables the author to set a maximum limit of session slots each day, booking notice requirements, and session increments. After setting out these scheduling slots for view by potential participants, the author may access a scheduling calendar, as seen at Figure 19C at 1900C. The present day is highlighted on the calendar, as well as available time slots. Future and past sessions that have already been scheduled are likewise illustrated.

The author is able to select a future session, as seen at 1900D of Figure 19D in order to cancel or reschedule the given session. Upon rescheduling, the author is presented a confirmation screen for requesting the reschedule, as seen at 1900E of Figure 19E. A similar confirmation screen is presented to the author upon the selection to cancel the given session, as seen at 1900F of Figure 19F. The author may also, at any time, remove an availability slot from the calendar. When the availability slot is eliminated, the author is again presented with a confirmation screen, as seen at 1900G of Figure 19G.

Returning to the calendar screen, the author may select any past sessions, as seen at 1900H of Figure 19H. This allows the author to rapidly view the results of the session. In addition to a week view as presented, the scheduling calendar may be expanded to a month view or two week view, as illustrated at 1900J of Figure 19J.

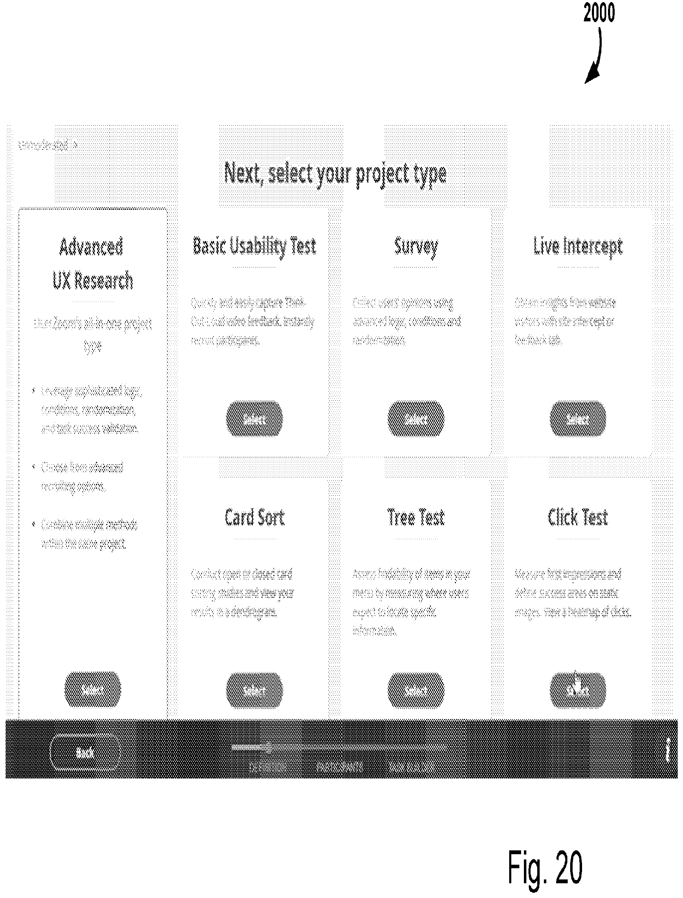

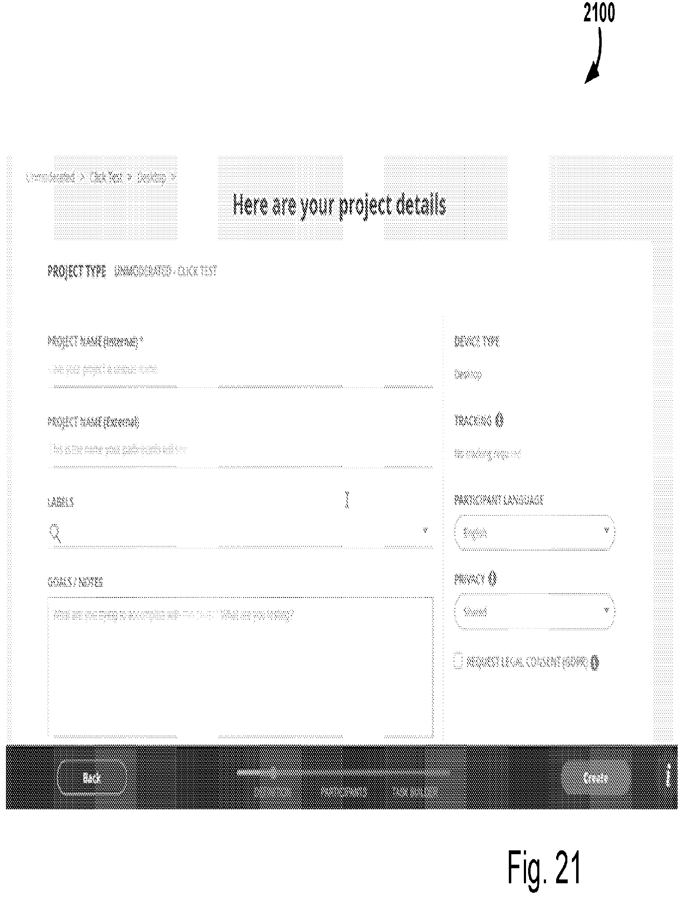

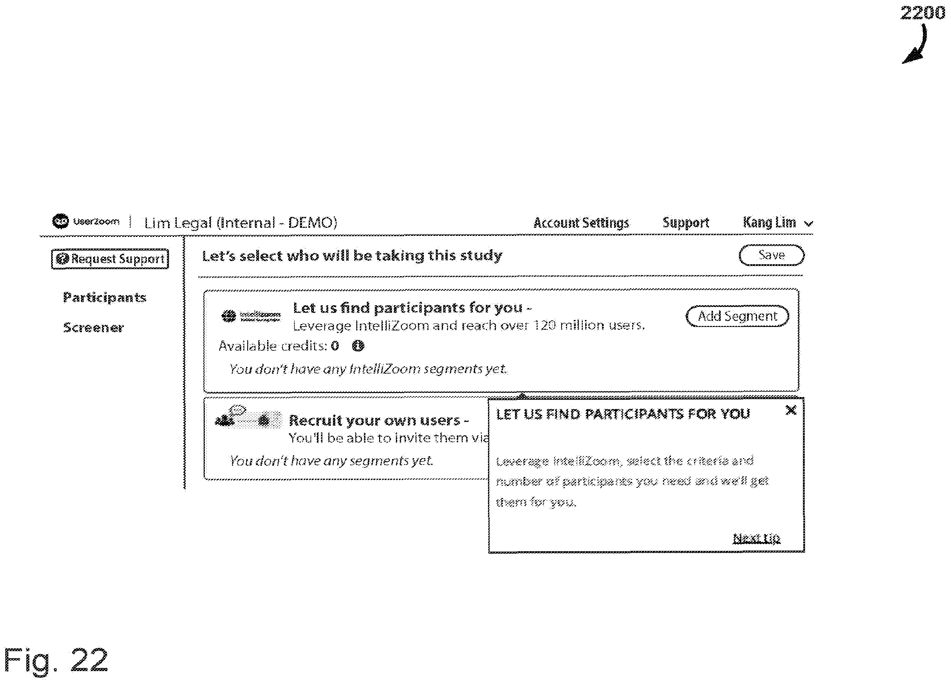

After scheduling, the individual generating the new project is redirected to a screen for study selection, as seen at 2000 of Figure 20. The different usability tests are illustrated, but for this example, the user selects the click test study. This redirects the user to a page, seen at 2100 of Figure 21, for generating the study. Here project details, such as the name, goals of the study, and user details are selected. After the test is named, the user is directed to a screen for the selection of participants, as seen at 2200 of Figure 22. Two options are presented to the user: the first is to utilize a panel of participants that they already have (such as an employee team, or a focus group). The other option is to leverage a network of participants that may be filtered and selected that the system has access to. There is a cost of using such a participant team, but it allows access to a larger pool of eligible participants.

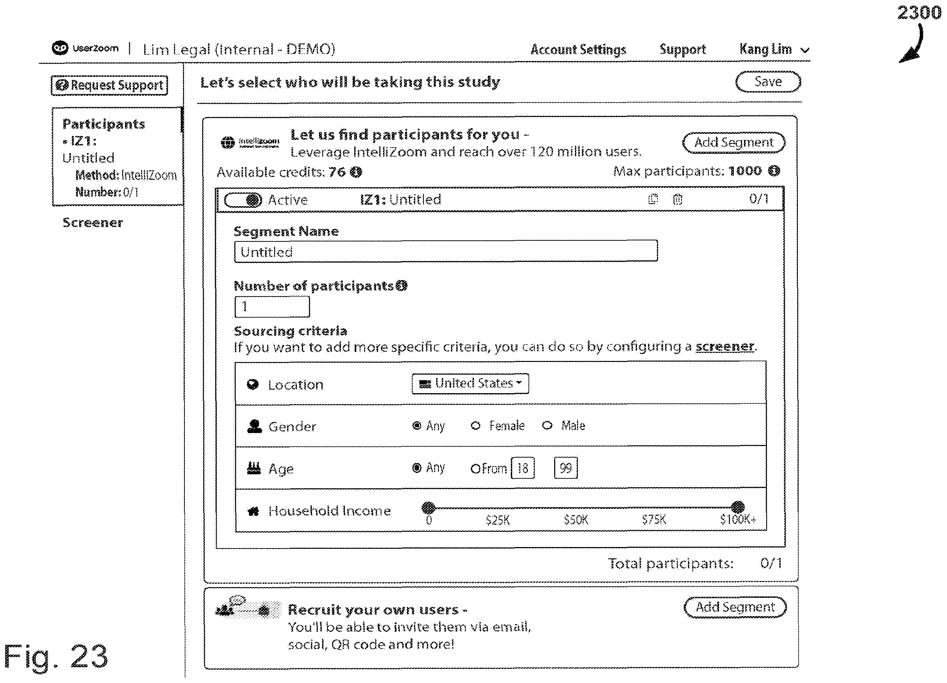

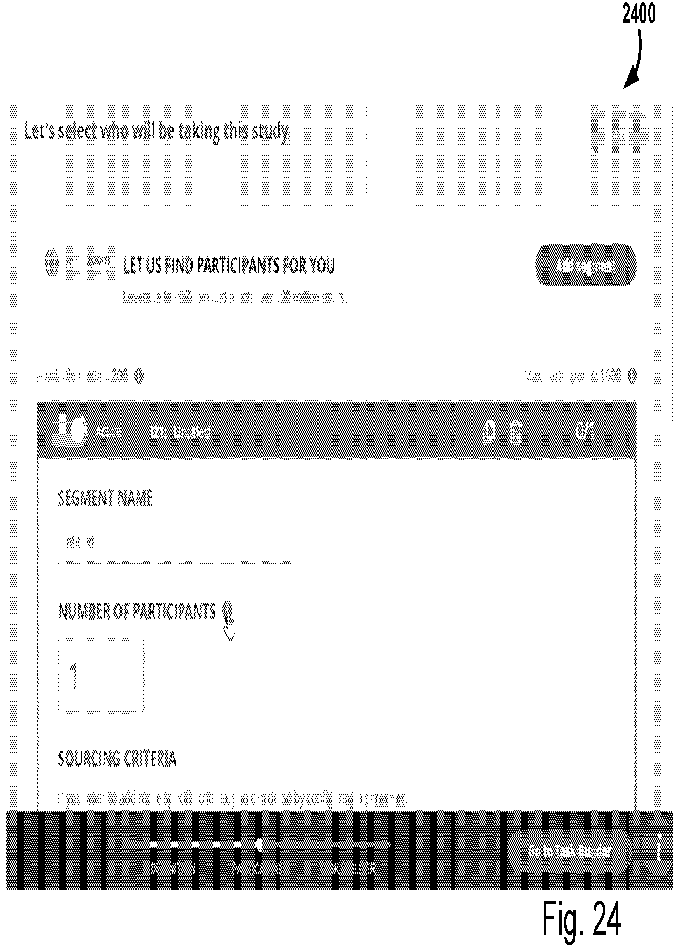

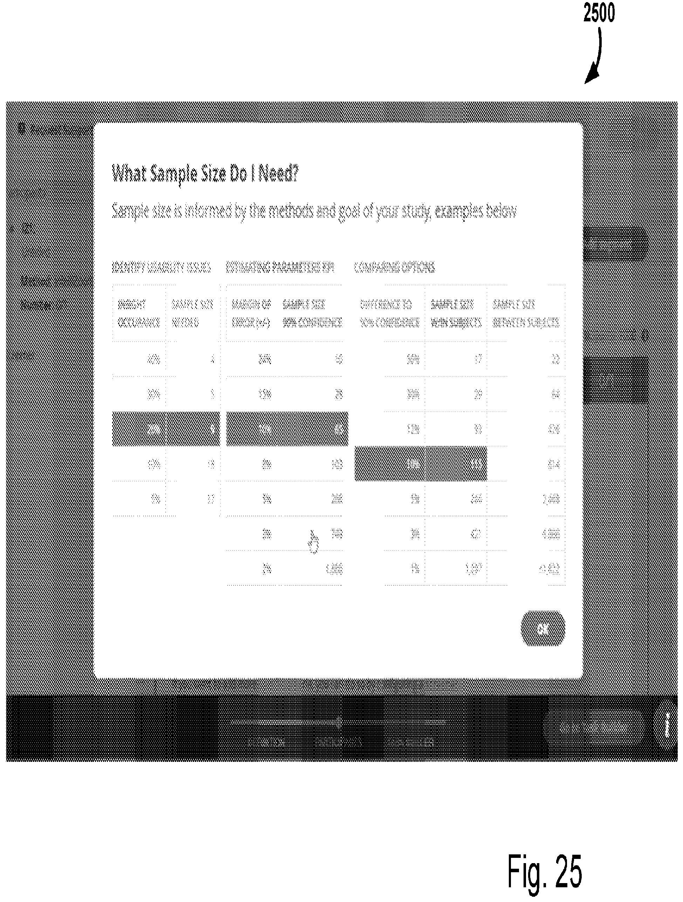

If the user selects to use participants provided by the system, the user is directed to a participant selection screen, shown at 2300 of Figure 23. Here the number of participants desired, and basic screening requirements (such as age, gender, income levels, location, etc.) are selected. Upon selection of this basic information, the actual selection of participant segments is enabled through the screen shown at 2400, at Figure 24. The participant selection is aided by an analyzer of confidence levels based upon participant numbers, as seen at 2500 of Figure 25. Sample sizes are modifiable by the accuracy of the participant segments selected (some segments for example may mirror a given consumer base more accurately than other segments, for example) and through the usage of known sample confidence algorithms.

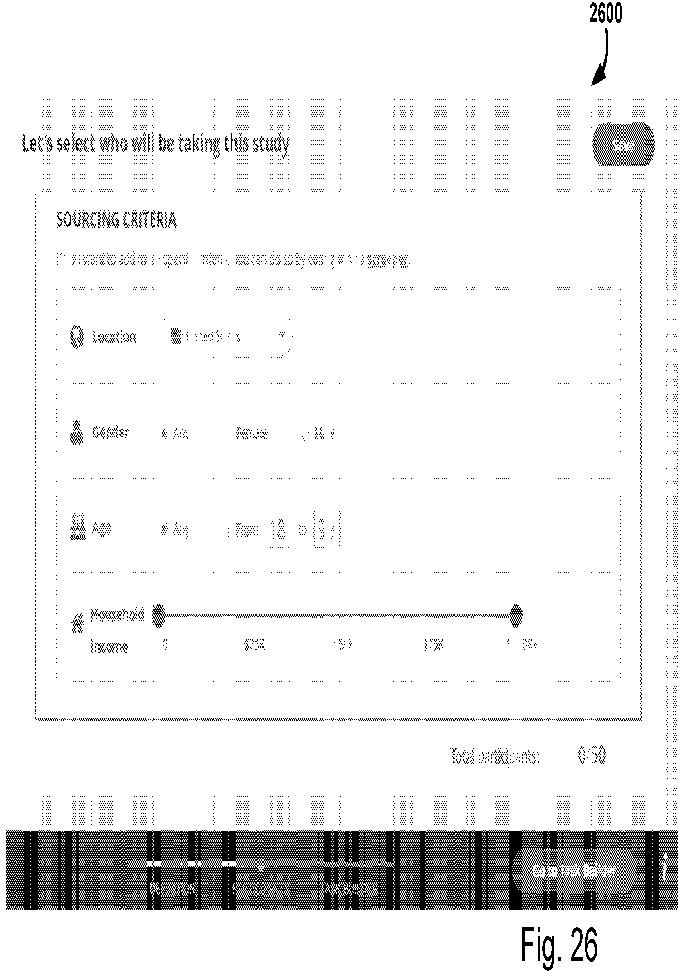

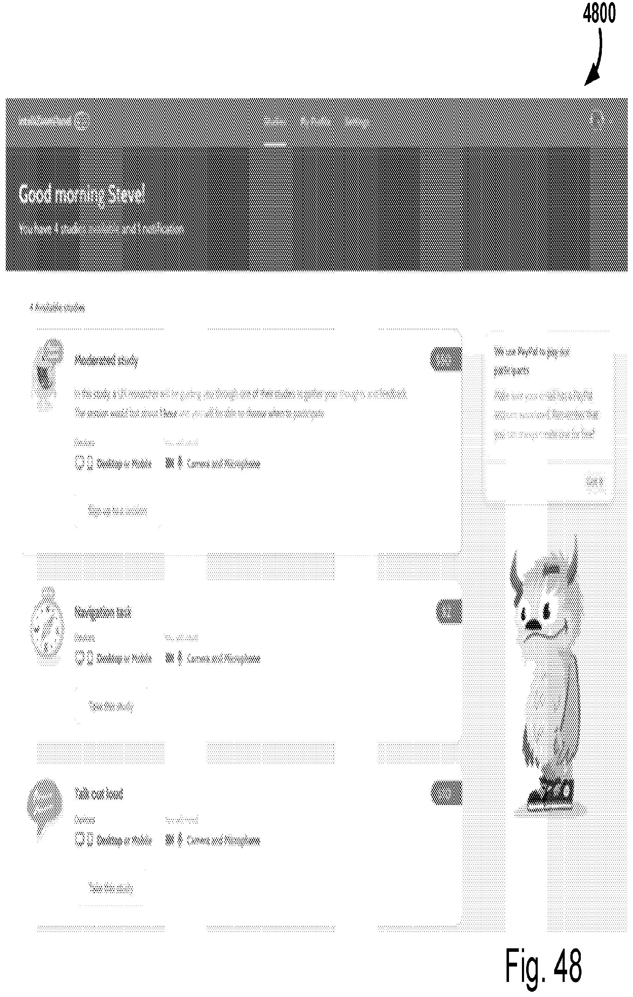

Using this sampling guidance, the user is able to make selections of the participant requirements, as seen at 2600 of Figure 26. Additional screener questions beyond the basic filtering criteria may additionally be generated (or leveraged from a library of existing questions). Possible participants are provided a screen whereby possible studies are illustrated, and may be selected for initial screening, as seen at 4800 of Figure 48.

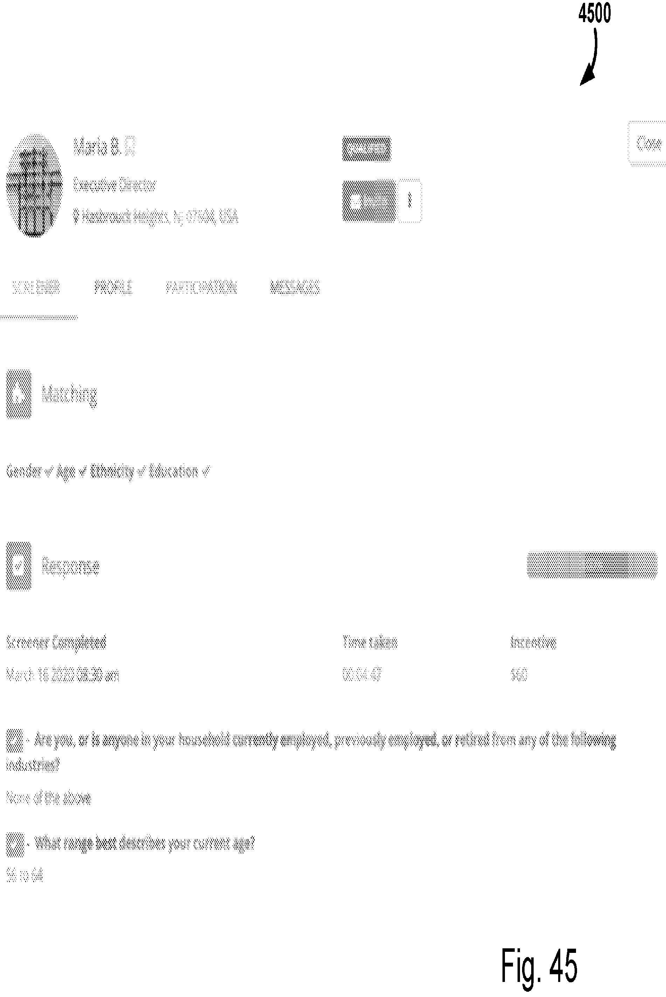

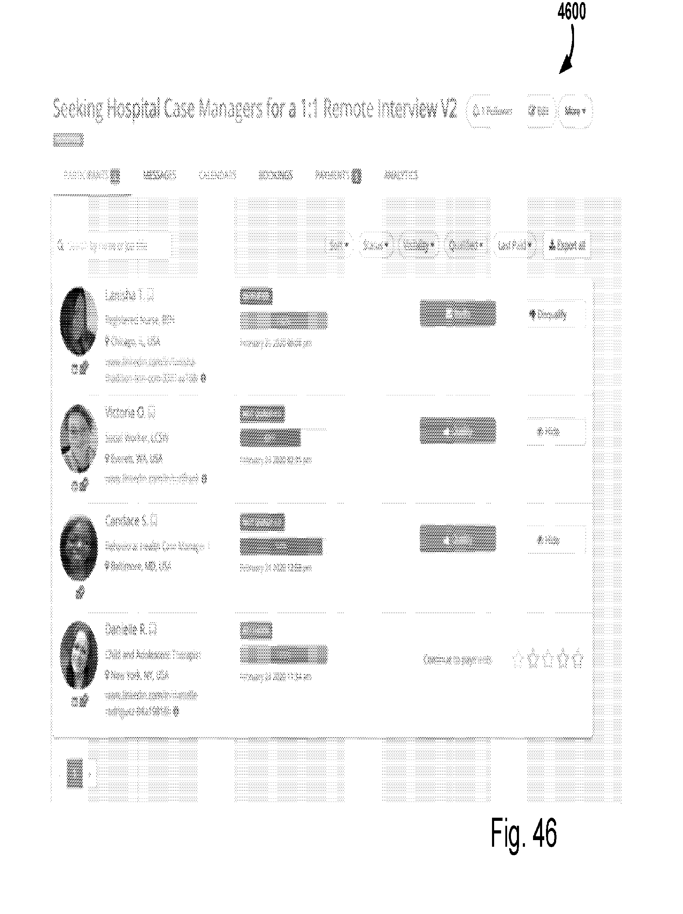

After a possible participant has expressed interest in the study, they are subjected to an initial screening (not illustrated). After initial screening the study author is able to review possible participants and select them for invitation and additional screening. Figures 45 and 46 illustrate this process for selection of participants for a moderated study. In Figure 46, individuals who have undergone screening are displayed in order of suitability for the study based upon their demographics, screening questions, and eligibility criteria, as seen at 4600. The percentage of qualification criteria is displayed, and those that are fully qualified may be provided an invitation to join the study. Those that are close to meeting the full qualification requirements, but do not hit all qualification criteria are able to be manually qualified by the study author.

Any participant may be selected for a detailed look at their screened profile, as seen at 4500 of Figure 45. Here the categories that match the criteria are illustrated, the time and when the screening questions were completed are likewise displayed. The question answers are individually listed as well for reference.

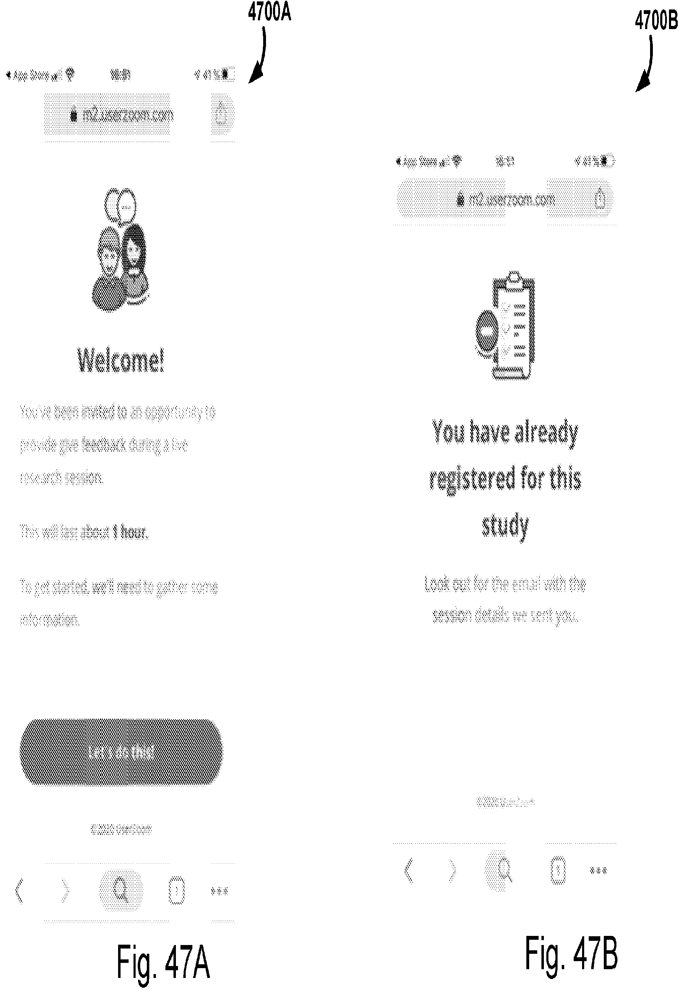

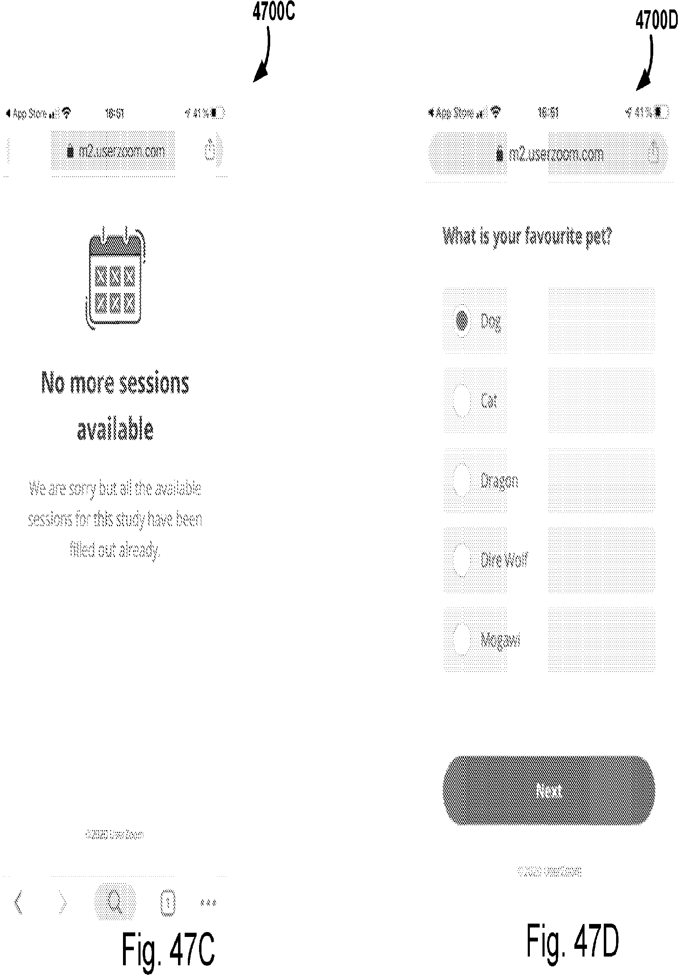

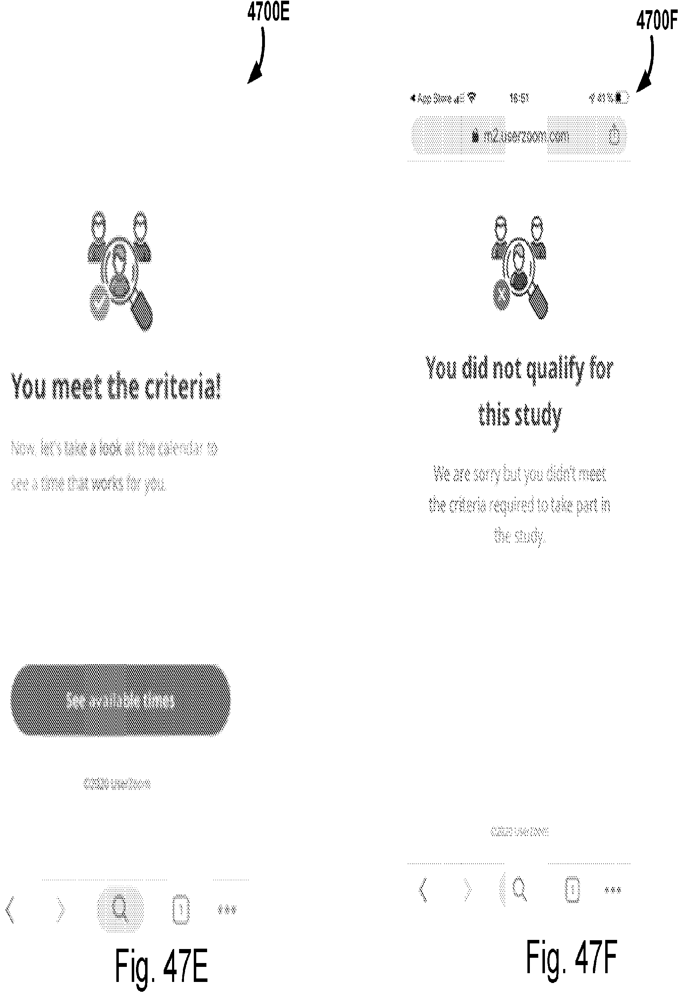

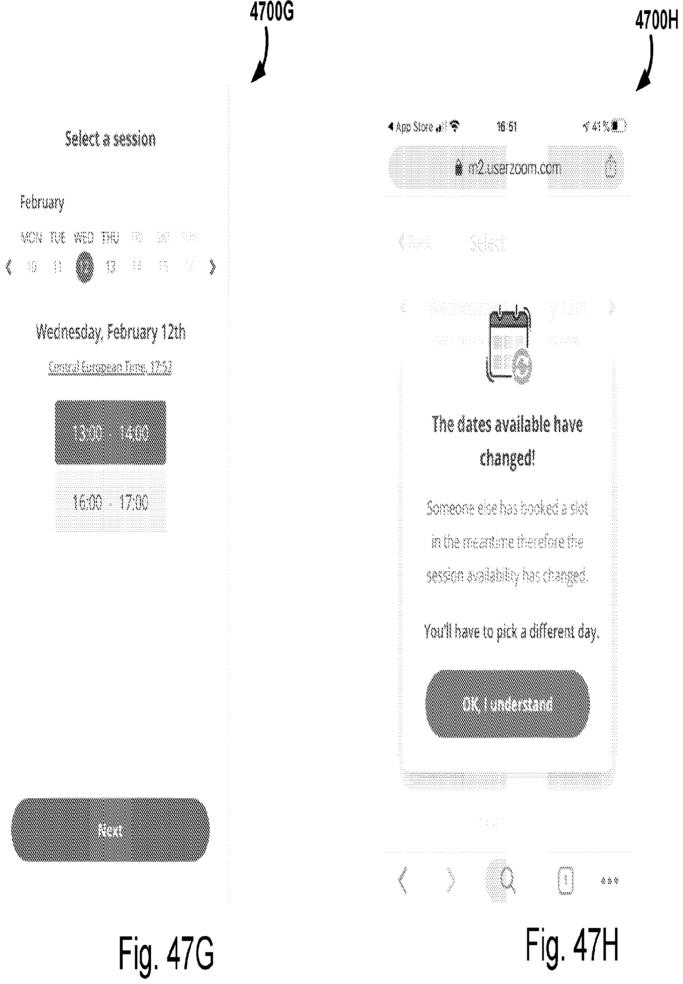

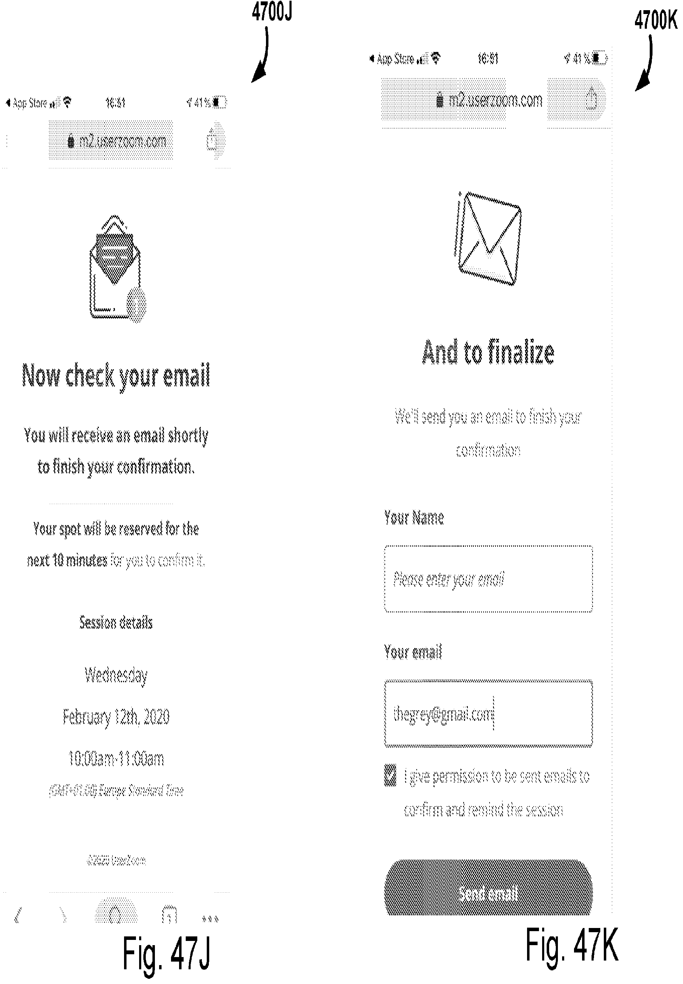

After a participant is selected for the study they may be invited for additional screening and scheduling. Figures 47A-K illustrate this invitation process. Initially the potential participant is presented with an invitation link, as seen at 4700A of Figure 47. Once selected the user may be displayed various interfaces based upon their history. For example, if they have already registered for the session, a reminder interface to check their email is provided, as seen at 4700B of Figure 47B. Alternatively, if the study has since been filled, the participant may be displayed a notification screen to that effect, as seen at 4700C of Figure 47C. However, if these are still session slots available, the potential participant may be presented with yet additional screening questions. These questions may be a single selection question, as seen at 4700D of Figure 47D, or may include multiple choice questions, dropdown menu questions, searchable answer questions, or even free text questions (not illustrated).

If the participant meets these additional eligibility requirements, they may be forwarded to a congratulatory screen with the option to view available times for the study, as seen at4700E of Figure 47E. Alternatively, the potential participant may be informed that they were not eligible for the study, as seen at 4700F of Figure 47F. Assuming, however, that the participant is eligible, they are redirected to a scheduling screen where days and times of available sessions are displayed, as seen at 4700G of Figure 47G. Upon selection of an available time, the user is presented with a rejection screen if the slot was filled in the interim, as seen at 4700H of Figure 47H, or the user may receive the given time slot and be requested to check their email to provide confirmation of the selected time slot, as seen at 4700J of Figure 47J. The user finalizes by inserting their name and email for this confirmation, as seen at 4700K of Figure 47K.

After setting up the participant selection requirements, the study author is again redirected to building out of the study. The author is first required to generate a welcome page for the participants to first see. This welcome page may be generated from scratch by the author or may be leveraged from another project.

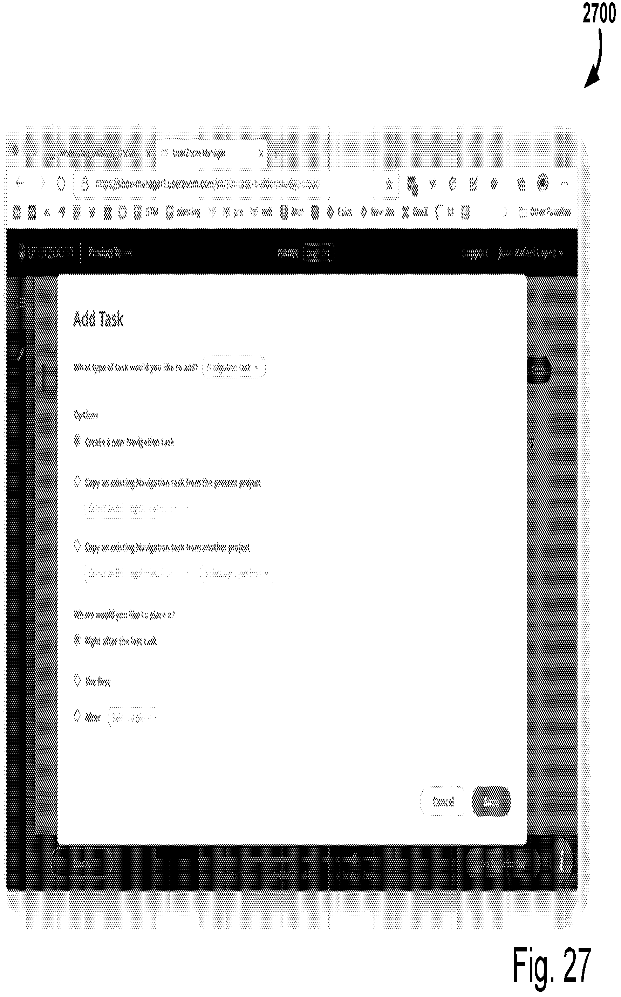

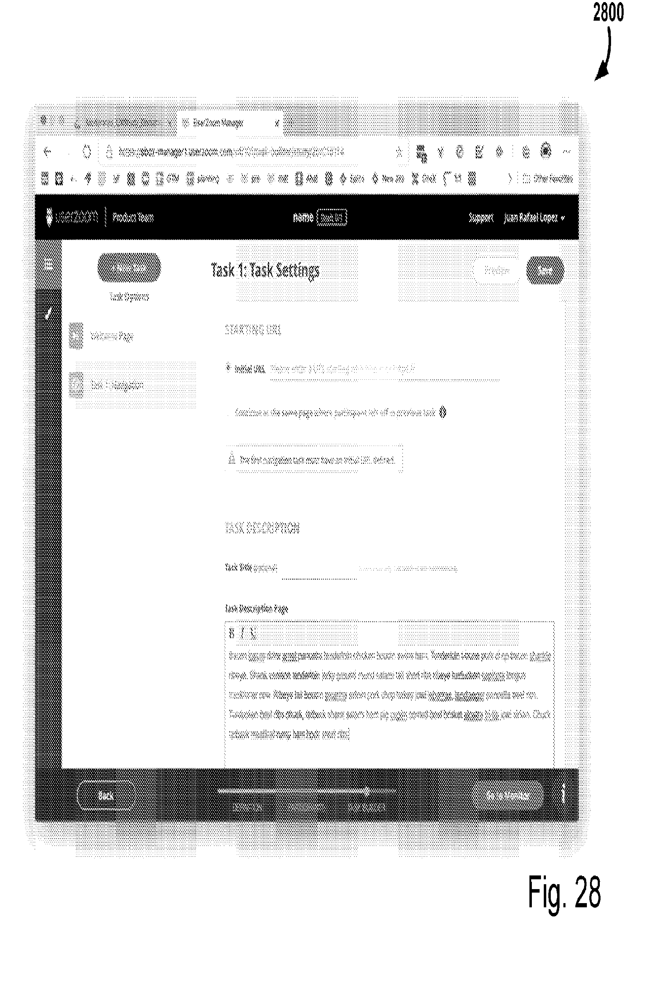

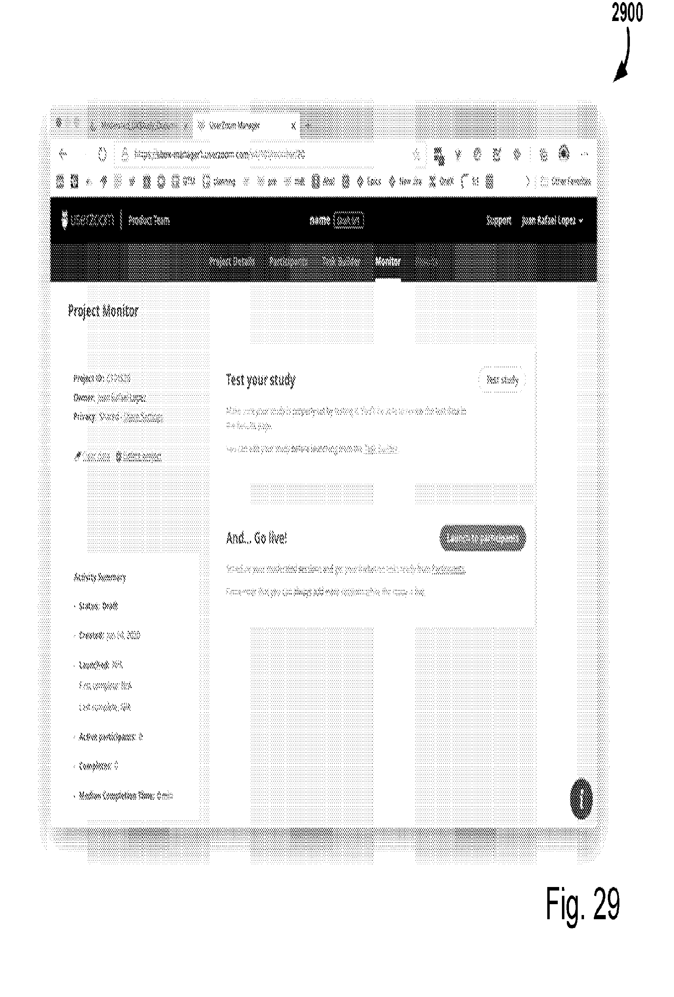

Subsequent to configuration of the welcome screen, the author is tasked with building out the tasks. Figures 27 and 28 provide an example of the screens 2700 and 2800 that are used to generate the study. The author inputs in a task description, including uploading an image for the click test study, determining if any specific actions are mandatory for the participants to do, as well as additional interface options (such as task bar visualization, various button options to the participant, etc.). After tasks have been configured, the author is capable of testing the study, or administering the test, as seen at 2900 of Figure 29.

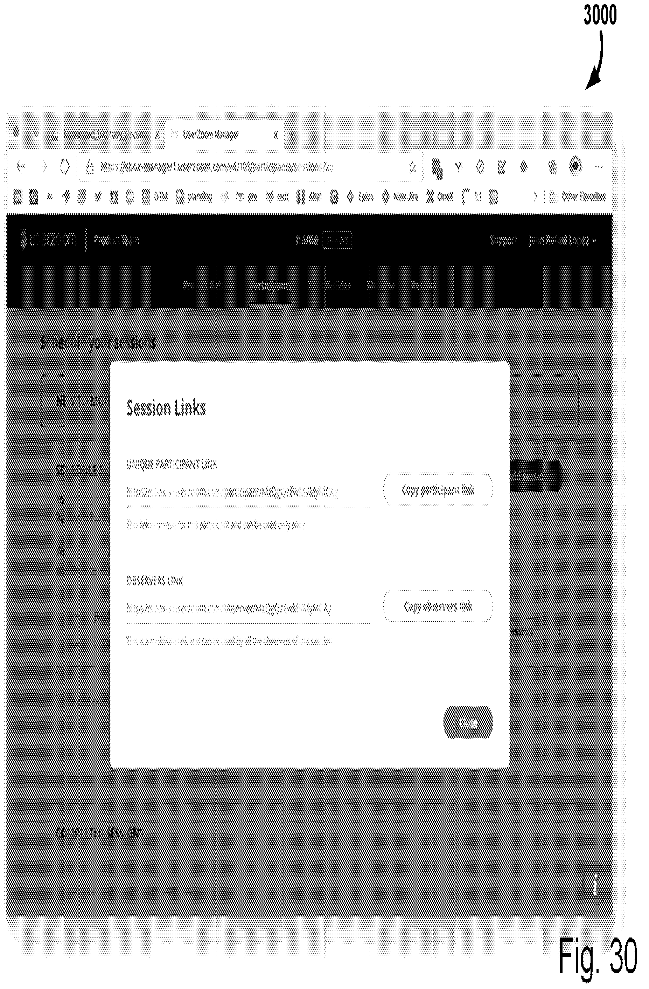

For moderated sessions, the participants are given a unique link to the session. In contrast, the observers are given a shared link to access the observer only side of the study, as seen at 3000 of Figure 30.

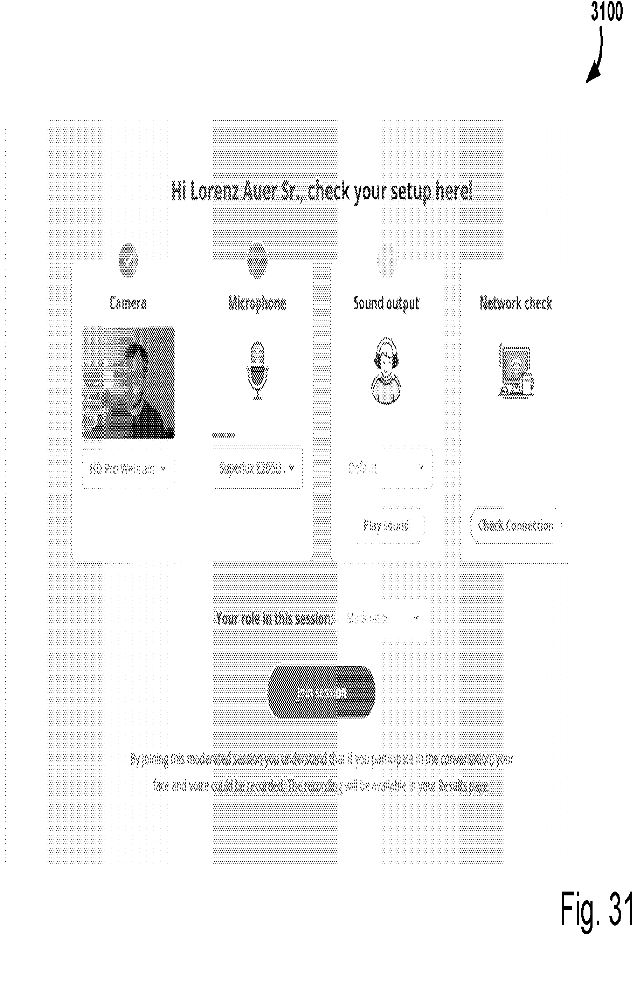

Once the study is active, the participant is initially asked to check their system setup in advance of the actual session, which is then presented to the moderators and note-takers as seen at 3100 of Figure 31. The purpose of this system check is to resolve any technical difficulties in advance of the session. As previously noted, moderated sessions may be resource intensive, and therefore having the session be efficient is of benefit to the company engaging in the study.

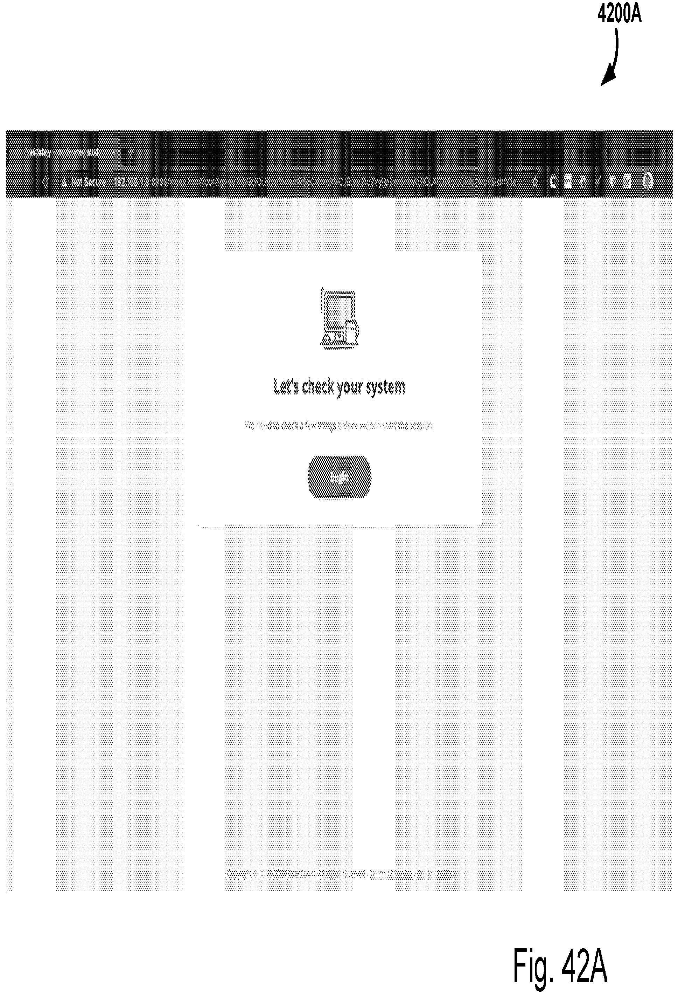

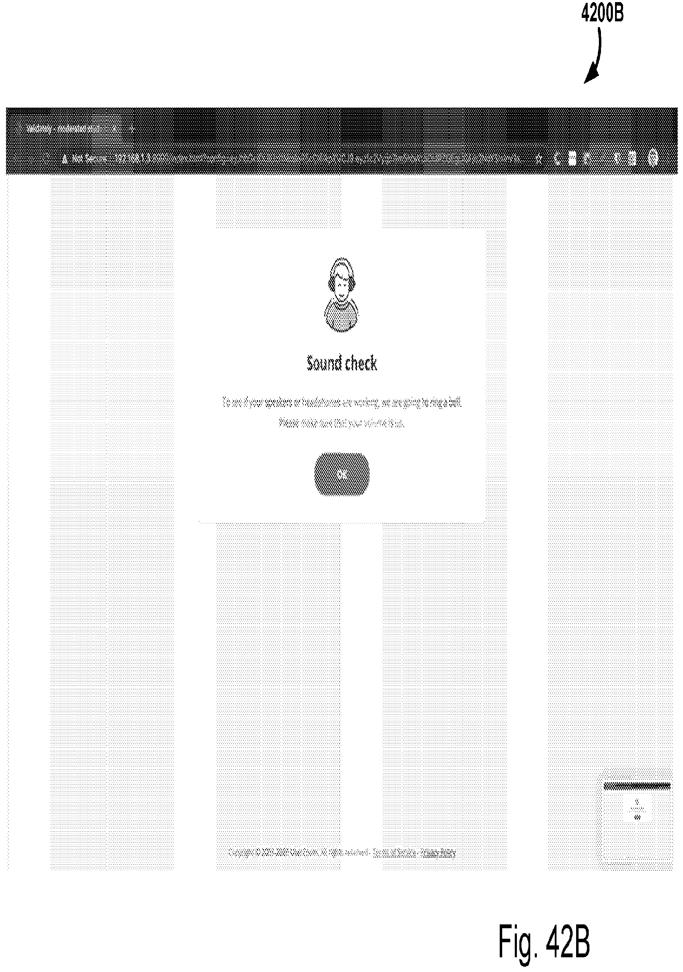

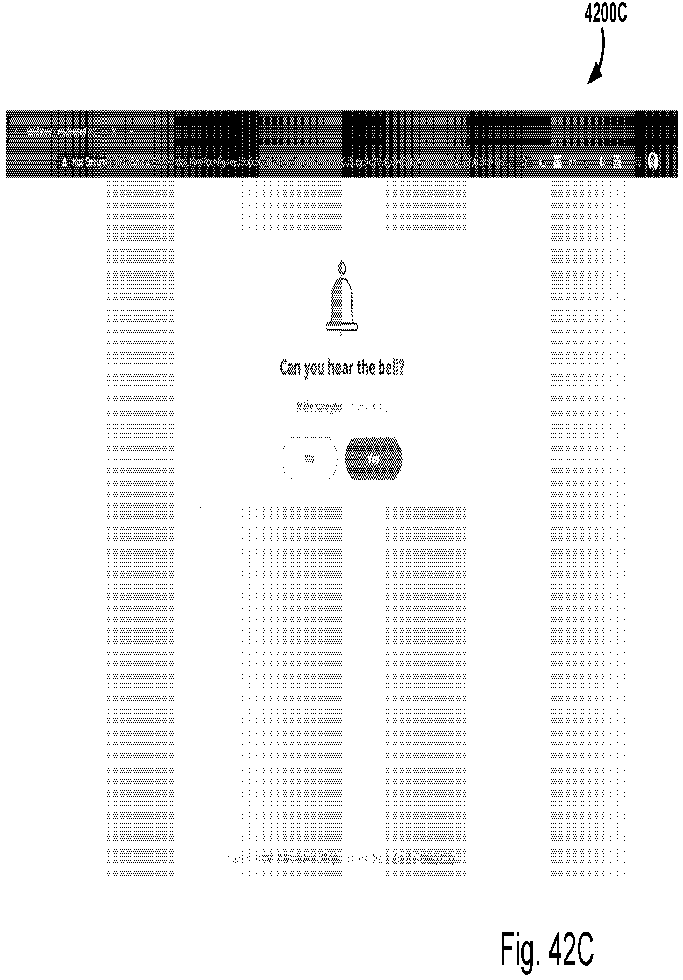

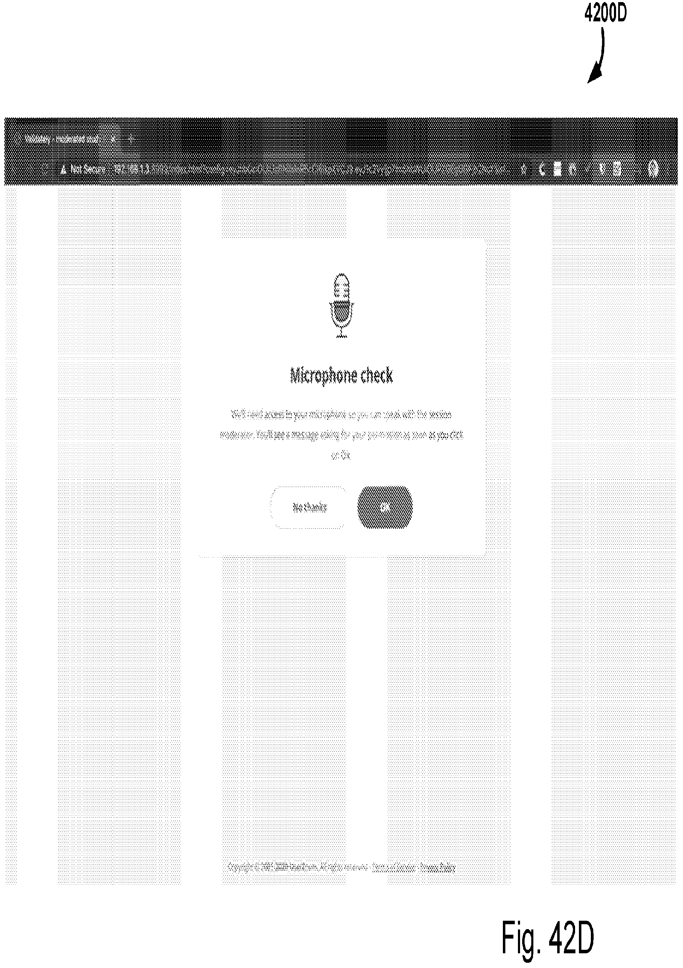

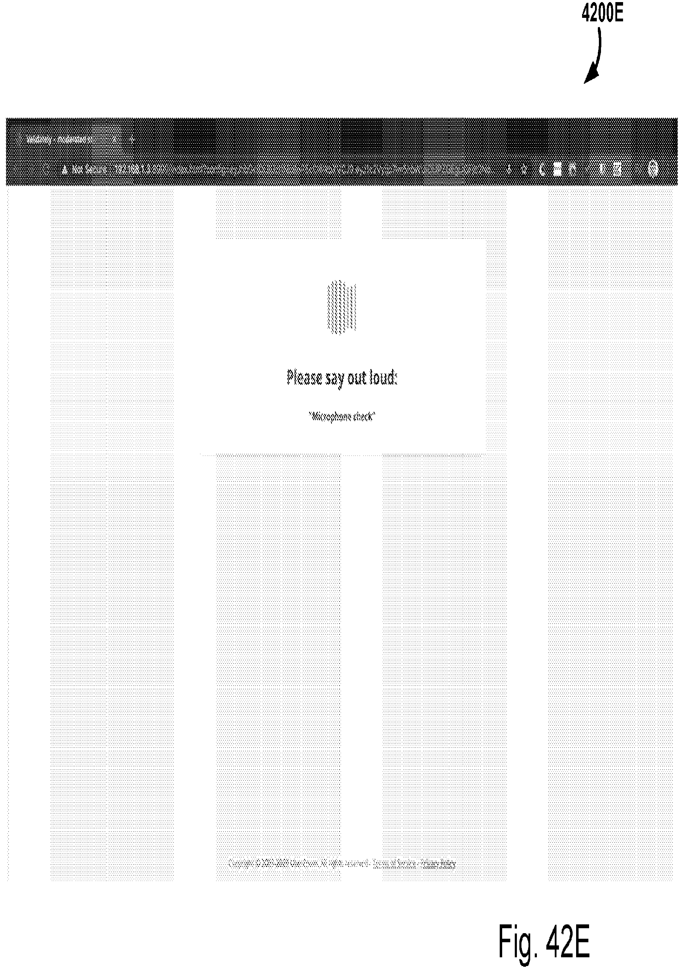

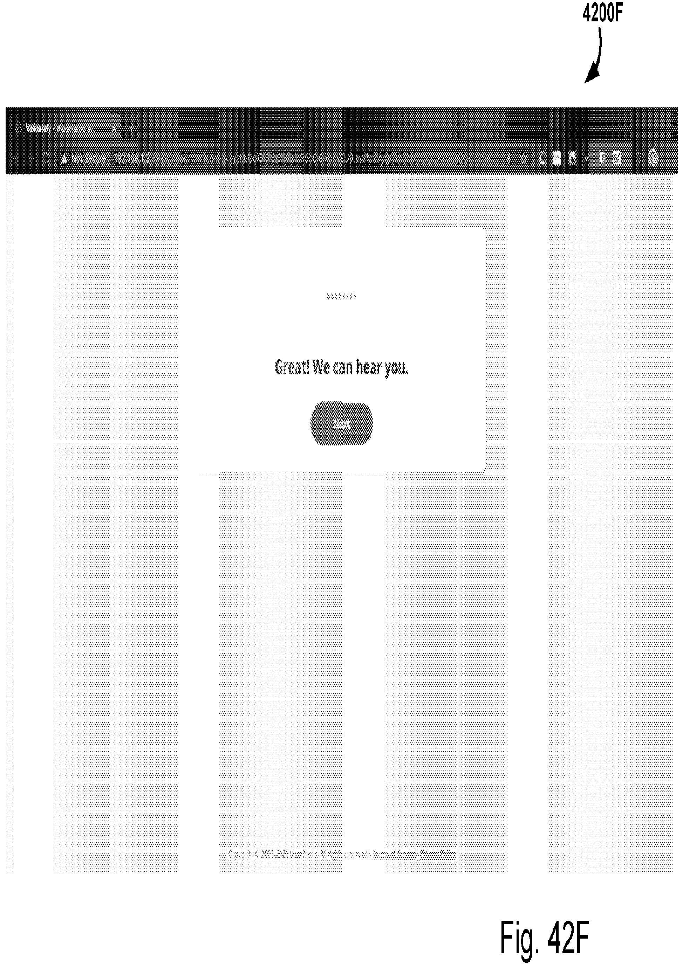

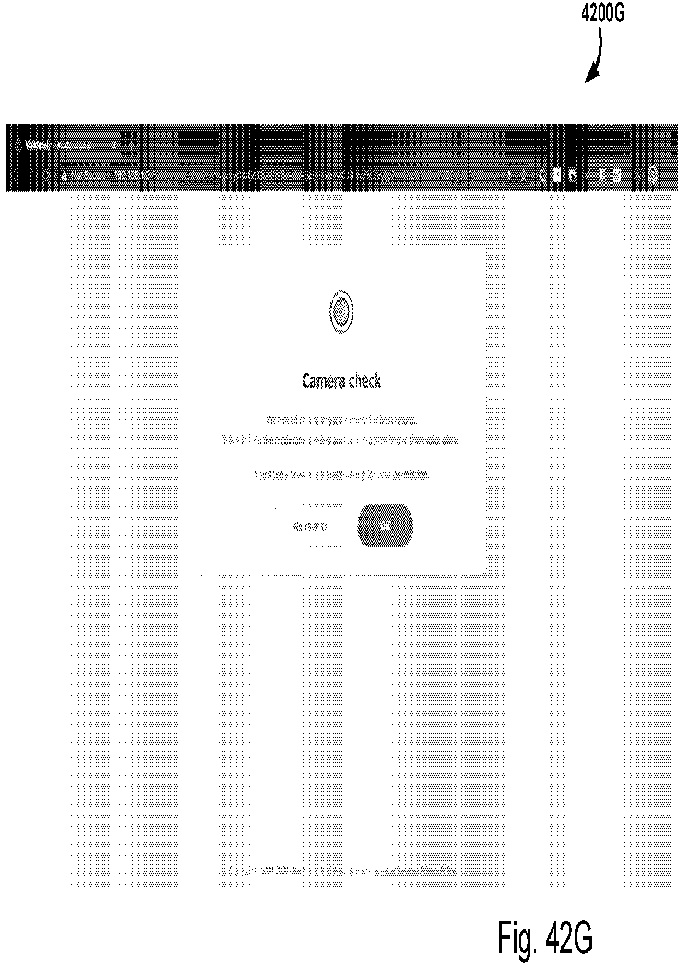

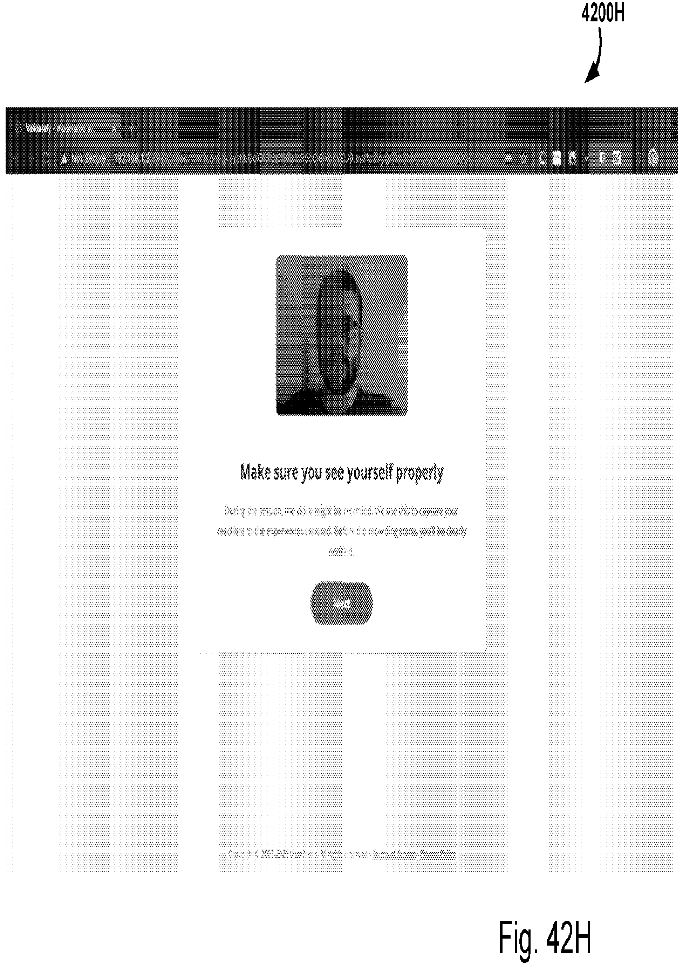

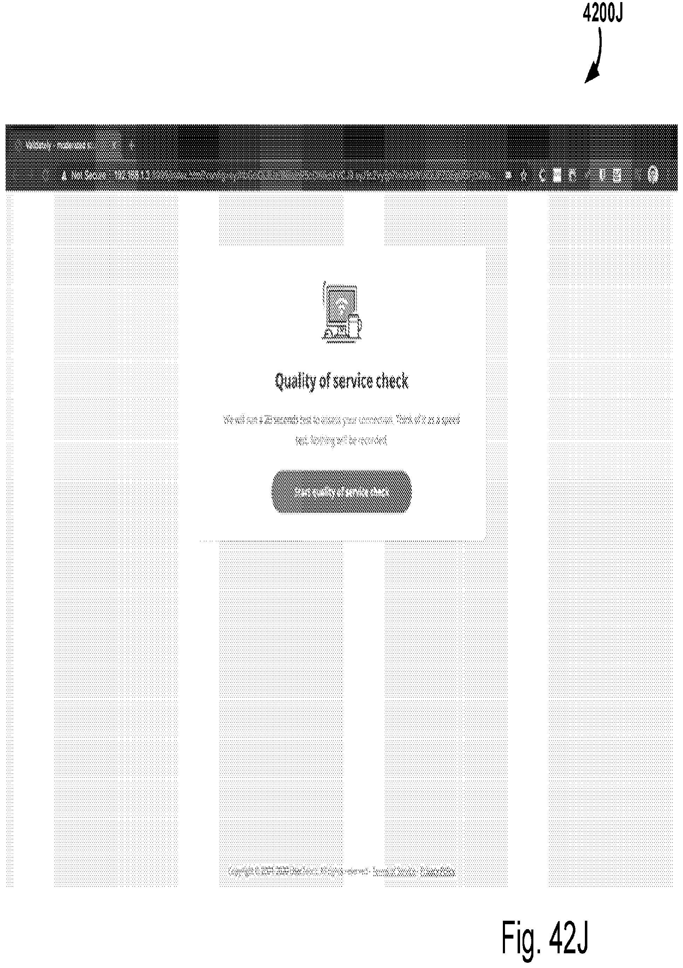

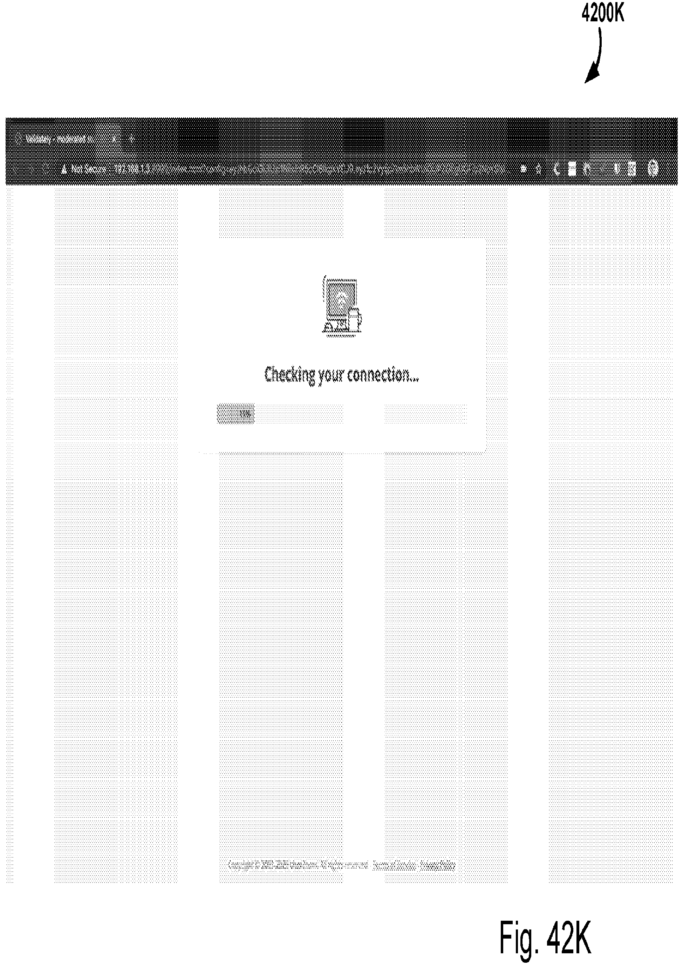

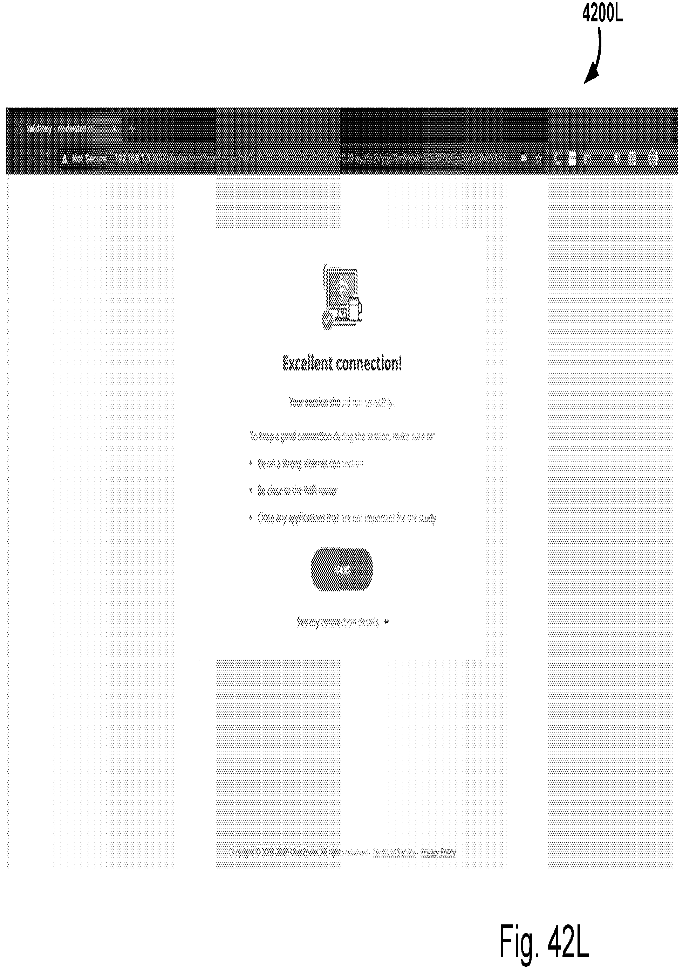

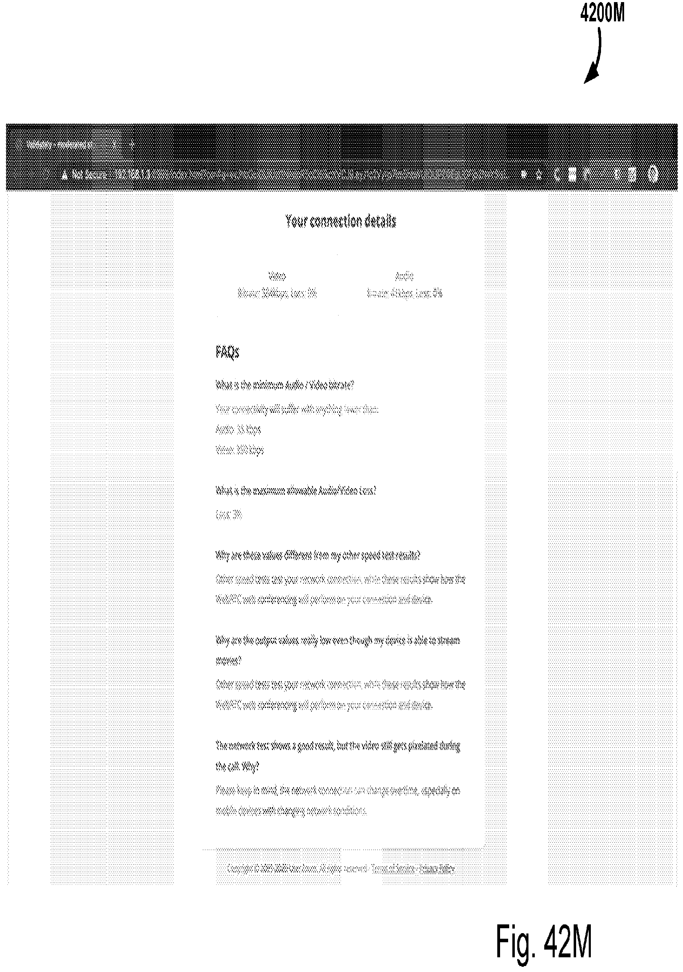

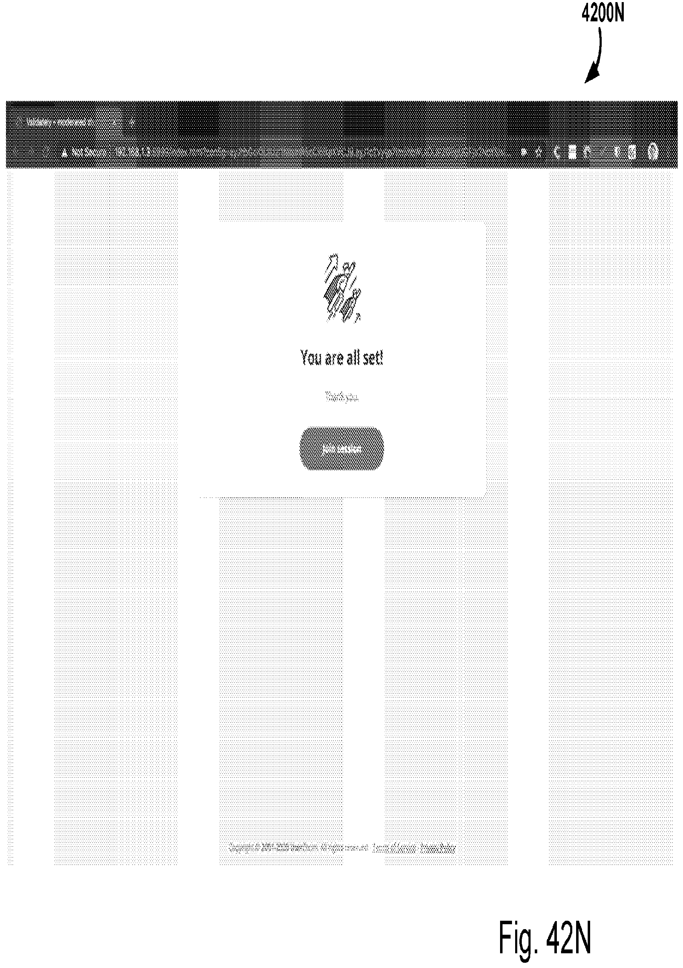

Figures 42A-N provide greater detail of this systems check process. The participant is initially shown a welcome screen for the system check, as seen at 4200A of Figure 42. The participant is then directed to a sound check, as seen at 4200B of Figure 42B. The sound check involves the participant being played a sound (here a bell) and responding if the sound was properly heard, as seen at Figure 4200C of Figure 42C. Subsequently a microphone check may be completed, as seen at 4200D of Figure 42D. Here the participant is requested to recite a phrase, as seen at 4200E of Figure 42E. If the system picks up the phrase the system confirms the microphone is operating correctly, as seen at 4200F of Figure 42F. In alternative embodiments, the system may do an initial self check of both the speakers and microphone by emitting a series of tones that are within the normal speaking pitches. The microphone registers the tones, and thereby test both the speakers and microphone simultaneously. If there is an error in this self-test, the alternate testing methodology may be employed to pinpoint if the issue is speaker or microphone related (or both).

Subsequent to testing the audio, the system may engage in a camera check, as seen at 4200G of Figure 42G. Here the participant is asked if they are able to see themselves properly from the video feed, as seen at 4200H of Figure 42H. Next, the network connection is tested, as seen at 4200J of Figure 42J. In this check the system transmits pseudo packets of information back and forth between the participant's machine. These packets are analyzed for connection speed and errors/packet loss. This test process is illustrated at 4200K of Figure 42K. The results of the connection are presented to the participant at 4200L of Figure 42L. If the participant desires, she may view farther connection details, such as video and audio bitrates and losses. A set of FAQs may be presented along with this information, as seen at 4200M of Figure 42M. After all the testing has been performed, the system may present to the participant a with a closure screen that enables them to join the session, as seen at 4200N of Figure 42N.

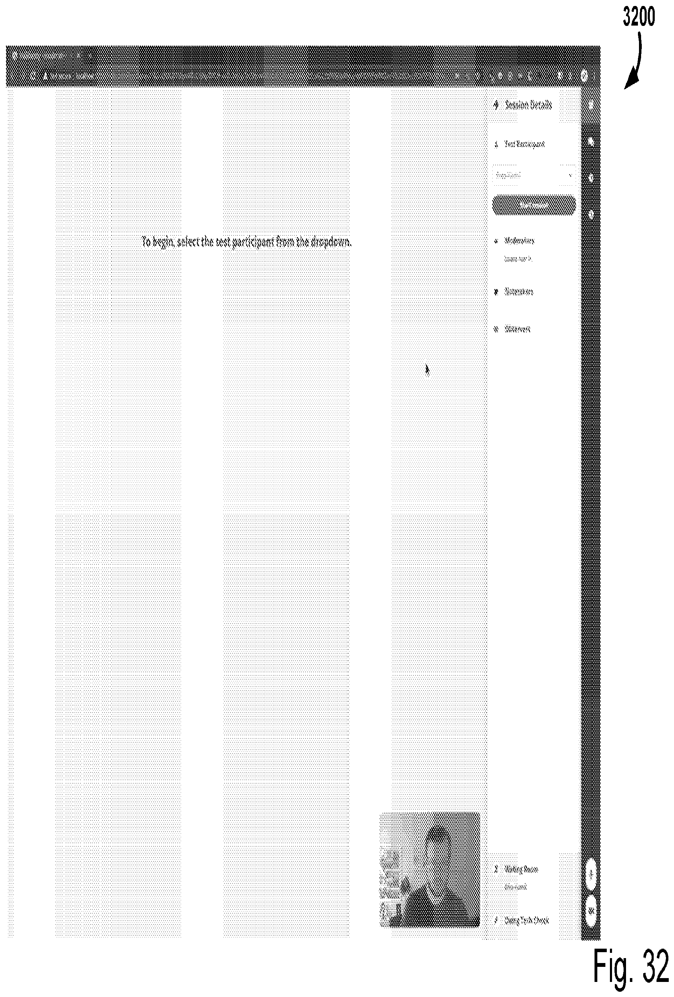

Returning to Figure 32, the moderator screen is shown within the session, seen at 3200. The moderator screen includes a thumbnail image of the moderator, which will be visible to the participant. A screen of session details is also provided, including participants, observers, note takers, and additional moderators that are present in the session. Often there may be multiple participants queued for a given study. This allows for redundancy in the case a participant has connection issues or is otherwise unavailable.

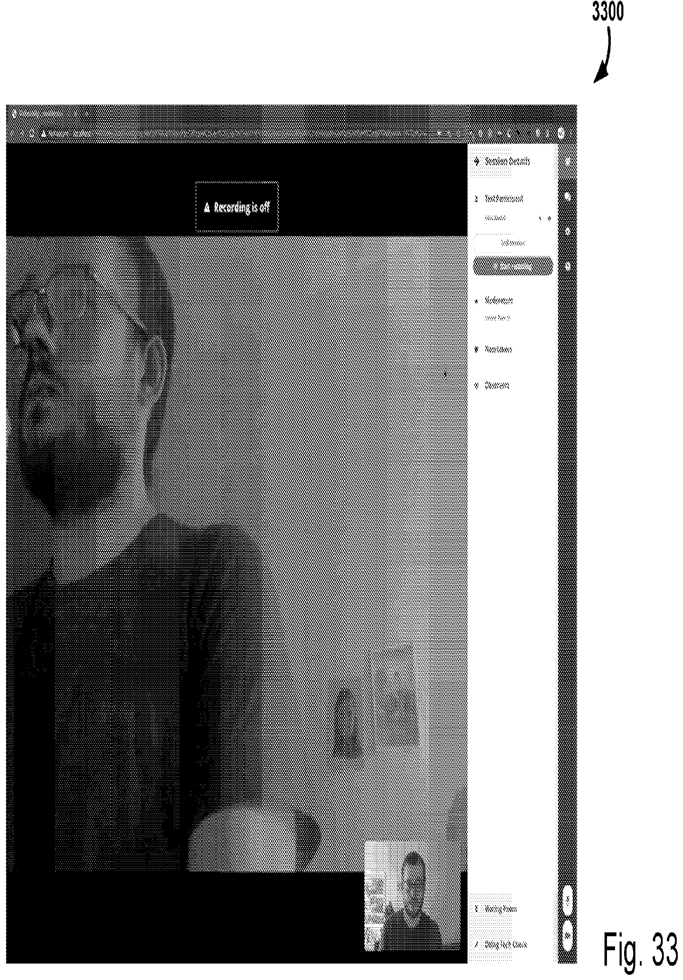

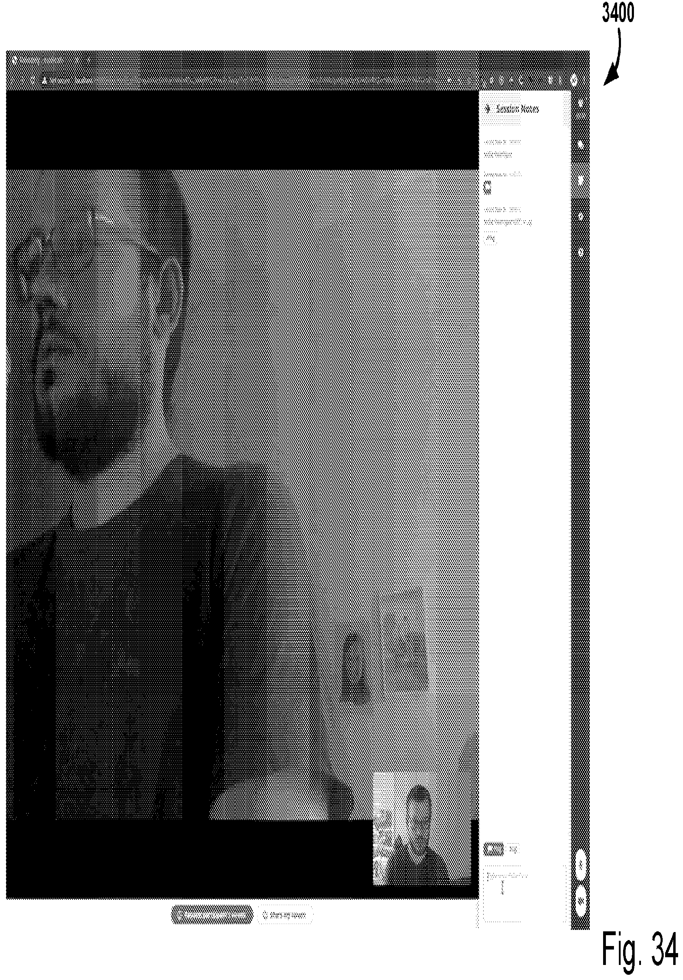

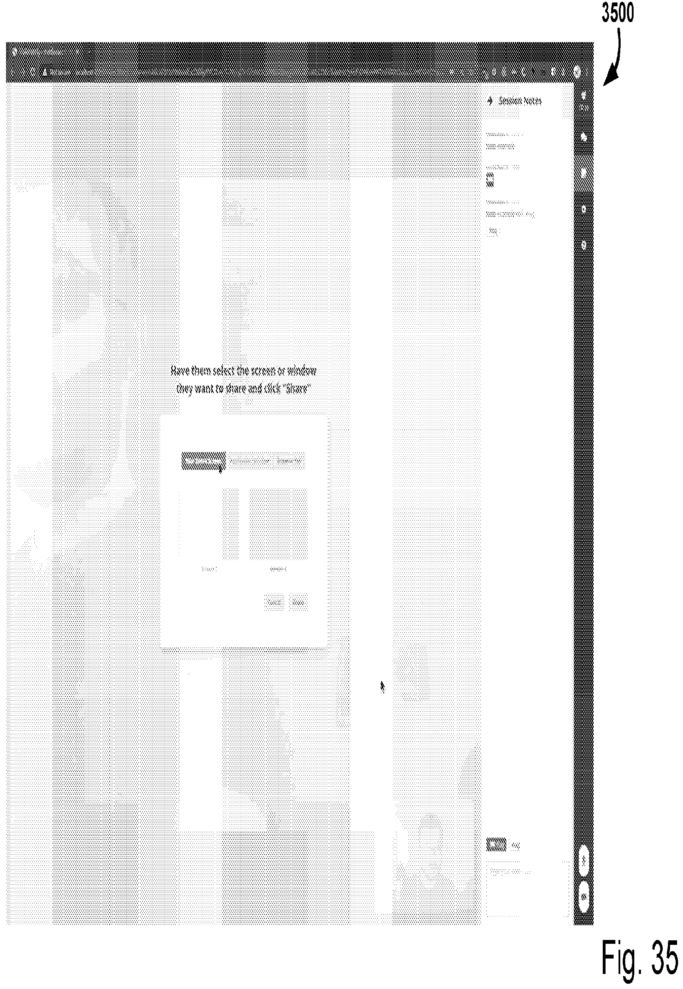

Once the participant has been selected, the participant's video feed is presented on the main screen, as seen at 3300 at Figure 33. At this stage (referred to as the pre-session) the participant and moderator are not being recorded. The moderator is able, however, to openly communicate with the participant. Once recording starts, the session notes are enabled, as seen at 3400 of Figure 34. The moderator is then given the ability to request from the participant what screen or window of theirs they would like to be shared, as seen at 3500 of Figure 35.

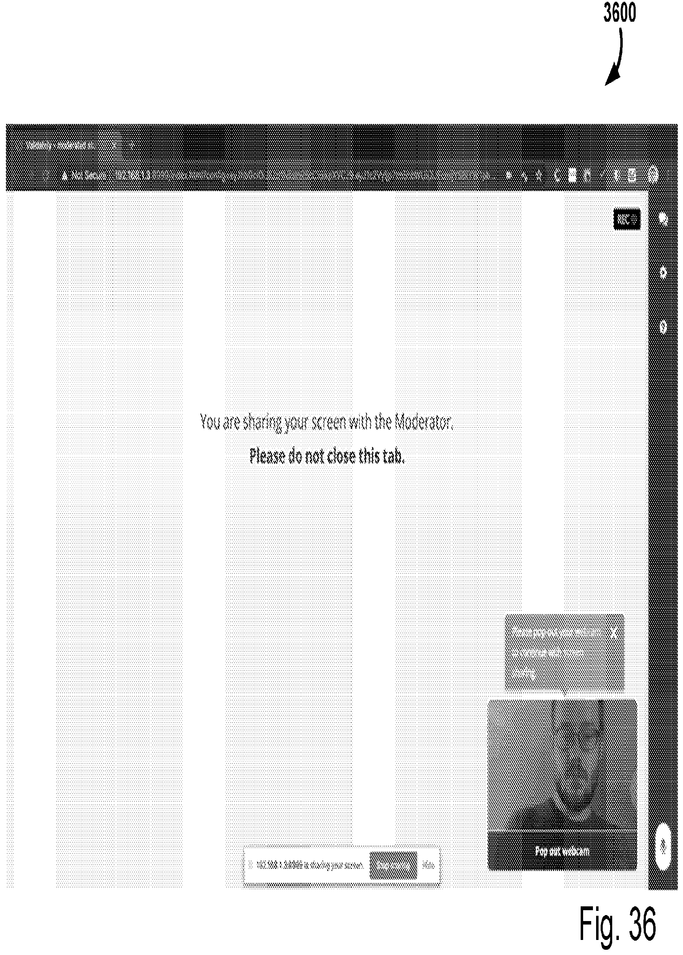

Once the participant enables the sharing of their screen, they are presented a notification of sharing their screen, as seen at 3600 of Figure 36. One unique function of the present system is that all displayed content on the screen is embedded together to generate a single video screen. Thus, the thumbnail images, any shared content, and the like are compiled locally to a single video file that can be transmitted at lower bandwidth requirements as compared to separate video streams.

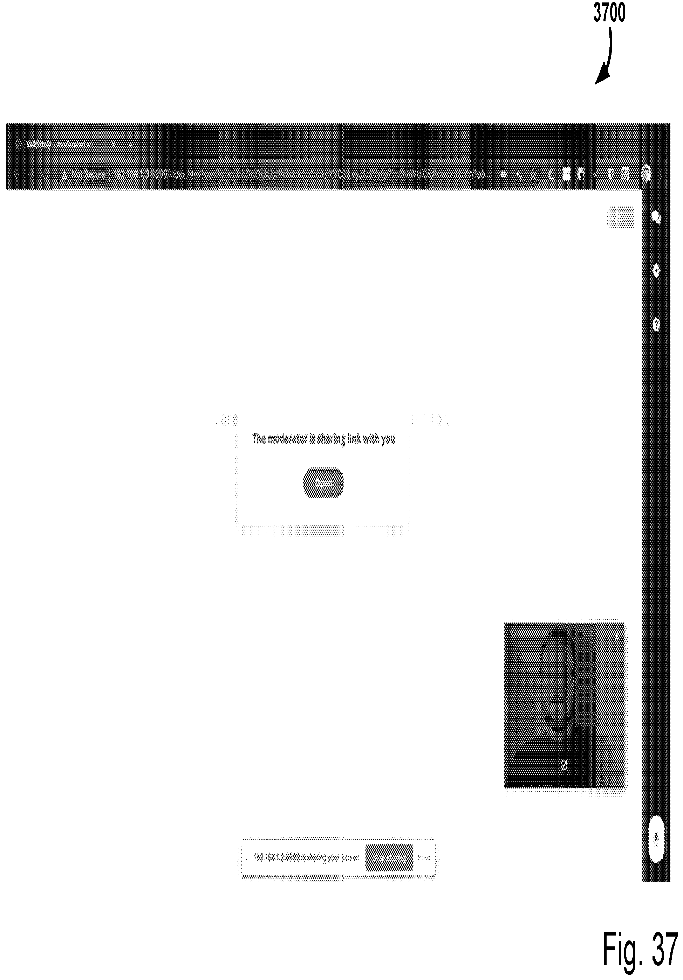

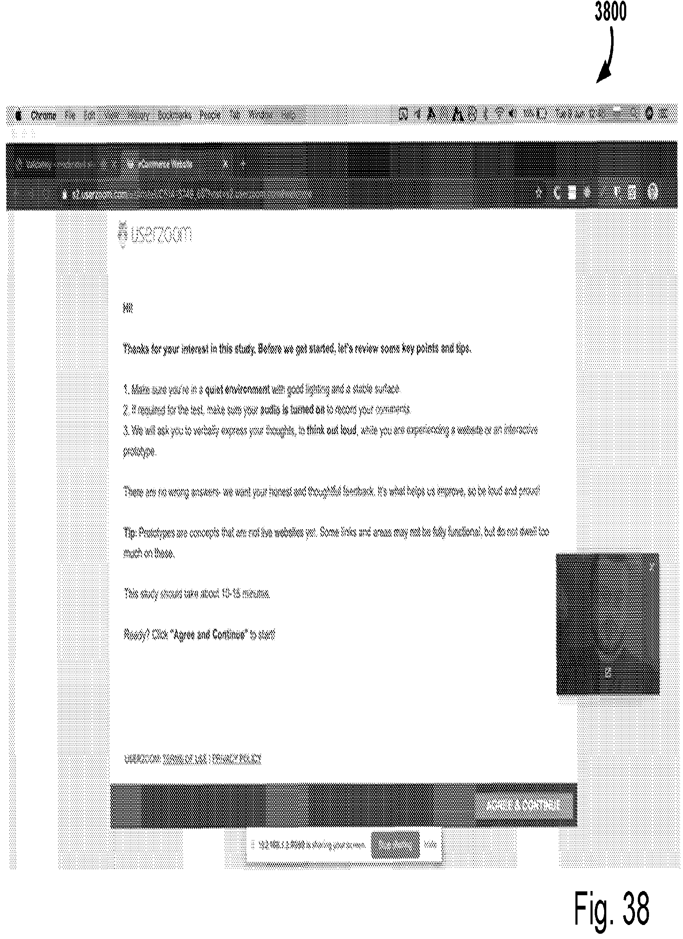

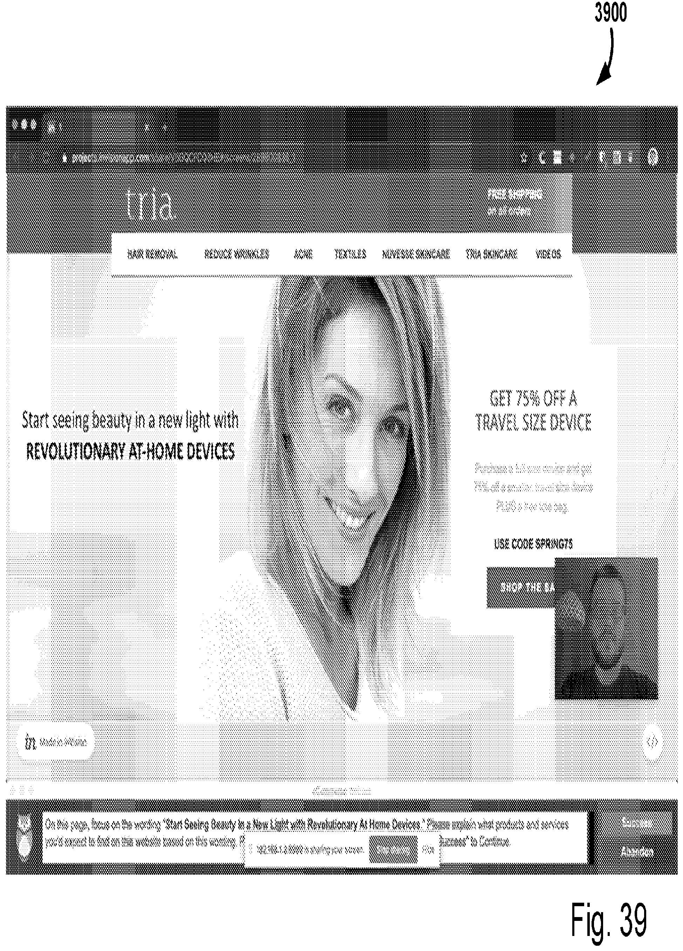

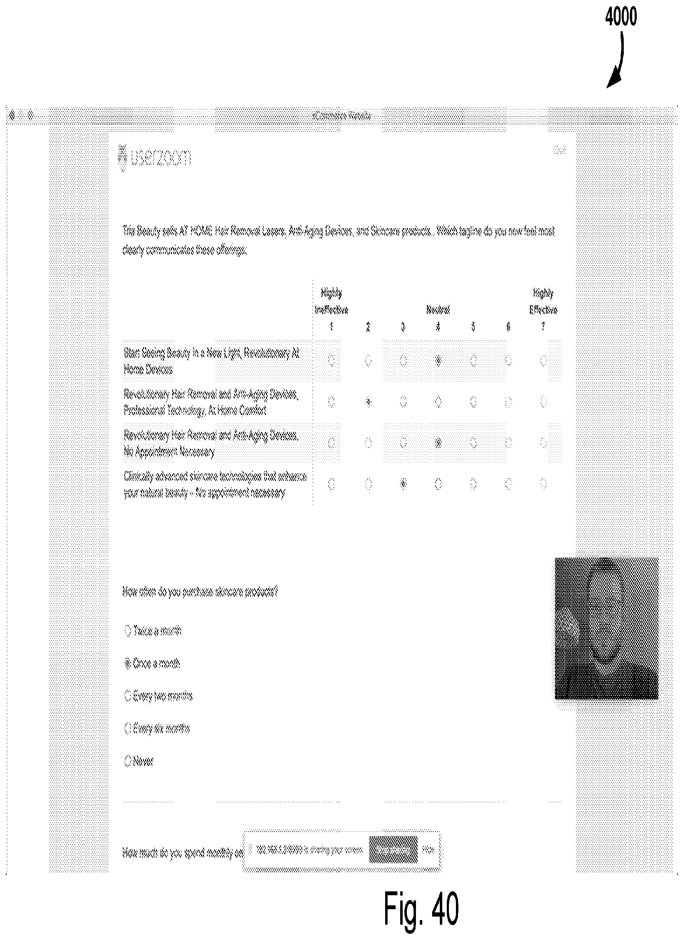

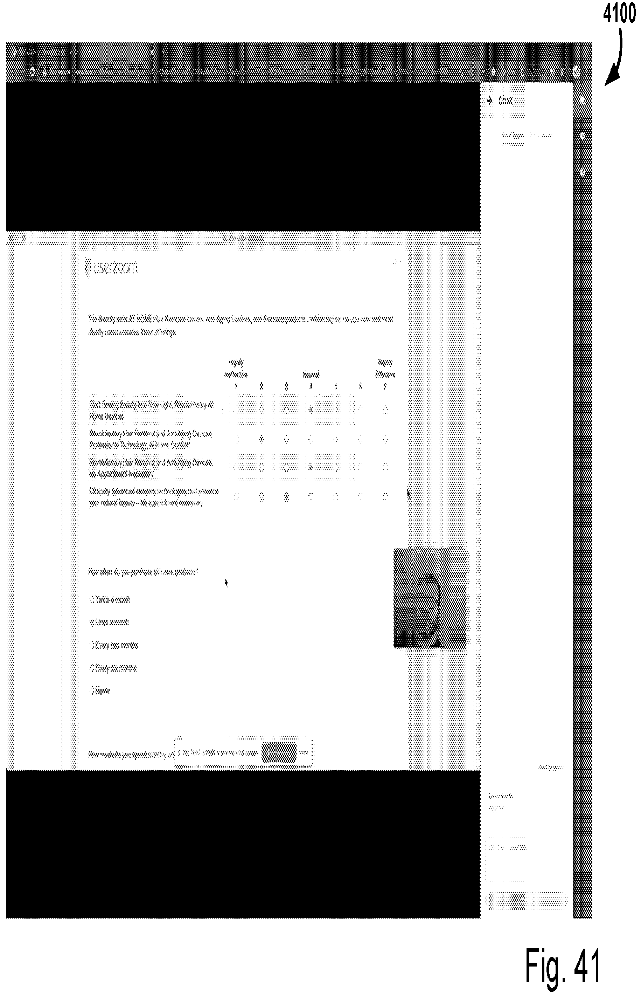

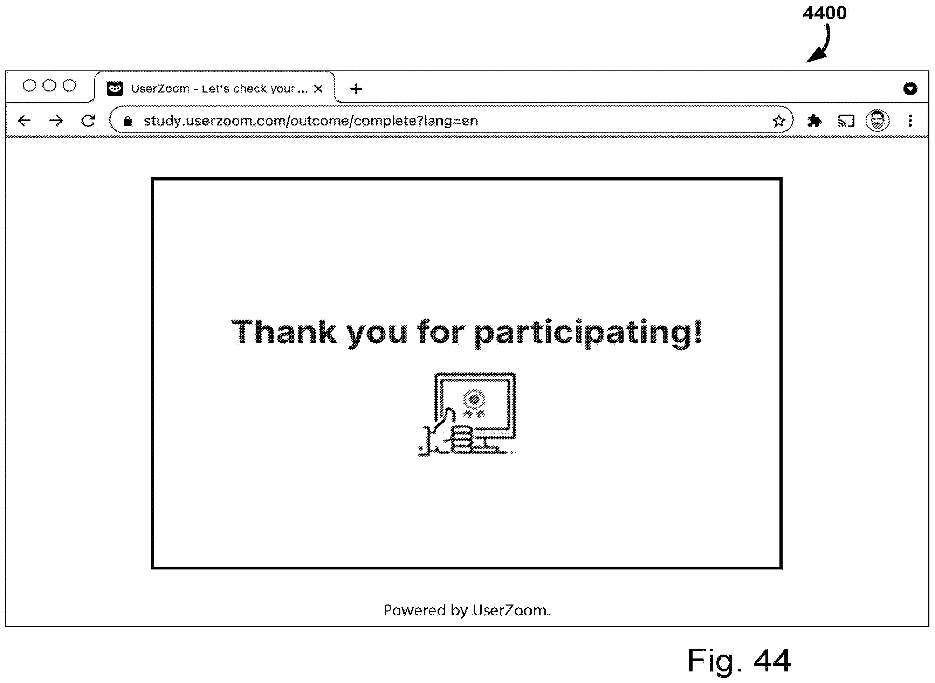

After sharing the screen, the moderator may share the unique session link with the participant, as seen at 3700 of Figure 37. Once opened, the participant is transferred directly to the study. This includes, generally, displaying a welcome page to the participant, as seen at 3800 of Figure 38. At this stage, the participant is asked to agree to the terms and conditions before continuing. The participant is then transferred to the study screen, as seen at 3900 of Figure 39. Again, the video thumbnail of the participant is shown overlaid on the study window, and when transmitted is embedded into a single video data stream to minimize bandwidth requirements. The user is asked to answer questions, navigate on the screen, click somewhere based upon a prompt, or some other user experience testing activity. The user may also be asked to complete a set of questions regarding the study or the webpage, as seen for example at 4000 of Figure 40. During this entire process the user's image, reactions, and audio are recorded and are available to the moderator, note takers, and observers. In some advanced systems, the entire session may also be analyzed in real time by neural network algorithms to identify emotions based upon facial expressions and/or voice pitch. These emotions may be flagged in real time for follow-up by the moderator, and or may be annotated into the recording for later analysis. Lastly, Figure 41 illustrates an interface where the chat functionality is enabled between the internal team, or directly with the participant, as seen at 4100. After the structured portion of the study has ended, the moderator may optionally end the screen sharing. The moderator may also select to end recording. Lastly the moderator may select the option to actually end the session entirely. Regardless, upon structured study completion, a thank you screen is presented to the participant, as seen at 4400 of Figure 44.

Moving on, after participants complete the study, the study author may analyze results. First, the author is presented with a summary of the study results, including percent successful completion, the timing of the study, the average number of clicks taken (in the event of a click test), and the number of participants that engaged in the study, and the like.

Additional analysis is likewise possible. In the results tab (not illustrated), the author can view graphs about study success ratings, and the percentage of successful studies. The user may alter the view between various histograms, pie graphs, and with or without confidence levels. Further, more granular analysis is possible. For example, per participant metrics may be viewed. The participants are each displayed in relation to the time taken on the task, the number of total actions made by the individual, and the time to the action and/or study completion. The study author may be able to configure the fields displayed. The analysis options available depend heavily upon the type of study undertaken.

Some portions of the above detailed description may be presented in terms of algorithms and symbolic representations of operations on data bits within a computer memory. These algorithmic descriptions and representations are the means used by those skilled in the data processing arts to most effectively convey the substance of their work to others skilled in the art. An algorithm is, here and generally, conceived to be a self-consistent sequence of operations leading to a desired result. The operations are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

The algorithms and displays presented herein are not inherently related to any particular computer or other apparatus. Various general-purpose systems may be used with programs in accordance with the teachings herein, or it may prove convenient to construct more specialized apparatus to perform the methods of some embodiments. The required structure for a variety of these systems will appear from the description below. In addition, the techniques are not described with reference to any particular programming language, and various embodiments may, thus, be implemented using a variety of programming languages.

In alternative embodiments, the machine operates as a standalone device or may be connected (e.g., networked) to other machines. In a networked deployment, the machine may operate in the capacity of a server or a client machine in a client-server network environment or as a peer machine in a peer-to-peer (or distributed) network environment.

The machine may be a server computer, a client computer, a virtual machine, a personal computer (PC), a tablet PC, a laptop computer, a set-top box (STB), a personal digital assistant (PDA), a cellular telephone, an iPhone, a Blackberry, a processor, a telephone, a web appliance, a network router, switch or bridge, or any machine capable of executing a set of instructions (sequential or otherwise) that specify actions to be taken by that machine.

While the machine-readable medium or machine-readable storage medium is shown in an exemplary embodiment to be a single medium, the term "machine-readable medium" and "machine-readable storage medium" should be taken to include a single medium or multiple media (e.g., a centralized or distributed database, and/or associated caches and servers) that store the one or more sets of instructions. The term "machine-readable medium" and "machinereadable storage medium" shall also be taken to include any medium that is capable of storing, encoding or carrying a set of instructions for execution by the machine and that cause the machine to perform any one or more of the methodologies of the presently disclosed technique and innovation.

In general, the routines executed to implement the embodiments of the disclosure may be implemented as part of an operating system or a specific application, component, program, object, module or sequence of instructions referred to as "computer programs." The computer programs typically comprise one or more instructions set at various times in various memory and storage devices in a computer, and when read and executed by one or more processing units or processors in a computer, cause the computer to perform operations to execute elements involving the various aspects of the disclosure.

Moreover, while embodiments have been described in the context of fully functioning computers and computer systems, those skilled in the art will appreciate that the various embodiments are capable of being distributed as a program product in a variety of forms, and that the disclosure applies equally regardless of the particular type of machine or computerreadable media used to actually effect the distribution

While this invention has been described in terms of several embodiments, there are alterations, modifications, permutations, and substitute equivalents, which fall within the scope of this invention. Although sub-section titles have been provided to aid in the description of the invention, these titles are merely illustrative and are not intended to limit the scope of the present invention. It should also be noted that there are many alternative ways of implementing the methods and apparatuses of the present invention. It is therefore intended that the following appended claims be interpreted as including all such alterations, modifications, permutations, and substitute equivalents as fall within the scope of the present invention.

## Claims

1. A computer-implemented method for a moderated user experience study comprising:
identifying at least one participant;
scheduling the at least one participant for an available study time;
testing the participant system to determine eligibility;
wherein the system testing includes testing a microphone, a speaker, a camera and network quality; and the eligibility is determined by a functioning microphone, functioning speaker, functioning video camera, device, operating system, browser, a network connection bit stream over a set threshold, and a packet loss under a second threshold;
selecting an eligible participant to join the study;
sharing a screen of the eligible participant with a moderator;
presenting a task to the eligible participant along with interjections from the moderator;
recording the eligible participant as the task is performed.

2. The computer-implemented method of claim 1, wherein the participant identification comprises:
presenting the moderated study to a pool of applicants;
screening a subgroup of the applicants that express interest in the moderated study to generate a group of qualified individuals;
extending an invitation with additional screening questions to at least one of the qualified individuals; and
selecting at least one participant from the invited qualified individuals.

3. The computer-implemented method of claim 1, wherein scheduling the at least one participant comprises
setting a maximum number of sessions in a day;
setting an interval length for the sessions;
setting a minimum booking notice; and
setting time buffer in between sessions,
enabling a capability to cancel and reschedule a session;
presenting a listing of available times to the at least one participant that matches the maximum number of sessions, interval length for the sessions, and minimum booking notice, which has not already been booked by another participant.

4. The computer-implemented method of claim 1, wherein the task includes at least one of a navigation activity, a questionnaire, a click test, and a card sorting activity.

5. The computer-implemented method of claim 1, further comprising displaying a thumbnail video capture of the eligible participant over the shared screen as the task is being performed; embedding the thumbnail video into the shared screen image to generate a single aggregate data stream; and sharing the aggregate data stream with the moderator.

6. The computer-implemented method of claim 1, further comprising placing the eligible participant into a waiting room after the participant system has been tested.

7. The computer-implemented method of claim 1, further comprising sharing the screen with at least one observer and a note taker, wherein the eligible participant is unaware of the presence of the at least one observer and note taker, and enabling private communication between the moderator and at least one observer and note taker.

8. The computer-implemented method of claim 1, further comprising:
identifying at least one insight from the recording;
receiving a plurality of unmoderated study recordings:
analyzing the unmoderated study recordings in light of the at least one insight.

9. A computer program product comprising a set of computer program instructions which, when executed by a computer, cause the computer to execute the following steps:
identifying at least one participant;
scheduling the at least one participant for an available study time;
testing the participant system to determine eligibility;
wherein the system testing includes testing a microphone, a speaker, a camera and network quality; and the eligibility is determined by a functioning microphone, functioning speaker, functioning video camera, device, operating system, browser, a network connection bit stream over a set threshold, and a packet loss under a second threshold;
selecting an eligible participant to join the study;
sharing a screen of the eligible participant with a moderator;
presenting a task to the eligible participant along with interjections from the moderator; and
recording the eligible participant as the task is performed.

10. The computer program product of claim 9, wherein scheduling the at least one participant comprises
setting a maximum number of sessions in a day;
setting an interval length for the sessions:
setting a minimum booking notice; and
presenting a listing of available times to the at least one participant that matches the maximum number of sessions, interval length for the sessions, and minimum booking notice, which has not already been booked by another participant.

11. The computer program product of claim 9, further comprising the step of displaying a thumbnail video capture of the eligible participant over the shared screen as the task is being performed; the step of embedding the thumbnail video into the shared screen image to generate a single aggregate data stream; and the step of sharing the aggregate data stream with the moderator and at least one observer and note taker.

12. The computer program product of claim 9, wherein the system testing includes testing a microphone, a speaker, a camera and network quality.

## Patentansprüche

1. Computerimplementiertes Verfahren für eine moderierte Benutzererfahrungsstudie, umfassend:
Identifizieren von mindestens einem Teilnehmer;
Terminieren des mindestens einen Teilnehmers für einen verfügbaren Studientermin;
Testen des Teilnehmersystems, um eine Eignung zu bestimmen;
wobei das Systemtesten ein Testen eines Mikrofons, eines Lautsprechers, einer Kamera und einer Netzwerkqualität beinhaltet; und die Eignung durch ein funktionierendes Mikrofon, einen funktionierenden Lautsprecher, eine funktionierende Videokamera, eine Vorrichtung, ein Betriebssystem, einen Browser, einen Netzwerkverbindungs-Bitstrom oberhalb eines festgelegten Schwellenwerts und einen Paketverlust unterhalb eines zweiten Schwellenwerts bestimmt wird;
Auswählen eines geeigneten Teilnehmers, um an der Studie teilzunehmen;
Teilen eines Bildschirms des geeigneten Teilnehmers mit einem Moderator;
Präsentieren einer Aufgabe für den geeigneten Teilnehmer zusammen mit Einwürfen von dem Moderator;
Aufzeichnen des geeigneten Teilnehmers, während die Aufgabe durchgeführt wird.

2. Computerimplementiertes Verfahren nach Anspruch 1, wobei die Teilnehmeridentifizierung Folgendes umfasst:
Präsentieren der moderierten Studie einer Gruppe von Bewerbern;
Untersuchen einer Untergruppe der Bewerber, die Interesse an der moderierten Studie bekunden, um eine Gruppe qualifizierter Personen zu erzeugen;
Übermitteln einer Einladung mit zusätzlichen Untersuchungsfragen an mindestens eine der qualifizierten Personen; und
Auswählen von mindestens einem Teilnehmer aus den eingeladenen qualifizierten Personen.

3. Computerimplementiertes Verfahren nach Anspruch 1, wobei das Terminieren des mindestens einen Teilnehmers Folgendes umfasst Festlegen einer maximalen Anzahl von Sitzungen an einem Tag; Festlegen einer Intervalllänge für die Sitzungen;
Festlegen einer Mindestbuchungsfrist; und
Festlegen eines Zeitpuffers zwischen Sitzungen,
Befähigen einer Möglichkeit eine Sitzung abzusagen und neu zu terminieren;
Präsentieren einer Auflistung verfügbarer Termine an den mindestens einen Teilnehmer, die der maximalen Anzahl an Sitzungen, Intervalllänge für die Sitzungen und der Mindestbuchungsfrist entsprechen und die nicht bereits durch einen anderen Teilnehmer gebucht wurden.

4. Computerimplementiertes Verfahren nach Anspruch 1, wobei die Aufgabe mindestens eines von einer Navigationsaktivität, einem Fragebogen, einem Klicktest und einer Kartensortierungsaktivität beinhaltet.

5. Computerimplementiertes Verfahren nach Anspruch 1, ferner umfassend Anzeigen einer Video-Miniaturansichtserfassung des geeigneten Teilnehmers über den geteilten Bildschirm, während die Aufgabe durchgeführt wird; Einbetten der Video-Miniaturansicht in das Bild des geteilten Bildschirms, um einen einzigen aggregierten Datenstrom zu erzeugen; und Teilen des aggregierten Datenstroms mit dem Moderator.

6. Computerimplementiertes Verfahren nach Anspruch 1, ferner umfassend Platzieren des geeigneten Teilnehmers in einem Warteraum, nachdem das Teilnehmersystem getestet wurde.

7. Computerimplementiertes Verfahren nach Anspruch 1, ferner umfassend das Teilen des Bildschirms mit mindestens einem Beobachter und Protokollanten, wobei dem geeigneten Teilnehmer die Anwesenheit des mindestens einen Beobachters und Protokollanten nicht bewusst ist, und Ermöglichen privater Kommunikation zwischen dem Moderator und mindestens einem Beobachter und Protokollanten.

8. Computerimplementiertes Verfahren nach Anspruch 1, ferner umfassend:
Identifizieren mindestens einer Erkenntnis aus der Aufnahme;
Empfangen einer Vielzahl von nicht moderierten Studienaufzeichnungen:
Analyse der nicht moderierten Studienaufzeichnungen im Hinblick auf die mindestens eine Erkenntnis.

9. Computerprogrammprodukt, umfassend einen Satz von Computerprogrammanweisungen, die, wenn sie durch einen Computer ausgeführt werden, den Computer dazu veranlassen, die folgenden Schritte auszuführen:
Identifizieren von mindestens einem Teilnehmer;
Terminieren des mindestens einen Teilnehmers für einen verfügbaren Studientermin;
Testen des Teilnehmersystems, um eine Eignung zu bestimmen;
wobei das Systemtesten ein Testen eines Mikrofons, eines Lautsprechers, einer Kamera und einer Netzwerkqualität beinhaltet; und die Eignung durch ein funktionierendes Mikrofon, einen funktionierenden Lautsprecher, eine funktionierende Videokamera, eine Vorrichtung, ein Betriebssystem, einen Browser, einen Netzwerkverbindungs-Bitstrom oberhalb eines festgelegten Schwellenwerts und einen Paketverlust unterhalb eines zweiten Schwellenwerts bestimmt wird;
Auswählen eines geeigneten Teilnehmers, um an der Studie teilzunehmen;
Teilen eines Bildschirms des geeigneten Teilnehmers mit einem Moderator;
Präsentieren einer Aufgabe für den geeigneten Teilnehmer zusammen mit Einwürfen von dem Moderator; und
Aufzeichnen des geeigneten Teilnehmers, während die Aufgabe durchgeführt wird.

10. Computerprogrammprodukt nach Anspruch 9, wobei das Terminieren des mindestens einen Teilnehmers Folgendes umfasst Festlegen einer maximalen Anzahl von Sitzungen an einem Tag; Festlegen einer Intervalllänge für die Sitzungen:
Festlegen einer Mindestbuchungsfrist; und
Präsentieren einer Auflistung verfügbarer Termine an den mindestens einen Teilnehmer, die der maximalen Anzahl an Sitzungen, Intervalllänge für die Sitzungen und der Mindestbuchungsfrist entsprechen und die nicht bereits durch einen anderen Teilnehmer gebucht wurden.

11. Computerprogrammprodukt nach Anspruch 9, ferner umfassend den Schritt des Anzeigens einer Video-Miniaturansichtserfassung des geeigneten Teilnehmers über den geteilten Bildschirm, während die Aufgabe durchgeführt wird; den Schritt des Einbettens der Video-Miniaturansicht in das Bild des geteilten Bildschirms, um einen einzigen aggregierten Datenstrom zu erzeugen; und den Schritt des Teilens des aggregierten Datenstroms mit dem Moderator und mindestens einem Beobachter und Protokollanten.

12. Computerprogrammprodukt nach Anspruch 9, wobei das Systemtesten das Testen eines Mikrofons, eines Lautsprechers, einer Kamera und einer Netzwerkqualität beinhaltet.

## Revendications

1. Procédé mis en œuvre par ordinateur pour une étude d'expérience utilisateur modéré comprenant :
l'identification d'au moins un participant ;
la planification de la participation de l'au moins un participant à une période d'étude disponible ;
le test du système de participant pour déterminer l'admissibilité ;
dans lequel le test de système comporte le test d'un microphone, d'un haut-parleur, d'une caméra et d'une qualité de réseau ; et
l'admissibilité est déterminée par un microphone fonctionnel, un haut-parleur fonctionnel, une caméra vidéo fonctionnelle, un dispositif, un système d'exploitation, un navigateur, un flux binaire de connexion réseau supérieur à un seuil défini, et une perte de paquets inférieure à un second seuil ;
la sélection d'un participant admissible pour rejoindre l'étude ;
le partage d'un écran du participant admissible avec un modérateur ;
la présentation d'une tâche au participant admissible avec des interventions du modérateur ;
l'enregistrement du participant admissible au fur et à mesure que la tâche est réalisée.

2. Procédé mis en œuvre par ordinateur selon la revendication 1, dans lequel l'identification de participant comprend :
la présentation de l'étude modérée à un groupe de candidats ;
la sélection d'un sous-groupe des candidats qui manifestent un intérêt pour l'étude modérée pour générer un groupe de personnes qualifiées ;
l'envoi d'une invitation assortie de questions de sélection supplémentaires à au moins l'une des personnes qualifiées ; et la sélection d'au moins un participant parmi les personnes qualifiées invitées.

3. Procédé mis en œuvre par ordinateur selon la revendication 1, dans lequel la planification de l'au moins un participant comprend
la définition d'un nombre maximal de sessions dans une journée ; la définition d'une durée d'intervalle pour les sessions ;
la définition d'un délai de réservation minimal ; et
la définition d'une marge de temps entre les sessions, l'activation d'une capacité d'annuler et de reprogrammer une session ;
la présentation d'une liste de créneaux horaires disponibles à l'au moins un participant qui correspond au nombre maximal de sessions, à la durée d'intervalle pour les sessions, et au délai de réservation minimal, qui n'a pas déjà été réservé par un autre participant.

4. Procédé mis en œuvre par ordinateur selon la revendication 1, dans lequel la tâche comporte au moins l'un d'une activité de navigation, d'un questionnaire, d'un test de clic, et d'une activité de tri de cartes.

5. Procédé mis en œuvre par ordinateur selon la revendication 1, comprenant en outre l'affichage d'une capture vidéo miniature du participant admissible sur l'écran partagé pendant que la tâche est en train d'être réalisée ; l'intégration de la vidéo miniature dans l'image d'écran partagé pour générer un flux de données agrégées unique ; et le partage du flux de données agrégées avec le modérateur.

6. Procédé mis en œuvre par ordinateur selon la revendication 1, comprenant en outre le placement du participant admissible dans une salle d'attente après que le système de participant a été testé.

7. Procédé mis en œuvre par ordinateur selon la revendication 1, comprenant en outre le partage de l'écran avec au moins un observateur et un preneur de notes, dans lequel le participant admissible ignore la présence de l'au moins un observateur et preneur de notes, et l'activation d'une communication privée entre le modérateur et au moins un observateur et un preneur de notes.

8. Procédé mis en œuvre par ordinateur selon la revendication 1, comprenant en outre :
l'identification d'au moins une information pertinente provenant de l'enregistrement ;
la réception d'une pluralité d'enregistrements d'études non modérées :
l'analyse des enregistrements d'études non modérées à la lumière de l'au moins une information pertinente.

9. Produit de programme informatique comprenant un ensemble d'instructions de programme informatique qui, lorsqu'elles sont exécutées par un ordinateur, amènent l'ordinateur à exécuter les étapes suivantes :
l'identification d'au moins un participant ;
la planification de la participation de l'au moins un participant à une période d'étude disponible ;
le test du système de participant pour déterminer l'admissibilité ;
dans lequel le test de système comporte le test d'un microphone, d'un haut-parleur, d'une caméra et d'une qualité de réseau ; et
l'admissibilité est déterminée par un microphone fonctionnel, un haut-parleur fonctionnel, une caméra vidéo fonctionnelle, un dispositif, un système d'exploitation, un navigateur, un flux binaire de connexion réseau supérieur à un seuil défini, et une perte de paquets inférieure à un second seuil ;
la sélection d'un participant admissible pour rejoindre l'étude ;
le partage d'un écran du participant admissible avec un modérateur ;
la présentation d'une tâche au participant admissible avec des interventions du modérateur ; et
l'enregistrement du participant admissible au fur et à mesure que la tâche est réalisée.

10. Produit de programme informatique selon la revendication 9, dans lequel la planification de l'au moins un participant comprend
la définition d'un nombre maximal de sessions dans une journée ;
la définition d'une durée d'intervalle pour les sessions :
la définition d'un délai de réservation minimal ; et
la présentation d'une liste de créneaux horaires disponibles à l'au moins un participant qui correspond au nombre maximal de sessions, à la durée d'intervalle pour les sessions, et au délai de réservation minimal, qui n'a pas déjà été réservé par un autre participant.

11. Produit de programme informatique selon la revendication 9, comprenant en outre l'étape d'affichage d'une capture vidéo miniature du participant admissible sur l'écran partagé pendant que la tâche est en train d'être réalisée ; l'étape d'intégration de la vidéo miniature dans l'image d'écran partagé pour générer un flux de données agrégées unique ; et l'étape de partage du flux de données agrégées avec le modérateur et au moins un observateur et preneur de notes.

12. Produit de programme informatique selon la revendication 9, dans lequel le test de système comporte le test d'un microphone, d'un haut-parleur, d'une caméra et d'une qualité de réseau.
